# EUROPEAN PATENT APPLICATION

(11) **EP 4 465 420 A1**
(43) Date of publication of application: **20.11.2024**
(21) Application number: 24175706.1
(22) Date of filing: 14.05.2024
(51) Int. Cl.: H01M 50/103, H01M 50/15, H01M 50/578

(54) **BATTERY SYSTEMS HAVING PRESSURE SENSORS AND CIRCUITS FOR PREVENTING BATTERY FIRES, AND APPLICATIONS THEREOF**

(30) Priority: 15.05.2023 US 202363502283 P; 29.06.2023 US 202318343864; 19.03.2024 US 202418610015
(71) Applicant: Vltru Systems, LLC, Vestal, NY 13850 (US)
(72) Inventor: BEASTON, Virgil L., Vestal, 13850 (US)
(74) Representative: Palmer, Benjamin Jeffrey

(57) **Abstract**

Sensors and circuits for batteries are provided that prevent battery fires. The sensors and circuits are part of a battery management system that detects battery cell swelling and changes in the internal pressure of battery cells and removes the battery cells from service before they vent and catch on fire or explode. The sensors and circuits continually monitor every battery cell for swelling/increases in internal pressure that are indicative of the formation of flammable and explosive gases within the battery cells, and a battery management system that includes one or more of the sensors and circuits removes battery cells with issues from service before they vent and catch on fire or explode.

## Description

### CROSS-REFERENCE TO RELATED APPLICATIONS

This application is a continuation-in-part of U.S. Patent Application 18/343,864, filed June 6, 2023, which claims the benefit of U.S. Provisional Patent Application 63/436,251, filed December 30, 2022, U.S. Provisional Patent Application 63/495,225, filed April 10, 2023, and U.S. Provisional Patent Application 63/502,283, filed May 15, 2023, each of which is herein incorporated by reference.

### TECHNICAL FIELD

The present disclosure relates to batteries and battery management systems.

### BACKGROUND

Many products use batteries, which present a fire hazard if not properly managed. Conventional battery management systems typically just monitor battery cell voltages and temperatures. They do not monitor or indicate the internal state of the battery cells. Battery cell voltages as well as cell temperatures are *not* in themselves good indicators of changing conditions/pressure inside the cells that can lead to a battery fire.

### SUMMARY of the disclosure

The embodiments featured herein help solve or mitigate the above-mentioned issues as well as additional shortcomings relating to battery cells, battery management systems, and battery energy storage systems.

Under certain circumstances, an embodiment of the disclosure includes a battery module having a sensor that detects swelling of a battery cell. An output signal of the sensor is used to halt operation of a battery rack/system containing the battery module and thereby halt charging and discharging of the battery cell until the battery module containing the battery cell can be replaced and the battery rack/system inspected to verify it is safe to operate.

In some embodiments, high frequency AC power is used as a power source for balancing the battery module cells. Using high frequency AC power permits the use of isolation transformers as a part of the cell balancing circuit.

In some embodiments, battery modules according to the disclosure include a top cover that collects water and directs this water to plates of the battery module to cool the battery.

In some embodiments, battery racks according to the present disclosure include a water fire suppression system having a cascading water flow among the battery modules, which provides cooling in the event of a battery cell fire and thereby controls and prevents the spread of a battery cell fire to neighboring cells and racks.

In some embodiments, battery racks according to the present disclosure include an exhaust duct to remove gases and/or heat and direct these gases and/or heat outside of the room, container, building, etc. that houses the battery rack.

Further features and advantages of the disclosure, as well as the structure and operation of various embodiments, are described in detail below with reference to the accompanying drawings. It is noted that the disclosure is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS

Together with the following detailed descriptions, the accompanying drawings illustrate a number of exemplary embodiments in addition to describing and demonstrating various aspects and/or principles set forth in the present disclosure. The accompanying drawings and the brief descriptions are provided to enable one of ordinary skill in the art to practice the various aspects and/or principles set forth in the present disclosure.
FIG. 1 illustrates an example battery module according to an embodiment of the present disclosure.
FIG. 2 illustrates left, bottom view of the battery module of FIG. 1.
FIG. 3 illustrates an exploded-view of the battery module in FIG. 1.
FIGS. 4A-C illustrate example swelling/pressure sensors according to embodiments of the present disclosure.
FIG. 5 illustrates an example battery module controller according to an embodiment of the present disclosure.
FIG. 6 further illustrates the example battery module controller of FIG. 5.
FIG. 7 illustrates an example battery module controller graphical user interface according to an embodiment of the present disclosure.
FIGS. 8A-B illustrate an example battery rack controller according to an embodiment of the present disclosure.
FIGS. 9A-B illustrate an example battery rack according to an embodiment of the present disclosure.
FIG. 10 illustrates an example battery rack according to an embodiment of the present disclosure.
FIG. 11 illustrates an example battery rack according to an embodiment of the present disclosure.
FIG. 12 further illustrates the battery rack of FIG. 11.
FIGS. 13A-C illustrate example battery racks according to embodiments of the present disclosure.
FIG. 14 illustrates a fire suppression system for a battery rack according to an embodiment of the present disclosure.
FIG. 15 illustrates an example container system for housing battery racks according to the present disclosure that form a battery energy storage system.
FIG. 16 illustrates multiple containers housing battery racks according to the present disclosure that form a battery energy storage system.
FIG. 17 illustrates a building that houses battery racks according to the present disclosure that form a battery energy storage system.
FIG. 18 illustrates a battery module according to an embodiment of the present disclosure.
FIG. 19 illustrates a battery module according to an embodiment of the present disclosure.
FIGS. 20A-B illustrate a battery module according to an embodiment of the present disclosure.
FIG. 21 illustrates an exploded-view a battery module according to an embodiment of the present disclosure.
FIG. 22A illustrates a battery module pressure assembly according to an embodiment of the present disclosure.
FIG. 22B illustrates a battery module pressure assembly according to an embodiment of the present disclosure.
FIG. 23 illustrates an exploded-view a battery module according to an embodiment of the present disclosure.
FIG. 24 illustrates an exploded-view a battery module according to an embodiment of the present disclosure.
FIG. 25A illustrates a battery module according to an embodiment of the present disclosure.
FIG. 25B illustrates an exploded-view of the battery module of FIG. 25A.
FIG. 26 illustrates an exploded-view of an example battery cell according to an embodiment of the present disclosure.
FIG. 27 illustrates an example battery cell pressure sensor according to an embodiment of the present disclosure.
FIGS. 28A-B illustrate an example battery cell pressure sensor according to an embodiment of the present disclosure.
FIG. 29 illustrates a battery module controller according to an embodiment of the present disclosure.
FIG. 30 illustrates an example battery cell pressure monitor according to an embodiment of the present disclosure.
FIG. 31 illustrates a battery system controller according to an embodiment of the present disclosure.
FIG. 32 illustrates a battery cell having an integrated pressure sensor according to an embodiment of the present disclosure.
FIG. 33 illustrates a battery cell cap plate having an integrated pressure sensor according to an embodiment of the present disclosure.
FIG. 34A further illustrates a battery cell cap plate integrated pressure sensor according to an embodiment of the present disclosure.
FIG. 34B further illustrates a battery cell cap plate integrated pressure sensor according to an embodiment of the present disclosure.
FIG. 35A further illustrates a battery cell cap plate integrated pressure sensor according to an embodiment of the present disclosure.
FIG. 35B further illustrates a battery cell cap plate integrated pressure sensor according to an embodiment of the present disclosure.
FIG. 36 illustrates a battery cell pressure monitor circuit according to an embodiment of the present disclosure.
FIG. 37 illustrates various example vehicles that can be powered by battery modules according to the present disclosure.
FIG. 38 illustrates various example vehicles having auxiliary electrical systems that can be powered by battery modules according to the present disclosure.
FIG. 39 illustrates various example equipment that can be powered by battery modules according to the present disclosure.
FIGS. 40A-40C illustrate a battery cell cap plate having an integrated pressure sensor according to an embodiment of the present disclosure.
FIGS. 41A-C illustrate a battery cell cap plate having an integrated pressure sensor according to an embodiment of the present disclosure.
FIG. 42 illustrates a battery cell having an integrated pressure sensor according to an embodiment of the present disclosure.
FIG. 43 illustrates a battery module having battery cells, each of which have an integrated pressure sensor according to an embodiment of the present disclosure.
FIGS. 44A-44D illustrate a battery module having battery cells, each of which has an integrated pressure sensor according to an embodiment of the present disclosure.
FIGS. 45A-45G illustrate a battery pack having battery module having battery cells, each of which has an integrated pressure sensor according to an embodiment of the present disclosure.
FIG. 46 illustrates a fire suppression system for a battery rack having battery packs and battery modules according to an embodiment of the present disclosure.
FIGS. 47A-B illustrate a battery rack having battery packs and battery modules according to an embodiment of the present disclosure.
FIG. 48 illustrates a battery rack having battery packs and battery modules according to an embodiment of the present disclosure.
FIG. 49 illustrates a battery rack having battery packs and battery modules according to an embodiment of the present disclosure.
FIG. 50 illustrates a battery system having battery racks, battery packs, and battery modules according to an embodiment of the present disclosure.
FIG. 51 illustrates a battery system having battery racks, battery packs, and battery modules according to an embodiment of the present disclosure.
FIG. 52 illustrates a prismatic lithium-ion battery cell having an integrated pressure sensor according to an embodiment of the present disclosure.
FIGS. 53-55B illustrate a battery cell cap plate for a prismatic lithium-ion battery cell having an integrated pressure sensor according to an embodiment of the present disclosure.
FIGS. 56A-B illustrate an example pressure sensor for a battery cell according to an embodiment of the present disclosure.
FIG. 57 illustrates an example eight-cell battery module having integrated pressure sensors according to an embodiment of the present disclosure.
FIG. 58 illustrates a residential battery energy storage system (BESS) having battery modules with integrated pressure sensors according to an embodiment of the present disclosure.
FIGS. 59A-B illustrate a residential battery energy storage system (BESS) having battery modules with integrated pressure sensors according to an embodiment of the present disclosure.
FIGS. 60A, 60B, and 61 illustrate a residential battery energy storage system (BESS) having battery modules with integrated pressure sensors according to an embodiment of the present disclosure.
FIG. 62 illustrates a battery energy storage system (BESS) battery rack having battery modules with integrated pressure sensors according to an embodiment of the present disclosure.
FIG. 63 illustrates a battery energy storage system (BESS) battery rack having battery modules with integrated pressure sensors according to an embodiment of the present disclosure in an example battery rack enclosure.
FIG. 64 illustrates a containerized battery energy storage system (BESS) having battery rack with battery modules that include integrated pressure sensors according to an embodiment of the present disclosure.

### DETAILED DESCRIPTION of the disclosure

Embodiments will be described below in more detail with reference to the accompanying drawings. The following detailed descriptions are provided to assist the reader in gaining a comprehensive understanding of the methods, apparatuses, and/or systems described herein as well as modifications thereof. Accordingly, various modifications and equivalents of the methods, apparatuses, and/or systems described herein will be apparent to those of ordinary skill in the art. Descriptions of well-known functions and constructions may be omitted for increased clarity and conciseness.

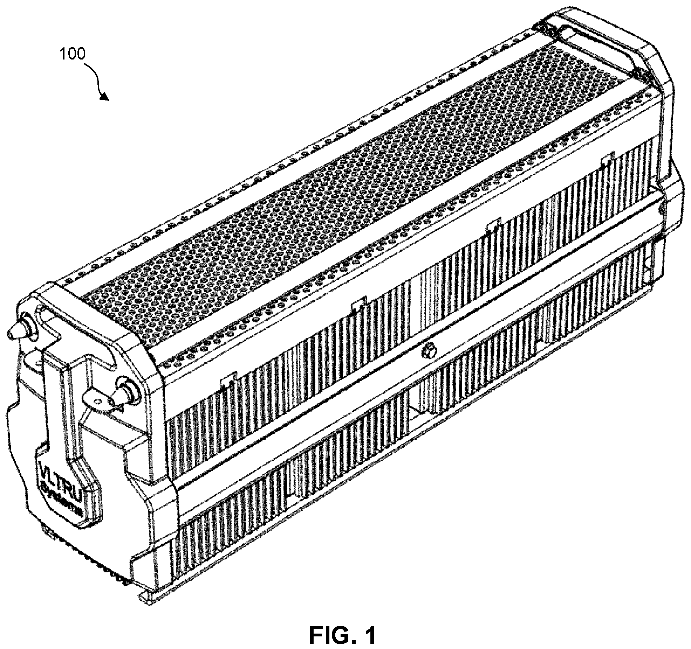

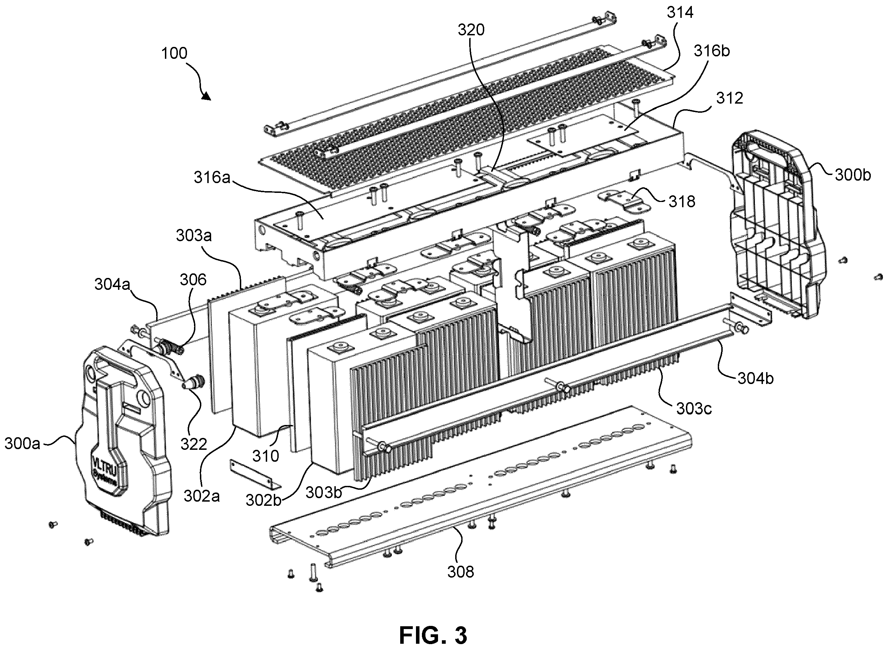

FIG. 1 illustrates an example battery module 100 according to an embodiment of the present disclosure. As shown more clearly in FIG. 3, battery module 100 includes several features that enhance fire safety and can prevent a battery fire.

Over time, a battery cell within a battery module may become defective or damaged and begin to swell. This swelling is a very good indication of a change in the internal pressure of the cell and is a very good indicator that the cell might catch on fire if not replaced. The swelling can be caused, for example, by the formation of flammable and explosive gases inside the cell due to changes in the electrolyte and other active materials inside the battery cell. Cell swelling occurs before a cell vents and/or catches on fire.

As described herein, a new swelling/pressure sensor is designed and installed on battery modules according to embodiments of the present disclosure that can detect and quantify the amount of swelling/pressure in the battery cells. When swelling/pressure beyond normal aging and cycling changes is detected using firmware/software and data from the sensors, an alarm/warning is generated by the firmware/software so that action can be taken whereby the battery cells having the abnormal swelling/pressure can be replaced before the cells vent or can progress to a point where a fire is likely to occur. The alarm/warning can also be used to automatically disconnect, for example, the batteries or battery rack containing the battery cells having the abnormal swelling/pressure so that the battery cells are not further charged or discharged and thus further damaged, which could lead to the venting of the battery cells and/or a battery cell fire.

In one embodiment, as described in more detail below, one swelling/pressure sensor can be used to monitor several battery cells at once by attaching the sensor to plates of a battery assembly or battery module. In another embodiment, the swelling/pressure sensor(s) is/are attached to the battery cell(s) directly. In some embodiments, the swelling/pressure sensor is built into the battery cell itself. As described herein, the detection of abnormal swelling/pressure in a battery cell can be used to shut down the battery system and make it safe until a cell having an issue is replaced and the system is inspected to make sure it is safe to operate again.

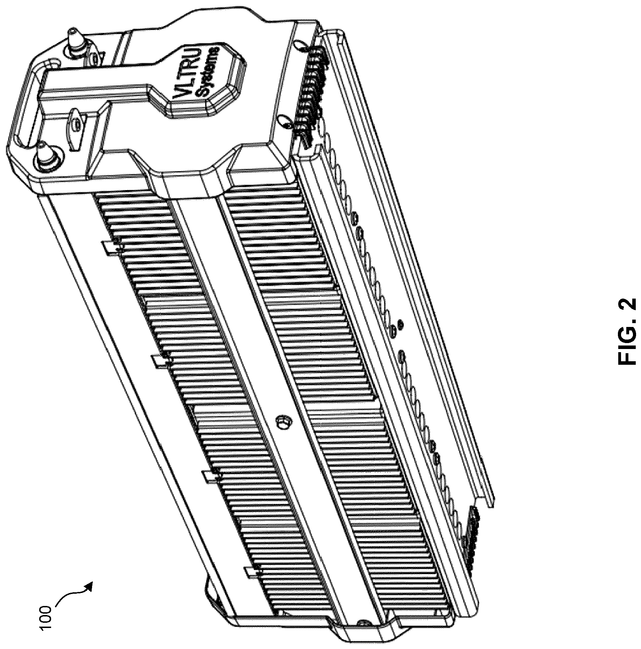

FIG. 2 illustrates another view of battery module 100. FIG. 2 shows the front, one side, and the bottom of battery module 100.

FIG. 3 illustrates an exploded-view of battery module 100. As shown in FIG. 3, battery module 100 has a front cover 300a and a back cover 300b. Battery module 100 includes battery cells 302a and 302b. These battery cells have a predetermined amount of pressure applied to them using side plates 303a-303c, side bars 304a and 304b, and a spring 306. Applying a predetermined amount of pressure to battery cells 302 can increase the cycle life of battery cells 302. By using spring 306 to apply this pressure, the side plates 303 are still free to move due to swelling/expansion of battery cells 302. As described in more detail below, the movement of side plates 303 can be monitored and measured using sensors according to embodiments of the present disclosure.

As shown in FIG. 3, battery module 100 also includes a bottom plate 308, center plates 310, top tray 312, and a cover 314, battery module controller circuit boards 316a and 316b, busbars 318, sensors 320, and connectors 322.

In some embodiments, battery module 100 includes eight battery cells 302. However, fewer or more battery cells may be included in battery module 100, such as two, four, six, ten, twelve, fourteen, sixteen, etc. Battery cells 302 are used for storing electrical energy. The eight battery cells 302 may be connected in series using busbars 318. A predetermined amount of pressure is applied to battery cells 302 using side plates 303, center plates 310, and side bars 304. Side plates 303 and center plates 310 also provide cooling for battery cells 302. Top tray 312 fits on top of battery cells 302 and provides several functions including providing a protective space for sensors 320 and battery module controller circuit boards 316a and 316b. Other functions of top tray 312 are described below. Cover 314 fits on top of top tray 312. Front cover 300a and back cover 300b are used, for example, to lift and carry battery module 100. Front cover 300a includes connectors 322 that allow for several battery modules 100 to be easily wired together to form larger battery systems. Battery module controller circuit boards, described in more detail below, provide battery management functions for battery module 100 such as, for example, monitoring the voltage, temperature, and pressure of battery cells 302.

As shown in FIG. 3, in some embodiments, top tray 312 includes four integrated swelling/pressures sensors 320a-320d. In other embodiments, the sensors 320a-320d are separate pieces from top tray 312. Integrating sensors according to the present disclosure into the top tray can, for example, reduce manufacturing costs, tooling costs, labor costs, etc. As shown and described below, sensors other than those shown in FIG. 3 can be used.

In some embodiments, top tray 312 has holes 330a and 330b that are used to direct water (or other fluid) to the side plates 303 and center plates 310 of battery module 100 according to the present disclosure in order to cool the battery cells 302 in the event of a battery cell fire.

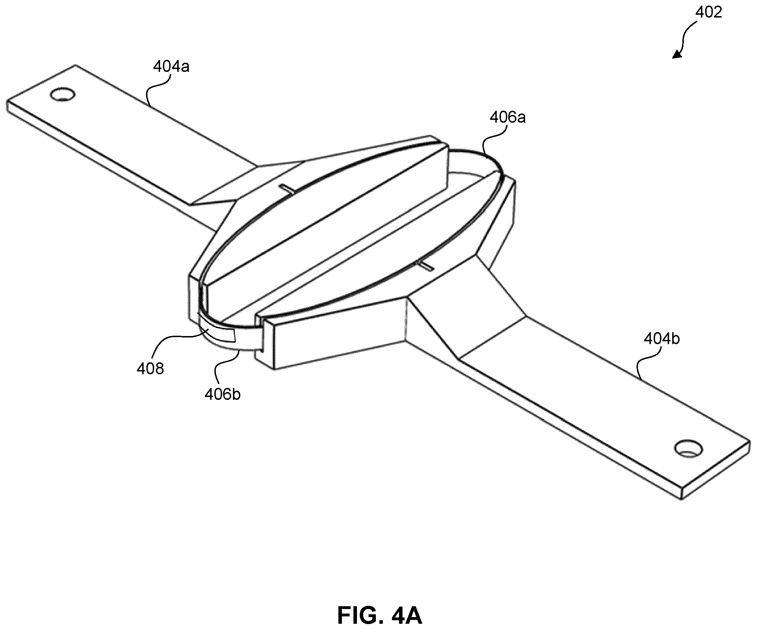

FIG. 4A illustrates a swelling/pressure sensor 402 that may be used with battery modules according to embodiments of the present disclosure. As shown in FIG. 4A, in some embodiments sensor 402 has two plastic parts 404a and 404b, two metal parts 406a and 406b, and at least one strain gauge 408. The at least one strain gauge is attached to the metal parts 406. The strain gauge 808 can be attached using an adhesive or glue. The metal parts 406 are inserted into the plastic parts 404, which hold the metal parts and are used to attach sensor 402 to a battery module. When a force is applied to one or both of the plastic parts 404, e.g., due to the swelling of a battery cell, the metal parts 406 flex and apply a force to the strain gauge(s) 408. This change in sensor 402 is detected by the electrical circuits described herein. While parts 404a-404b and 406a-406b are described as plastic and metal, respectively, other materials may be used. Throughout this disclose, any part or component that is described as a specific material (such as plastic or metal) may be constructed from other materials.

FIG. 4A illustrates a swelling/pressure sensor 402 having the strain gauge(s) 408 attached to an outside radius of the metal parts 406. In other embodiments, the strain gauge(s) 408 attached to an inside radius of the metal parts 406. See, for example, U.S. Patent Application 17/966,500, which is incorporated herein by reference in its entirety.

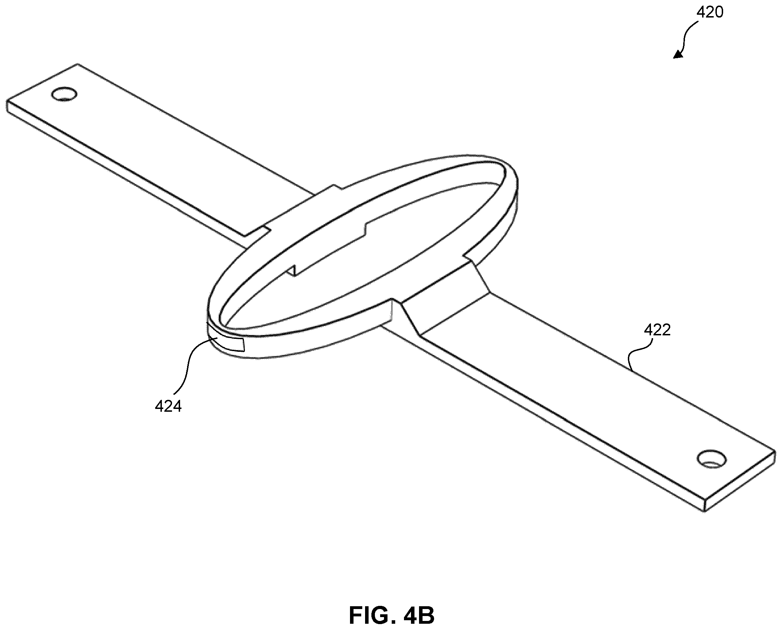

FIG. 4B illustrates a sensor 420 according to an embodiment of the present disclosure. Sensor 420 has a single plastic part 422 and at least one strain gauge 424 attached to an outside radius of the oval-shaped center section of plastic part 422. The strain gauge 424 can be attached using an adhesive or glue. In other embodiments, the strain gauge(s) 424 are attached to an inside radius of plastic part 422.

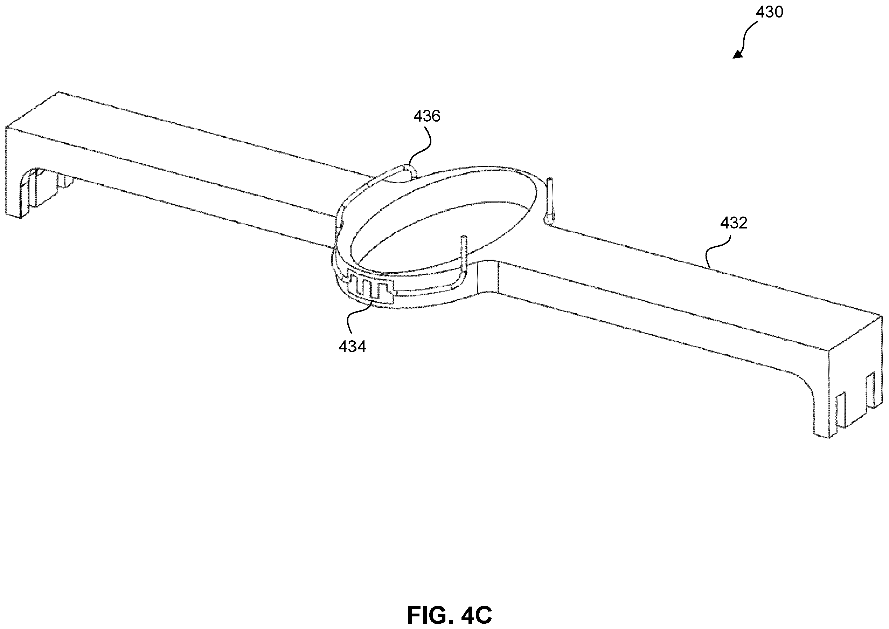

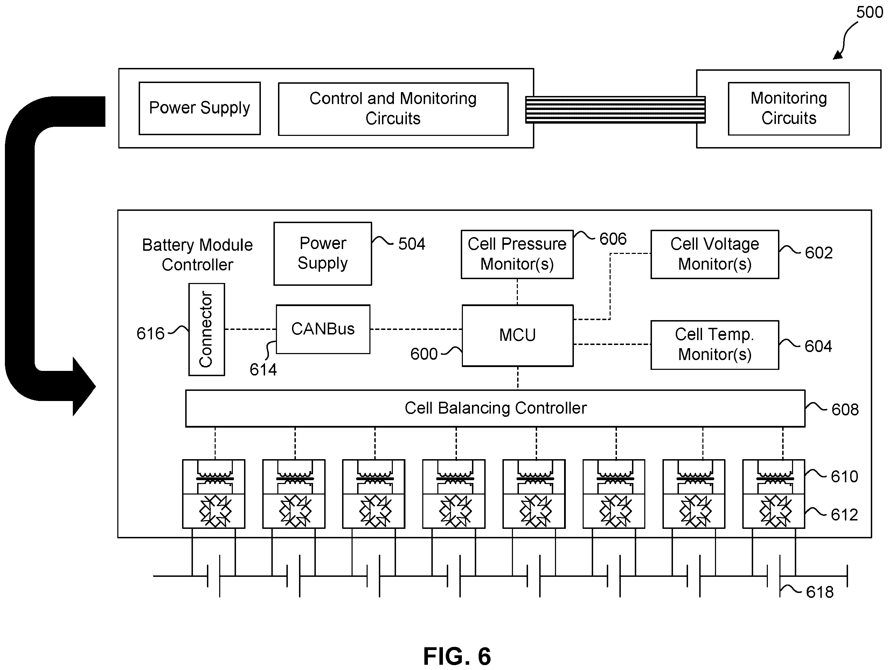

FIG. 4C illustrates a sensor 430 according to an embodiment of the present disclosure. Sensor 430 has a plastic part 432 and two strain gauges 434 attached to a center circular-shaped or oval-shaped section. The two strain gauges are connected together in series by a wire 436. The wire 436 is then connected to a monitoring circuit such as that described below, for example, with regard to FIG. 6 and in U.S. Patent Application 17/966,500.

Sensors other than sensors 402, 420 and 430 may be used according to the present disclosure to monitor the swelling/pressure of battery cells. See U.S. Patent Application 17/966,500 and U.S. Patent Application 17/691,948, which is also incorporated herein by reference in its entirety, for a description of several more sensors that can be used.

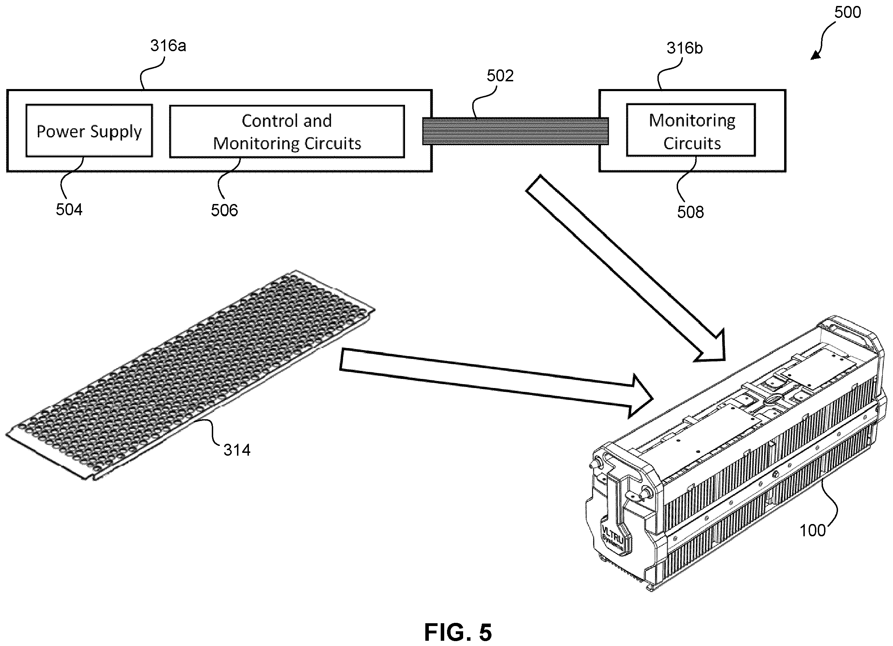

FIG. 5 illustrates an example battery module controller 500 according to an embodiment of the present disclosure. As shown in FIG. 5, battery module controller 500 includes two battery module controller circuit boards 316a and 316b connected together by a ribbon cable 502. In some embodiments, battery module controller circuit board 316a includes a power supply 504 and control and monitoring circuits 506. Battery module controller circuit board 316b includes monitoring circuits 508. Battery module controller circuit boards 316a-316b are shown installed on a battery module 100, with cover 314 removed, according to an embodiment of the present disclosure.

FIG. 6 further illustrates example battery module controller 500. As shown in FIG. 6, in addition to power supply 504, battery module controller 500 includes a microcontroller unit (MCU) 600, cell voltage monitors 602, cell temperature monitors 604, cell pressure monitors 606, a cell balancing controller 608, balancing transformers 610, and balancing rectifiers 612. In some embodiments, MCU 600 communicates with a higher-level controller using a CANBus communications circuit 614. The CANBus communications circuit is connected to the higher-level controller using a connector 616. In some embodiments, the higher-level controller is a battery rack controller as described herein.

In operation, power supply 504 draws power from a power grid and converts this power to higher frequency AC power and DC voltages needed to operate the components of battery module controller 500. The higher frequency AC power output by power supply 504 is supplied to the cell balancing transformers 610 and balancing rectifiers 612 for balancing cells 618. Power supply 504 produces DC power required to operate the various components of battery module controller 500 such as, for example, MCU 600, cell voltage monitors 602, cell temperature monitors 604, cell pressure monitors 606, and cell balancing controller 608. MCU 600 runs the firmware and software that controls the operation and functions of battery module controller 500. These functions include monitoring the voltage, temperature and pressure of the battery cells that make up the battery module controlled by battery module controller 500. The functions also include balancing the battery cells of the battery module and communicating data about the battery module and battery cells to a higher-level controller such as, for example, a battery rack controller as described below. Cell voltage monitor(s) 602, cell temperature monitor(s) 604, and cell pressure monitor(s) 606 are the hardware sensors and circuits needed to monitor the battery cell voltages, temperatures, and pressures. Cell balancing controller 608 is the hardware needed to provide balancing current/power to the individual battery cells 618 of the battery module controlled by battery module controller 500. More details regarding these functions and the associated hardware are provided below.

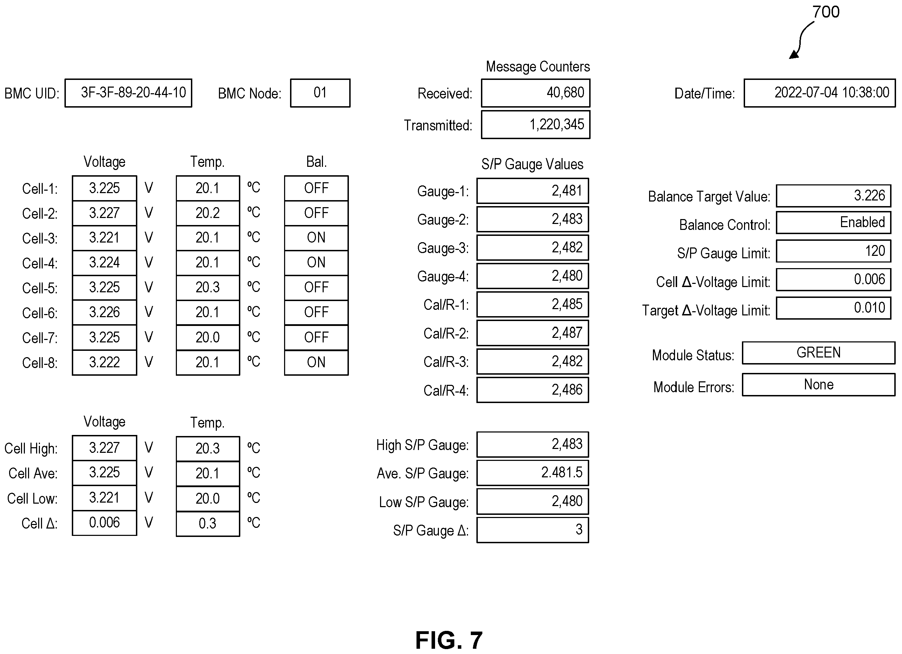

FIG. 7 illustrates an example battery module controller graphical user interface (GUI) 700 according to an embodiment of the present disclosure. The values displayed on GUI 700 illustrate the firmware and/or software running on battery module controllers described herein, such as for example, battery module controller 500.

Starting in the top left corner of GUI 700, the GUI displays a unique ID (BMC UID) for the battery module controller and a Node ID. In some embodiments, the unique ID is the serial number of the processor of the battery module controller. The Node ID is an assigned ID used to identify the battery module controller CANBus messages sent to a higher-level battery rack or battery system controller.

Below the identification fields in GUI 700 are the fields displaying the battery cell voltages, battery cell temperatures, and the battery cell balancing states. In some embodiments, the cell voltages are displayed in millivolts. The cell temperatures are displayed in tenths of a degree Celsius. The balancing state is either on, meaning the cell is currently balancing, or off, meaning the cell is not currently balancing. Below these fields are the cell high, average, and low voltage and temperatures fields. In order to reduce the number of messages normally sent by the battery module controller to the higher-level controller, in some embodiments the battery module controller sends these calculated values rather than the measured values. These calculated values are sufficient to safely monitor and manage the battery cells. Also shown are fields for the highest cell voltage and temperature; the average cell voltage and temperature; the lowest cell voltage and temperature; and the difference between the highest cell voltage and cell temperature and the lowest cell voltage and cell temperature, respectively.

At the top middle section of GUI 700, two fields display the number of messages received by the battery module controller and the number of messages sent by the battery module controller. These displayed message counts show that the battery module controller is active and communicating.

Below the message count fields are the swelling/pressure (S/P) gauge values and the gauge calibration values. The S/P gauge values are used to determine whether any of the battery cells have an issue and thus indicate that the battery module should be disconnected from the battery system DC bus to prevent a battery fire. A battery cell will swell, for example, due to the liquid electrolyte in the battery cell decomposing into explosive and hazardous gases before it vents and catches on fire. Thus, in some embodiments of the present disclosure, the battery management system continuously monitors every battery module for swelling and/or the presence of increased pressure in one or more cells of a battery module, and when this is detected, the battery module is disconnected from the battery system so that it can no longer be charged and/or discharged in order to prevent further damage to a battery cell and to prevent a battery fire.

In some embodiments of the present disclosure, one or more calibration resistors are measured and used to calibrate the S/P gauge values obtained by the battery module controller. These calibration measurements ensure the accuracy of the S/P gauge values used to monitor for battery cell swelling or the presence of increased pressure in one or more cells of a battery module. The last field in the middle section of GUI 700 shows the highest S/P gauge reading; the average S/P gauge reading; the lowest S/P gauge reading; and the difference between the highest S/P gauge reading and the lowest S/P gauge reading.

On the top right side of GUI 700, the date and time of the last data received from the battery module controller is displayed. This date and time will continually update and is an indication of how old the data is that is displayed on the GUI.

Below the date and time values are several fields displaying control values and status values. The control values include a balance target value, a balance control value, an S/P gauge limit value, a cell voltage difference limit value, a target cell voltage difference limit value, and a cell temperature difference limit value. The balance target value is the value that the battery module controller uses to control battery cell balancing. The balance control value indicates whether battery cell balancing is enabled or disabled. The three limit values (i.e., S/P gauge limit, cell A-voltage limit, and cell A-temperature limit) are used to determine whether the battery module is operating in a safe and desired condition. The module status value gives a quick indication of the overall operating status of the battery module (such as "GREEN" to indicate the battery module is operating properly, "YELLOW" to indicate the batter module has a minor operating issue, and "RED" to indicate the battery module has a major operating issue), and the module error field will display an error code to indicate whether there are any current issues with the battery module.

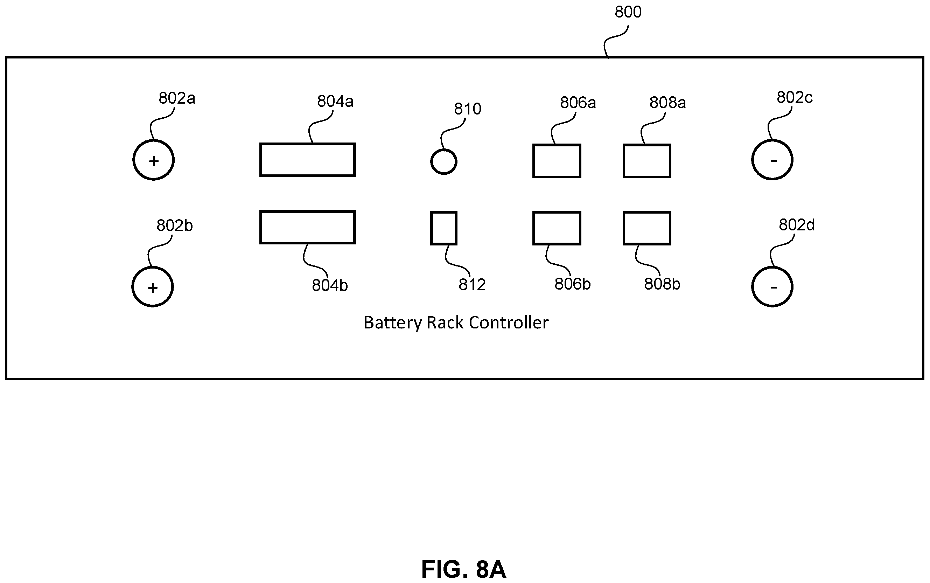

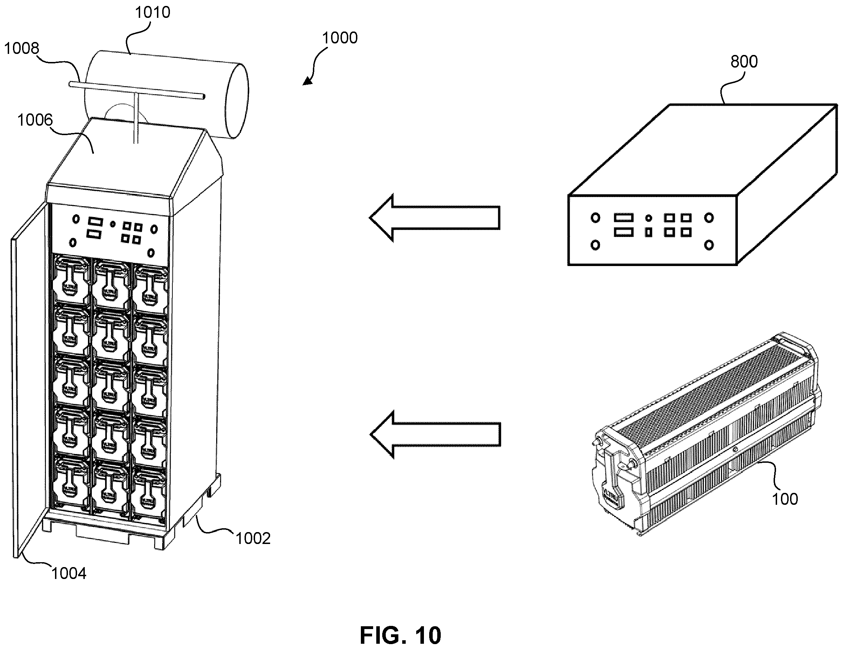

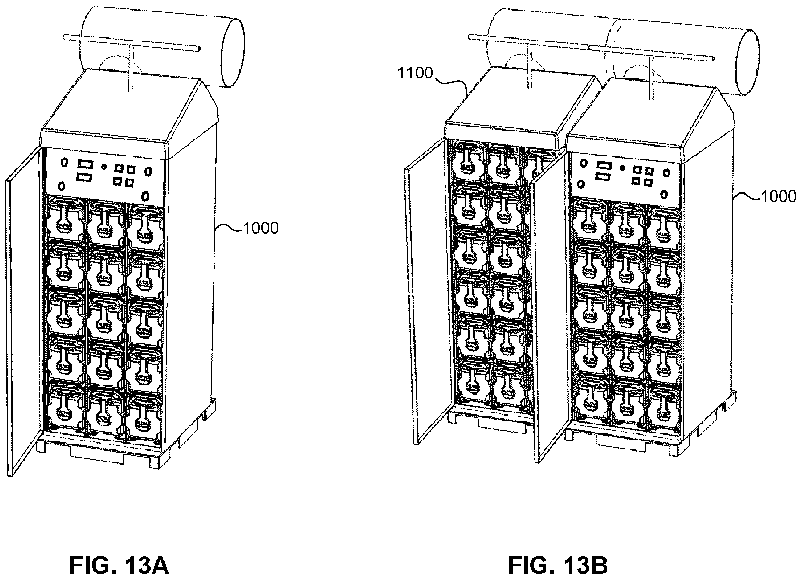

FIGS. 8A-B illustrate an example battery rack controller 800 according to an embodiment of the present disclosure. As shown in FIG. 8A, battery rack controller 800 includes four DC power connectors 802a-802d, two AC power connectors 804a-804b, two system level communications connectors 806a-806b, two battery module communications connectors 808a-808b, a status indicator 810, and a power switch 812. Battery rack controller 800 can control a plurality of battery modules, for example, battery modules 100, as shown in FIG. 10 and FIGS. 13A-C and described below.

The DC power connectors 802a-802d are used to connect the battery modules of the battery rack to a DC bus of a battery energy storage system. In some embodiments, DC power connectors 802a and 802c connect battery rack controller 800 to the energy storage system DC bus. Power connectors 802b and 802d connect battery rack controller 800 to the battery modules that make up the battery rack. AC grid power is provided to battery rack controller 800 using AC power connector 804a. This power is then provided to the battery modules using AC power connector 804b.

System level communications connectors 806a-806b are used to communicate to a higher-level energy storage system controller. In some embodiments, these communications are conducted using TCP/IP communications. Battery module communications connectors 808a-808b are used to communicate with the battery modules of the battery rack. In some embodiments, these communications are conducted using CANBus communications. In one embodiment, CANopen communications are used.

In some embodiments of battery rack controller 800, when powered-on, status indicator 810 shows the status of the battery rack, for example, by a green light indicating everything is operating correctly, or by a yellow or a red light indicating that the battery rack has a minor or a major operating issue. Power switch 812 is used to turn-on and turn-off power to battery rack controller 800.

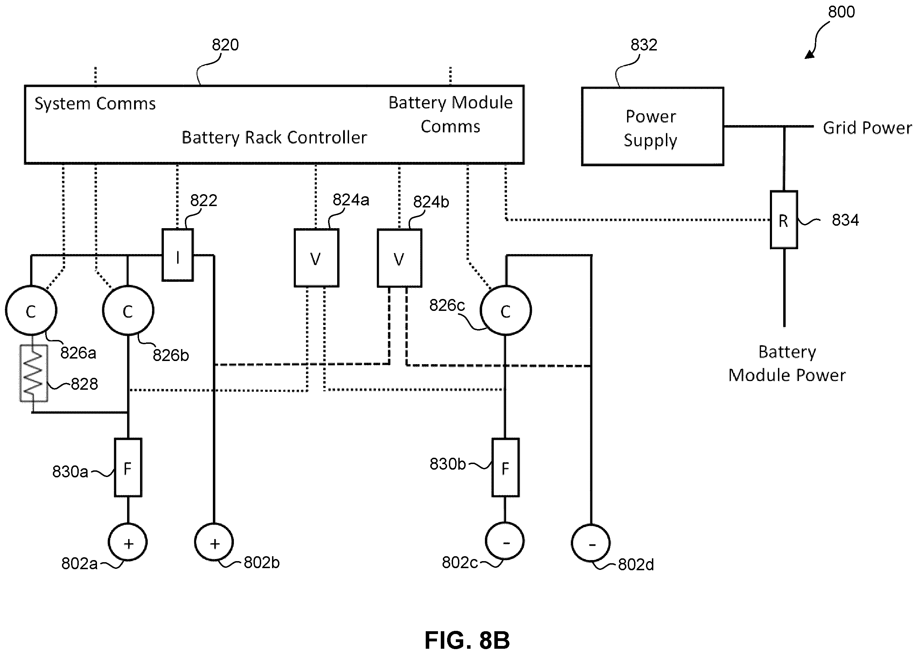

FIG. 8B further illustrates battery rack controller 800 according to an embodiment of the present disclosure. As shown in FIG. 8B, battery rack controller 800 includes a battery rack controller circuit board 820, a current meter 822, two voltage meters 824a-824b, three contactors 826a-826c, a power resistor 828, and two fuses 830a-830b. Battery rack controller circuit board 820 includes a microcontroller unit that runs firmware and/or software that implements the functions of battery rack controller 800. These functions include measuring the battery rack current, battery rack voltage, and communication data with the battery module controllers and the battery energy storage system controller. In operation, battery rack controller circuit board 820 opens and closes contactors 826 to connect the battery modules to the battery system DC bus. Contactor 826a and power resistor 828 are used for pre-charging and matching the voltage of the battery rack to the DC system bus before contactor 826b is closed. If during operation an abnormal current or abnormal voltage is detected by current meter 822 or one of the two voltage meters 824a-824b, then battery rack controller circuit board 820 opens the contactors 826 to isolate the battery rack from the DC system bus until the abnormal condition is corrected. Fuses 830a-830b are included in case of a short circuit or other overcurrent issue. In some embodiments, fuses 830 are very fast acting fuses.

As shown in FIG. 8B, battery rack controller 800 includes a power supply 832 to power the components of battery rack controller 820. The power for this power supply is grid power. A relay 834, controller by battery rack controller circuit board 820 controls the supply of the grid power to the battery modules of the battery rack. In some embodiments, the opening and closing of relay 834 can be used if needed to reset the battery module controllers of the battery modules that make up the battery rack.

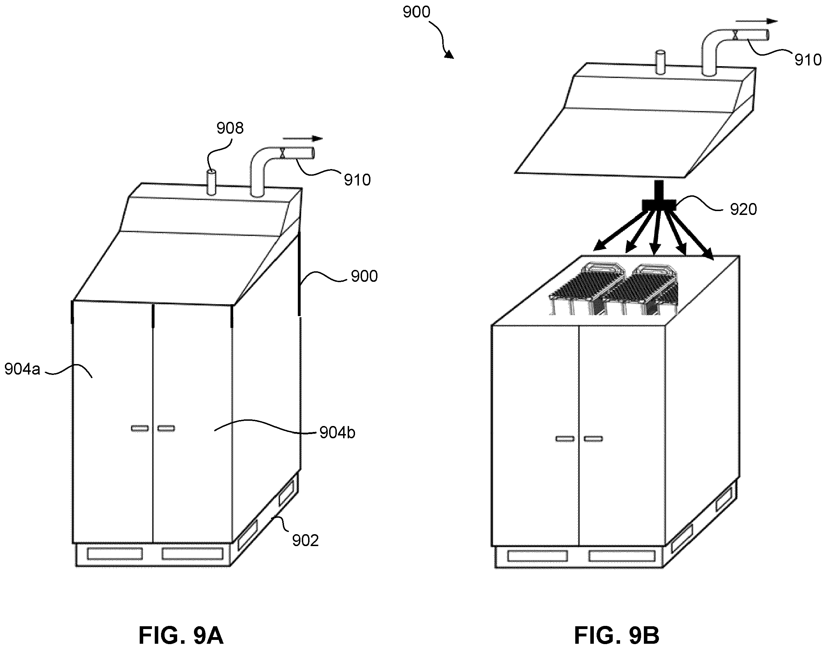

FIGS. 9A-B illustrate an example battery rack 900 according to an embodiment of the present disclosure. As shown in FIG. 9A, battery rack 900 includes a base 902, doors 904a-904b, a hood 906, a water suppression system 908, and exhaust ducting 910. Base 902 can be used to move and position battery rack 900, for example, using a forklift truck. The doors 904a-904b allow people to access the battery modules and battery module controller housed inside the battery rack enclosure. Hood 906 provides space at the top of the battery rack for the fire suppression system sprinkler head(s). Exhaust ducting 910 is used to draw air through the battery rack and cool the battery modules. It also is used to direct heat and any gases, for example, in the event that a battery cell vents, outside of the container or room in which the battery rack is located. In some embodiments, fan(s) for moving air through the battery rack are located in the exhaust ducting 910, which makes replacing a fan easy and which is a better design than including many small fans inside the enclosure as a part, for example, of the battery modules.

As shown in FIG. 9B, one or more sprinkler heads 920 are located inside battery rack 900. In the event of a fire, the sprinkler heads activate and spray water directly inside battery rack 900. This water is collected by the top tray of the battery modules, and the water is then directed to flow down through the center plates of the battery modules and over the side plates of the battery module to extinguish the fire and cool surrounding battery modules, so the fire does not spread to other modules and so the module having the issue does not catch on fire a second time. If a battery were to vent and possibly catch on fire, the heat and gases would be removed from the battery rack via exhaust ducting 910.

FIG. 10 illustrates an example battery rack 1000 according to an embodiment of the present disclosure. As shown in FIG. 10, battery rack 1000 includes a base 1002, a door 1004, a hood 1006, a water suppression system 1008, and exhaust ducting 1010. Base 1002 can be used to move and position battery rack 1000, for example, using a forklift truck. The door 1004 allows people to access the battery modules 100 and battery module controller 800 housed inside the battery rack enclosure. Hood 1006 provides space at the top of the battery rack for the fire suppression system sprinkler head(s). Exhaust ducting 1010 is used to draw air through the battery rack and cool the battery modules. It also is used to direct heat and any gases, for example, in the event that a battery cell vents, outside of the container or room in which the battery rack is located. In some embodiments, the fan(s) for moving air through the battery rack are located in the exhaust ducting 1010, which makes replacing a fan easy and which is a better design than including many small fans inside the enclosure as a part, for example, of the battery modules 100.

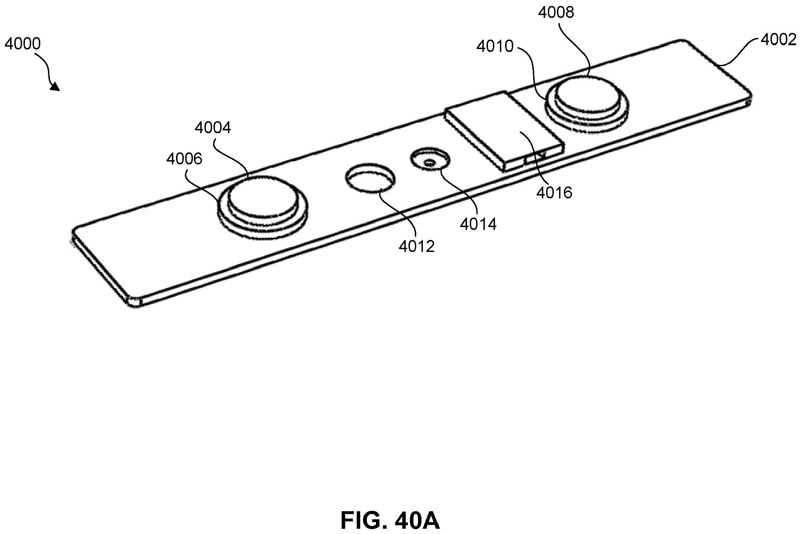

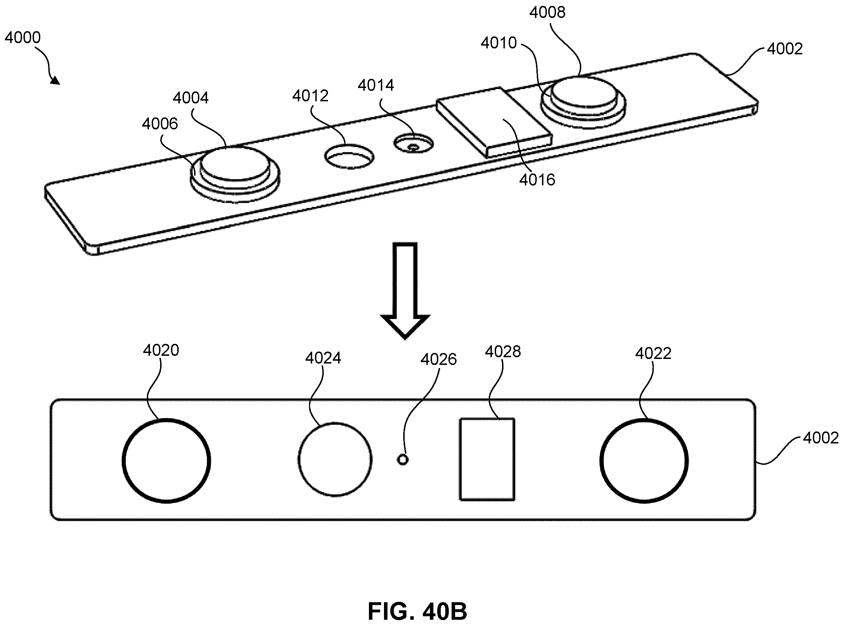

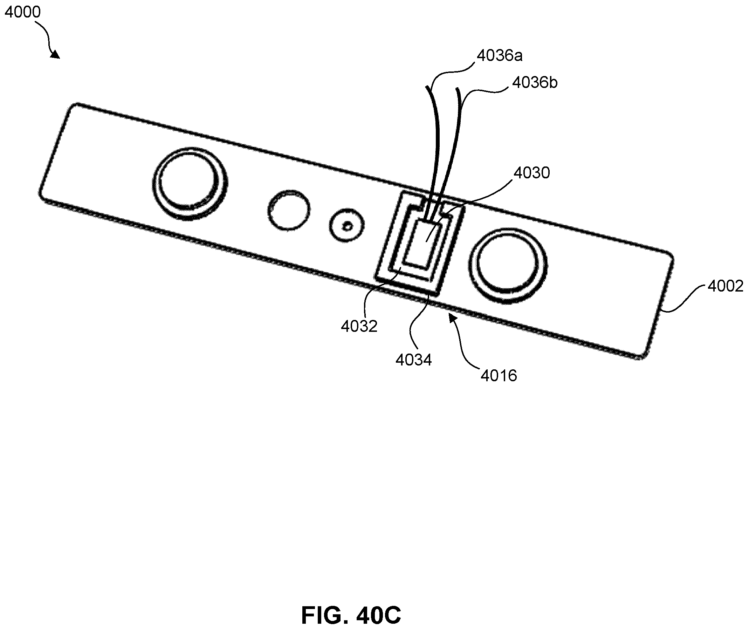

In some embodiments of the present disclosure, battery module 100 includes battery cells that have integrated pressure/swelling sensors as described below, for example, with regard to FIGS. 40-42. In these embodiments, battery module 100 does not require sensors that detect movement of a plate in contact with the battery cells as would be understood by persons skilled in the relevant arts given the description provided herein.

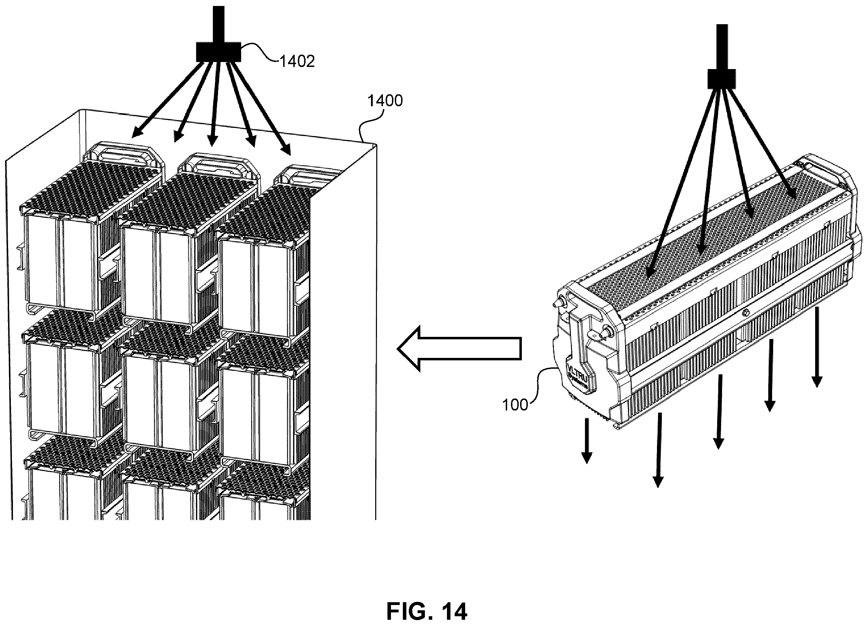

Battery rack 1000, as well as other battery racks described herein, allows water (or other fluid) from a commercial fire sprinkler system (for example, see FIG. 14), provided by one or more sprinkler heads located inside the top of the battery rack, to flow down like a cascading waterfall over the battery modules 100 to provide cooling and fire suppression. Water flows down on the tops of the battery module, where it is collected/gathered by a plastic top having a berm located on the top of the battery modules. This water flows down through the middle plate and over the side plates or heat sinks of each of the battery modules or battery cell assemblies and cools the battery cells. As the water exits the middle plate, it is collected/gathered by the battery module below and can then flow through this battery module's middle plate and over the side plates as described herein.

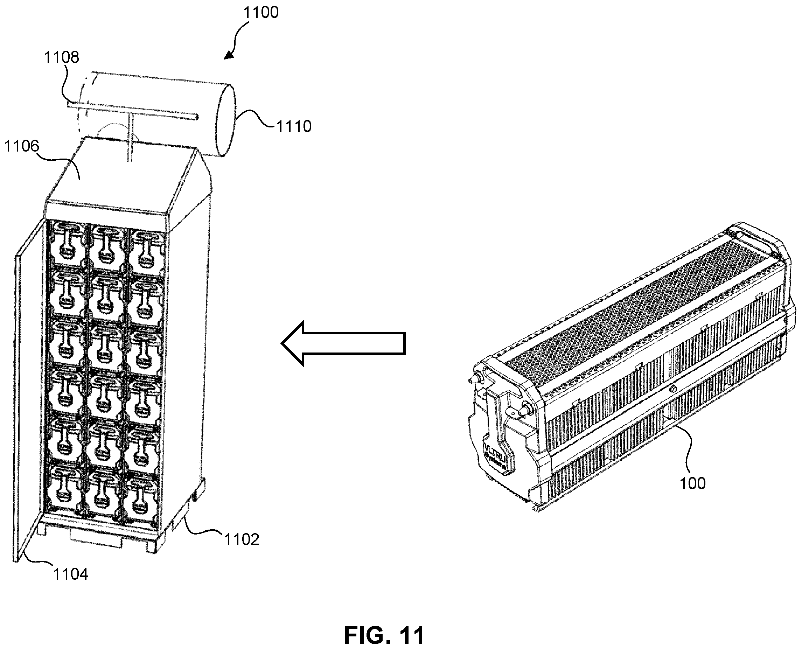

FIG. 11 illustrates an example battery rack 1100 according to an embodiment of the present disclosure. As shown in FIG. 11, battery rack 1100 includes a base 1102, a door 1104, a hood 1106, a water suppression system 1108, and exhaust ducting 1110. Base 1102 can be used to move and position battery rack 1100, for example, using a forklift truck. The door 1104 allows people to access the battery modules 100 housed inside the battery rack enclosure. Hood 1106 provides space at the top of the battery rack for the fire suppression system sprinkler head(s). Exhaust ducting 1110 is used to draw air through the battery rack and cool the battery modules. It also is used to direct heat and any gases, for example, in the event that a battery cell vents, outside of the container or room in which the battery rack is located. In some embodiments, fan(s) for moving air through the battery rack are located in the exhaust ducting 1110.

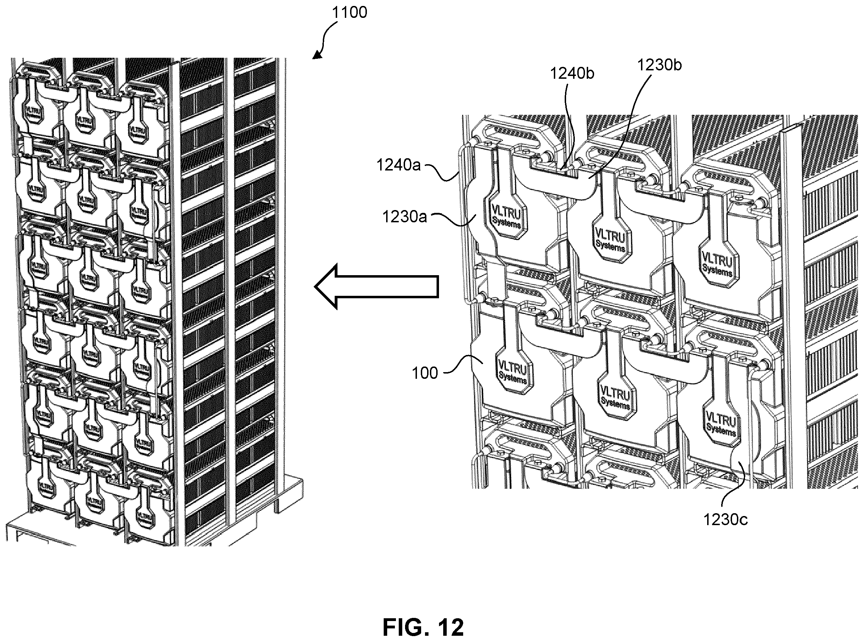

FIG. 12 is a more detailed drawing of battery rack 1100. In FIG. 12, one can more clearly see the battery modules 100, and the busbars 1230a-1230c and cables 1240a-1240b used to connect the battery modules 100 together to form the battery rack.

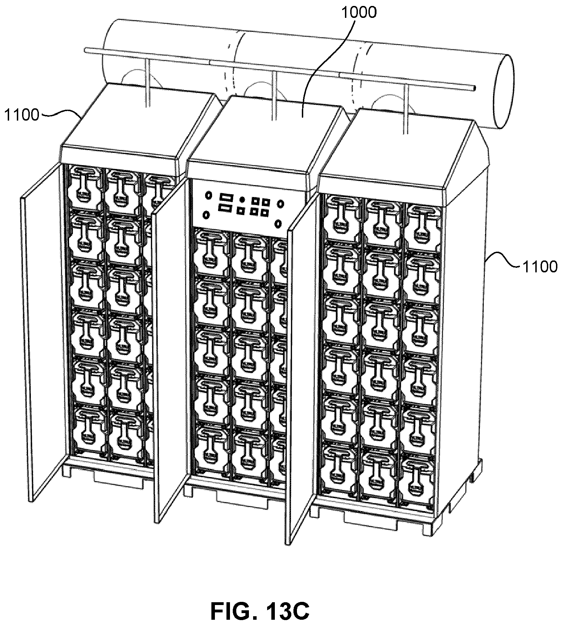

FIGS. 13A-C illustrate example battery rack products or units according to embodiments of the present disclosure. FIG. 13A shows a battery rack 1000 that can be used as a part of a battery energy storage system. In some embodiments, this battery rack includes 15 battery modules 100 according to the present disclosure and forms a nominal 440V battery energy storage system. FIG. 13B shows a battery rack product that comprises one battery rack 1000 and one battery rack 1100 that can be used as a part of a battery energy storage system. In some embodiments, this battery rack product includes 33 battery modules 100 according to the present disclosure and forms a nominal 1000V battery energy storage system. FIG. 13C shows a battery rack product that comprises one battery rack 1000 and two battery racks 1100a-1100b that can be used as a part of a battery energy storage system. In some embodiments, this battery rack product includes 51 battery modules 100 according to the present disclosure and forms a nominal 1500V battery energy storage system. In practice, the battery energy storage system can be very large and be formed from operating many of these battery rack products together in parallel.

FIG. 14 further illustrates an example fire suppression system for a battery rack according to an embodiment of the present disclosure. As shown in FIG. 14, a battery rack 1400 has a water fire suppression system with a sprinkler head 1402 that allows water from a commercial fire sprinkler system to flow down like a cascading waterfall over the battery modules 100 inside the battery rack enclosure to provide cooling and fire suppression. Water flows down on the tops of the battery modules 100, where it is collected/gathered by a plastic top having a berm located on the top of the battery modules. This water flows down through the middle plate and over the side plates or heat sinks of each of the battery modules or battery cell assemblies and cools the battery cells. As the water exits the middle plate, it is collected/gathered by another battery module 100 below and can then flow through this battery module's middle plate and over the side plates as described herein.

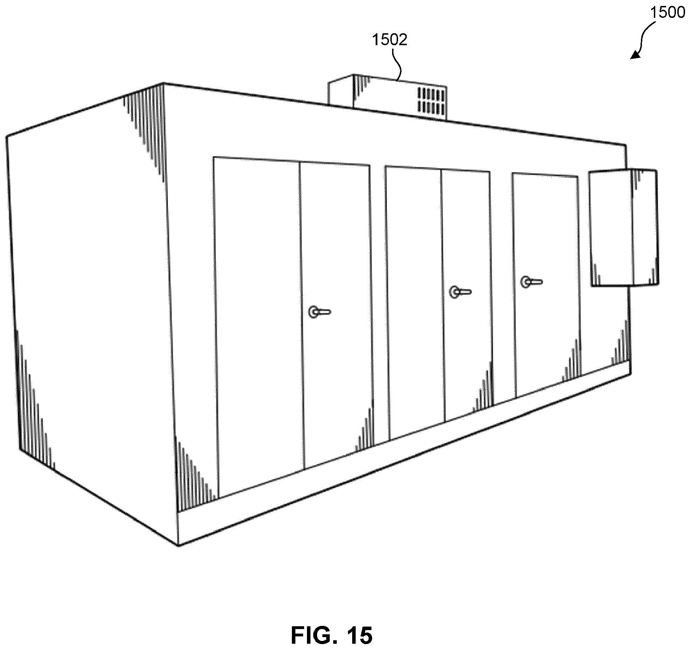

FIG. 15 illustrates an example container system 1500 for housing battery racks according to the present disclosure that form a battery energy storage system. The container system houses multiple battery racks and protects the battery racks from the environment. In some embodiments, container system 1500 includes an HVAC unit 1502.

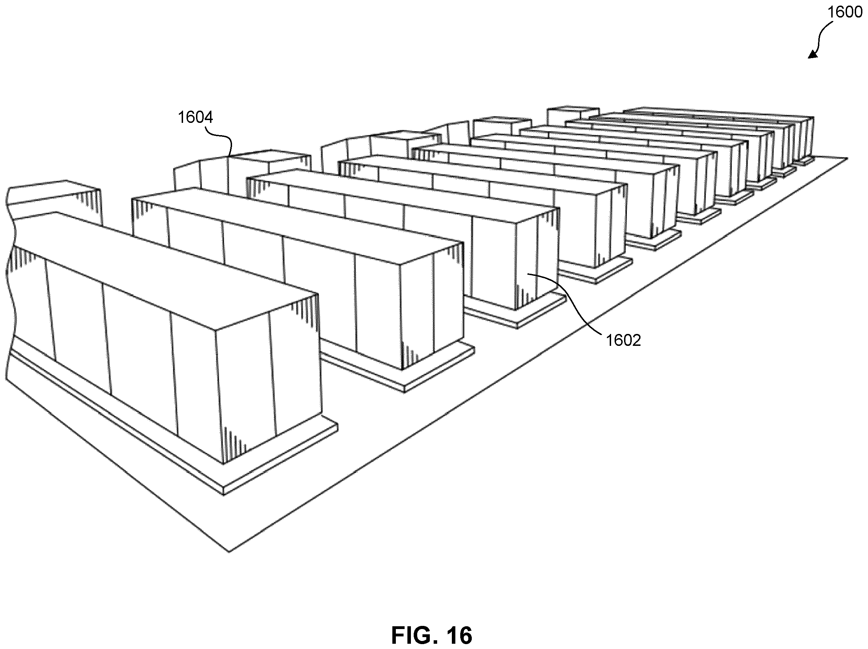

FIG. 16 illustrates multiple containers 1602 housing battery racks according to the present disclosure that form a battery energy storage system 1600. In addition to the containers 1602, the battery energy storage system 1600 also includes multiple bi-direction power converters 1604 for charging and discharging the battery racks housed in containers 1602.

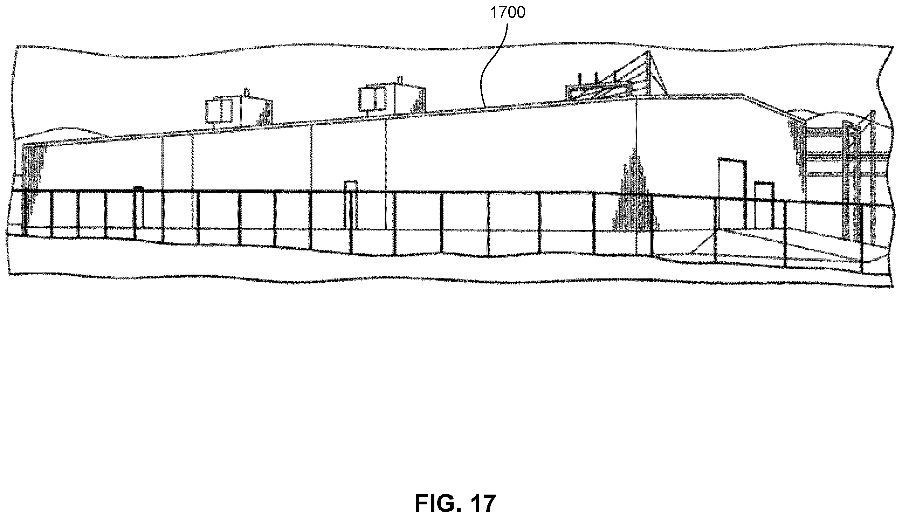

FIG. 17 illustrates a building 1700 that houses many battery racks according to the present disclosure that form a battery energy storage system.

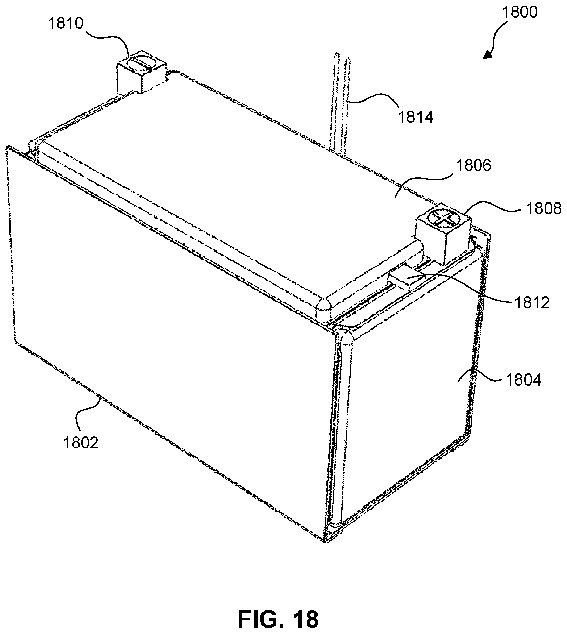

FIG. 18 illustrates a battery module 1800 according to an embodiment of the present disclosure. As shown in FIG. 18, battery module 1800 includes a metal battery housing 1802, a plastic side cover 1804, and a plastic top cover 1806. Battery module 1800 has two battery terminals 1808 and 1810, and a connector 1812 that allows for connection to conductors coupled to the battery cells of battery module 1800. Also show are electrical leads 1814 for an optional heating element for battery module 1800. In some embodiments, battery module 1800 has four battery cells. Other embodiments may have more or less than four battery cells.

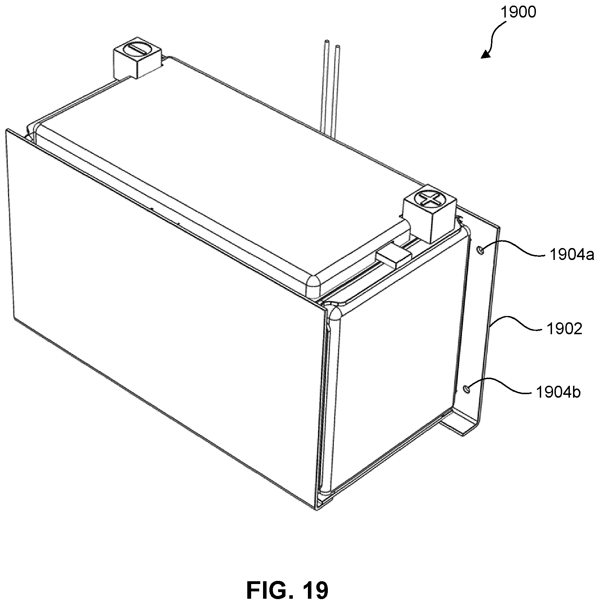

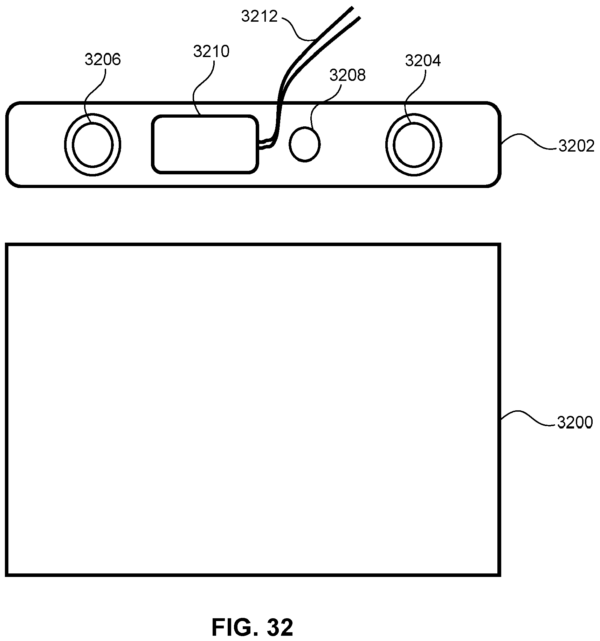

FIG. 19 illustrates a battery module 1900 according to an embodiment of the present disclosure. Battery module 1900 includes a side plate 1902 that has mounting holes 1904a and 1904b. These mounting holes can be used to secure battery module 1900, for example, when it is used as a part of a larger battery pack or battery system in the applications described below with reference to FIGS. 32-34.

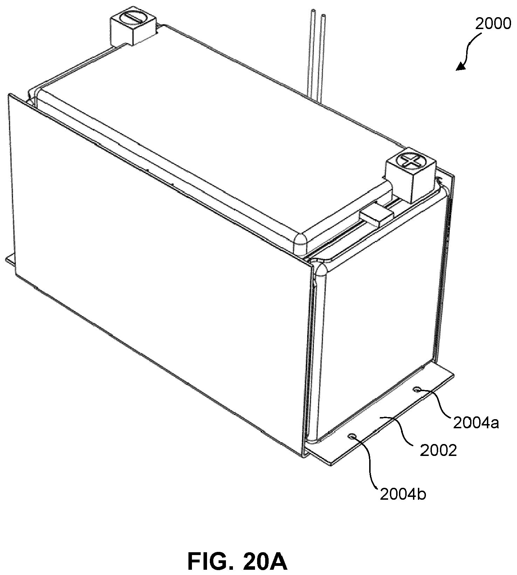

FIG. 20A illustrates a battery module 2000 according to an embodiment of the present disclosure. Battery module 2000 includes a bottom plate 2002 that has mounting holes 2004a and 2004b. These mounting holes can be used to secure battery module 2000, for example, when it is used as a part of a larger battery pack or battery system in the applications described below with reference to FIGS. 32-34.

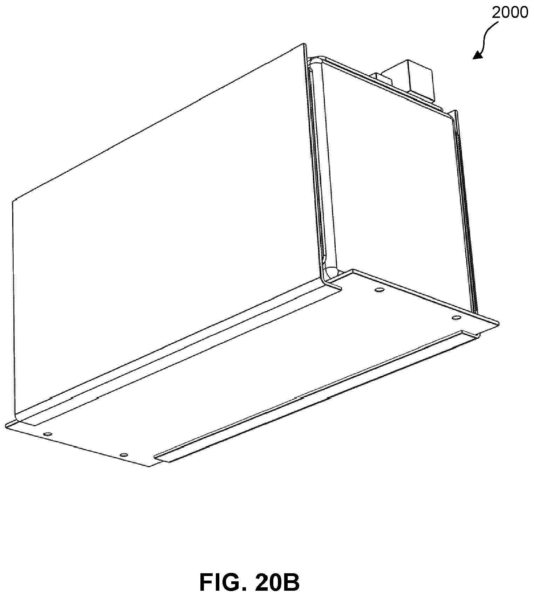

FIG. 20B illustrates a side and bottom view of battery module 2000 according to an embodiment of the present disclosure.

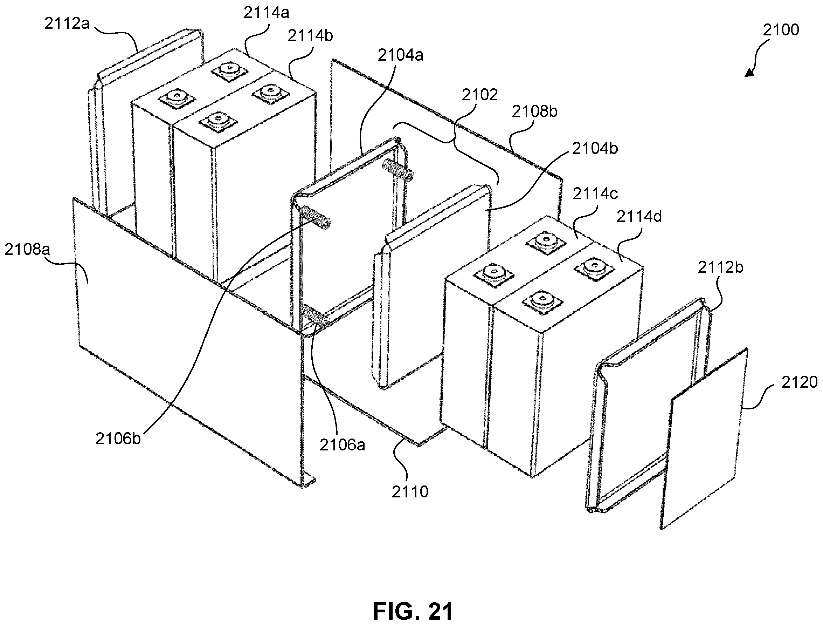

FIG. 21 illustrates a battery module 2100 according to an embodiment of the present disclosure. As shown in FIG. 21, battery module 2100 includes side plates 2108a and 2108b, a bottom plate 2110, and end plates 2112a and 2112b. Battery module 2100 also includes four battery cells 2114a-2114d. A pressure assembly 2102 is located between battery cells 2114b and 2114c. Pressure assembly 2102 includes two pressure plates 2104a and 2104b, and four springs 2106.

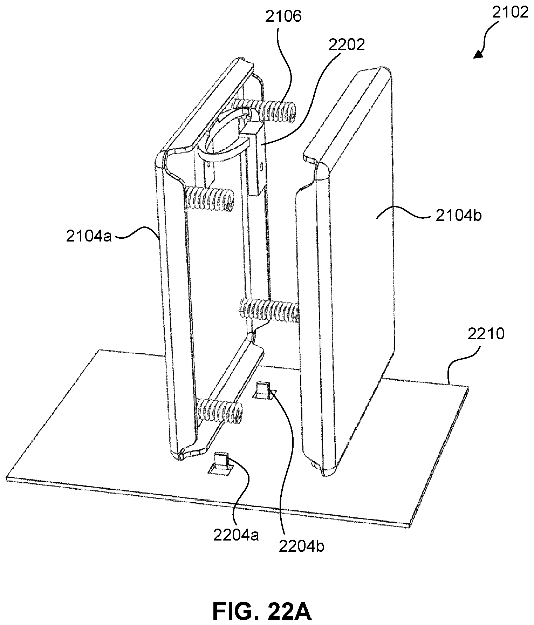

In some embodiments, when one or more battery cells 2114a-2114d swell, or their internal pressure increases, a pressure is applied to pressure assembly 2102, which is then detected by one or more swelling/pressure sensors 2202 (see, for example, FIG. 22A). Different embodiments of pressure assembly 2102 are described below, which can be used with battery module 2100 as well as other battery modules described herein according to the present disclosure.

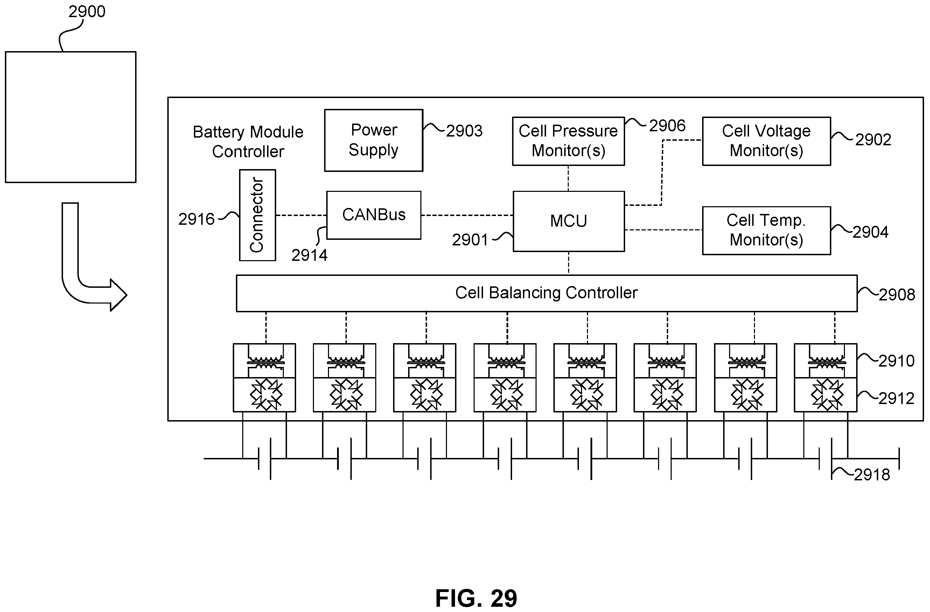

Battery module 2100 includes a battery module controller 2120. Battery module controller 2120 is described in more detail herein, for example, with reference to FIG. 29.

As shown in FIG. 22A, in some embodiments of the present disclosure, a pressure assembly such as pressure assembly 2102 of battery module 2100 has a plate inhibitor that inhibits movement of the bottom of a plate while the top of the plate can still move, thereby causing a tilting of the plate and thus amplifying the movement of the top of the plate for a given amount of battery swelling. In some embodiments, the plate inhibitor comprises two or more tabs 2204a and 2204b as shown in FIG. 22A. The tabs 2204a-2204b can be formed by cutting, for example, the bottom plate 2210 of battery module 2100 and bending up metal to form the tabs 2204a-2204b as shown. In some embodiments, the plate inhibitor has four tabs. In some embodiments, a second pressure sensor 2202 is installed and used in place of the plate inhibitor. The two pressure sensors can be connected either in series or in parallel to produce either one output signal or two output signals.

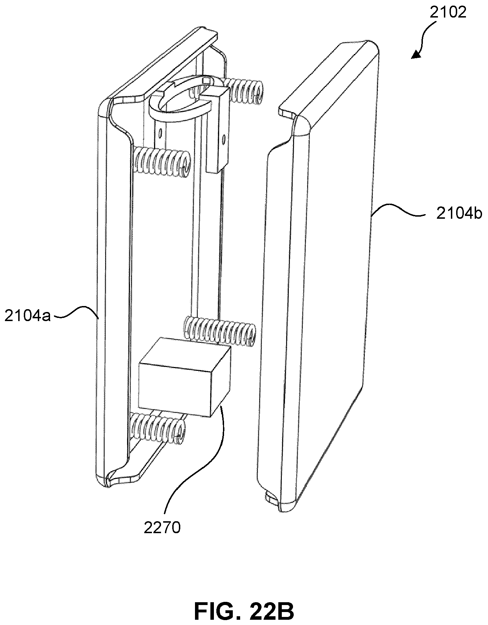

FIG. 22B illustrates another plate inhibitor 2270 for a pressure assembly such as pressure assembly 2102. In one embodiment, the plate inhibitor 2270 is a block, as shown in FIG. 22B, that limits the movement of one or more plates 2104a-2104b as a battery cell swell and causes pressure to be applied to the one or more plates. Specifically, as shown in FIG. 22B, the bottom of a plate is inhibited from moving while the top of the plate can still move, causing a tilting of the plate and thus amplifying the movement of the top of the plate for a given amount of battery swelling. In some embodiments, other shapes than a block are used to inhibit the movement of a plate, such as for example triangular shapes, round shapes, and rectangular shapes. The plate inhibitor 2270 can be attached to one of the plates 2104a-2104b or to the bottom plate 2110 of a battery module such as battery module 2100 (See, for example, FIG. 21). In some embodiments, a second pressure sensor is installed and used in place of the plate inhibitor 2270. The two pressure sensors can be connected either in series or in parallel to produce either one output signal or two output signals.

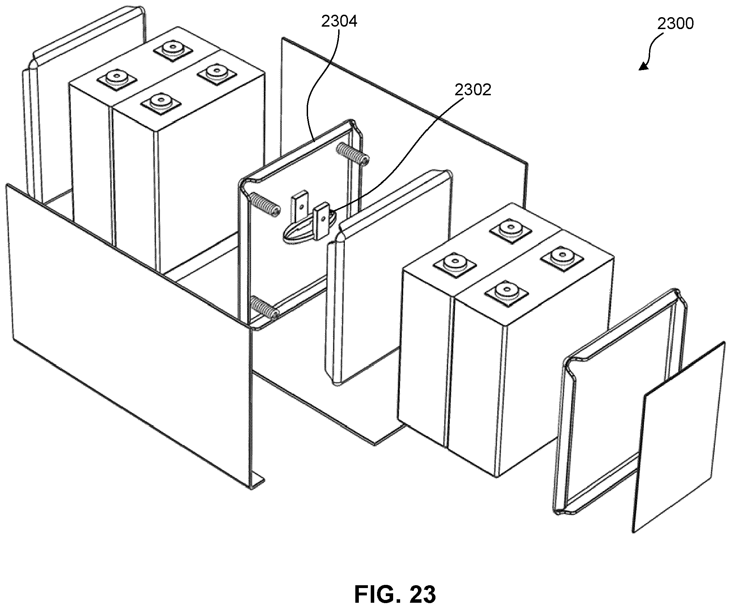

FIG. 23 is an exploded-view of a battery module 2300. Battery module 2300 has a swelling/pressure sensor 2302 attached to the middle of a pressure plate 2304.

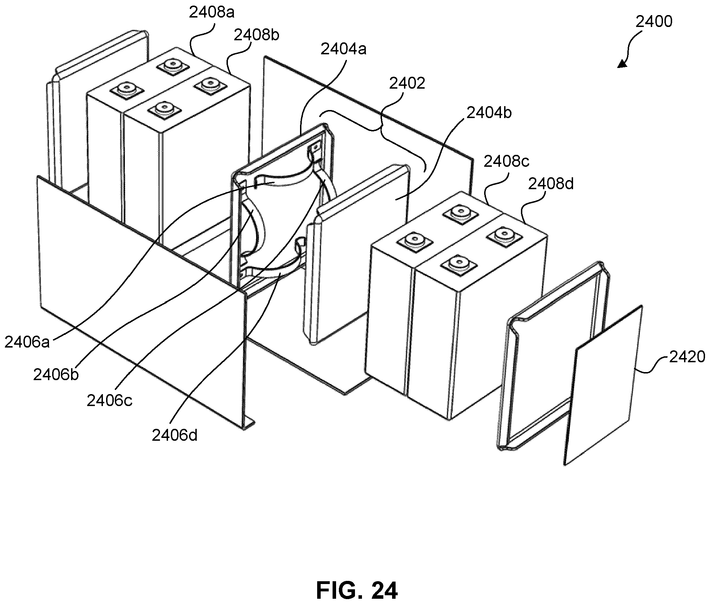

FIG. 24 illustrates an exploded-view of a battery module 2400 according to an embodiment of the present disclosure. Battery module 2400 includes a pressure assembly 2402 that includes two plates 2404a and 2404b, and leaf springs 2406a-2406d. In one embodiment, pressure assembly 2402 has four leaf springs 2406. In other embodiments, pressure assembly 2402 has more or less than four leaf springs 2406. When pressure is applied to one or both of the plates 2404, the leaf springs 2406 allow one or both of the plates 2404 to move. This movement can then be detected using a swelling/pressure sensor as described herein. In one embodiment, one or more of the leaf springs has a strain gauge attached to it so that it can detect movement of the pressure plate(s).

As illustrated in FIG. 24, battery module 2400 also includes a battery management circuit board 2420. The battery management circuit board 2420 includes electrical circuits similar to those described herein, for example, with references to FIG. 29. Battery module 2400 may include four battery cells 2408a-2408d.

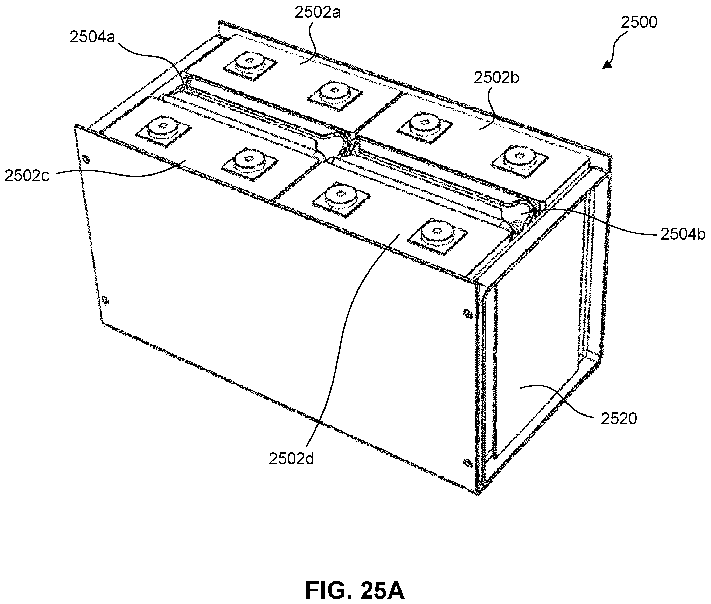

FIG. 25A illustrates an exploded-view of a battery module 2500 according to an embodiment of the present disclosure. Battery module 2500 is similar to other battery modules described herein except that it has two swelling/pressure sensors 2504a and 2504b to detect swelling of the battery cells 2502a-2502d, or an increased internal pressure of the battery cells 2502a-2502d. Battery module 2500 also includes a battery management circuit board 2520.

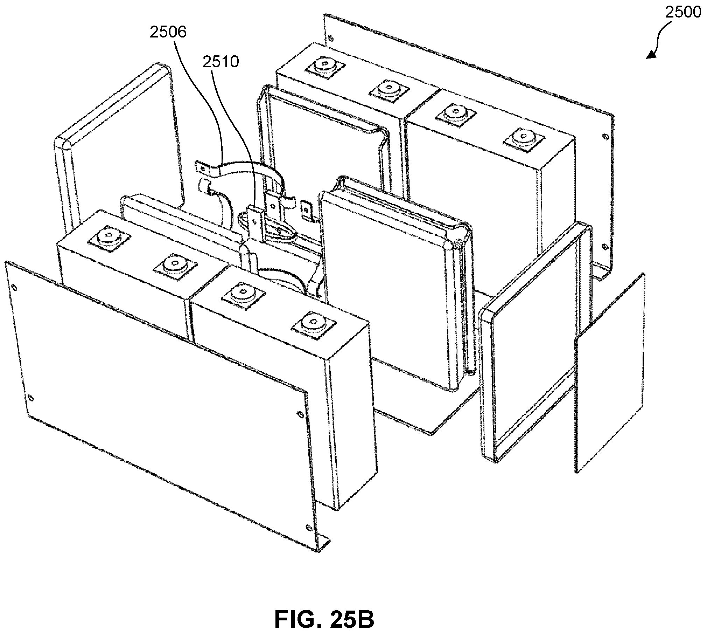

FIG. 25B is an exploded-view of an embodiment of battery module 2500. As shown in FIG. 25A, in some embodiments, battery module 2500 includes leaf springs 2506 and a swelling/pressure sensor 2510.

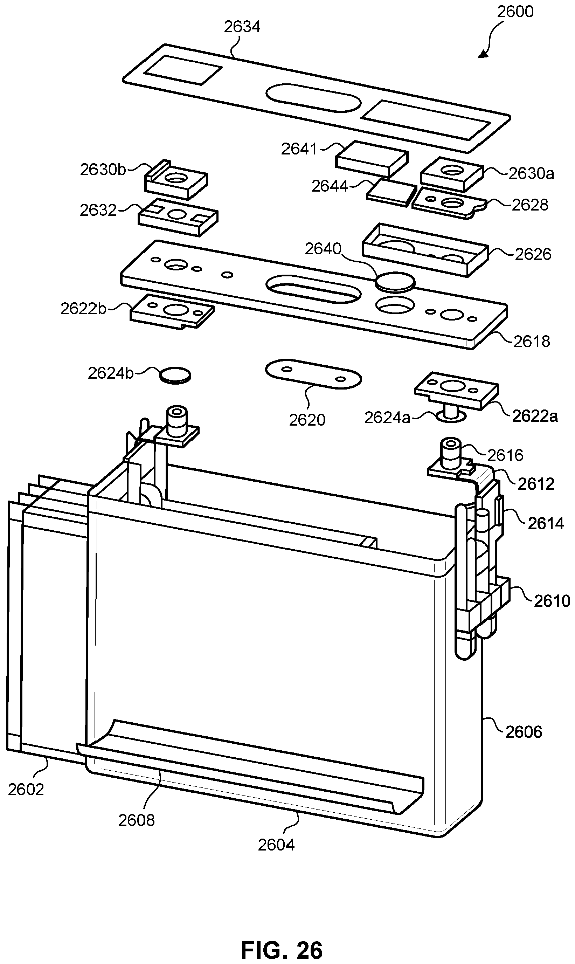

In some embodiments of the present disclosure, the battery modules described above have battery cells that have integrated pressure/swelling sensors as described below, for example, with regard to FIGS. 26-28, FIGS. 32-35, and FIGS. 40-42. In these embodiments, the battery modules do not require sensors that detect movement of a plate in contact with the battery cells as would be understood by persons skilled in the relevant arts given the description provided herein.

FIG 26 illustrates a battery cell 2600. In some embodiments, battery cell 2600 is a lithium-ion battery cell. As shown in FIG. 26, battery cell 2600 includes multiple jelly rolls housed in a can 2604. Can 2604 is wrapped in shrink tube 2606. Other features of battery cell 2600 include bottom retainer 2608, JR retainer 2610, current collector 2612, current collector retainer 2614, and rivet type terminal 2616.

As shown in FIG. 26, battery cell 2600 includes a cap plate 2618, safety vent 2620, bottom insulators 2622a-b, and seal gaskets 2624a-b. Also included are top insulator 2626, connection plate 2628, terminal plates 2630a-b, top plate 2632, and cap plate cover 2634.

As shown in FIG. 26, battery cell 2600 includes a capacitive sensor formed by a first capacitive surface 2640, a second capacitive surface 2642, and a compressible dielectric 2644. The compressible dielectric 2644 varies the distance between the first capacitive surface 2640 and the second capacitive surface 2642 due to changes of an internal pressure of the battery cell. These changes in distance cause a change in capacitance that is detected using a monitoring circuit, like the ones described below with reference to FIGS. 29-31. As shown in FIG. 26, in some embodiments, the capacitive sensor is a part of cap plate 2618. In some embodiments, the compressible dielectric is made from foam, plastic of other similar types of materials that can be compressed by applying a pressure. In other embodiments, the compressible dielectric is made from an encapsulated fluid or an encapsulated gas. The present disclosure is not limited however to just these groups of compressible dielectrics.

In operation, a liquid or other active material inside battery cell 2600 can begin to decompose and form one or more gases. These gases can be flammable and/or explosive. As these gases are formed and build up inside battery cell 2600, they cause an increase in the internal pressure of battery cell 2600, which is detected by the capacitive sensor. A cell pressure monitoring circuit, such as described below with reference to FIGS. 29-3, can then generate a digital output value from the sensor and compare this digital value to a threshold value, above which the battery or batteries having the high pressure should be removed from service and replaced. The threshold value can be set so that the battery cell or cells do not vent, and so that there is no battery fire or explosion. The threshold value should be higher than any battery cell warranty value and lower than the value at which safety valve 2620 with open and vent.

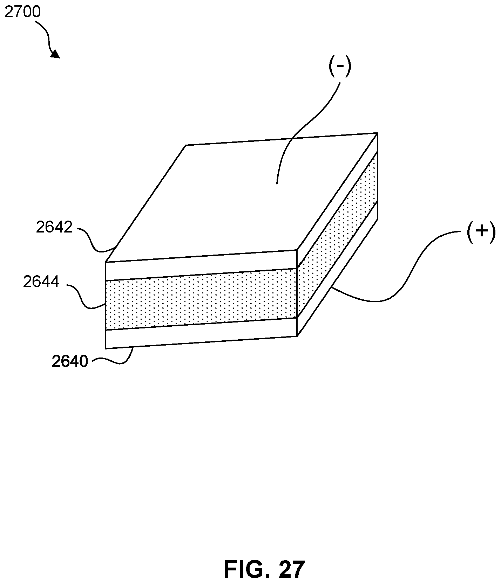

FIG. 27 is a diagram further illustrating a capacitive sensor 2700 according to an embodiment of the present disclosure. Capacitive sensor 2700, as shown in FIG. 27, is formed by first capacitive surface 2640, second capacitive surface 2642, and compressible dielectric 2644. The compressible dielectric 2644 varies the distance between the first capacitive surface 2640 and the second capacitive surface 2642 due to changes of the internal pressure of battery cell 2600. These changes in distance cause a change in capacitance that is detected using a monitoring circuit, like the ones described below with reference to FIGS. 29-31. In some embodiments, the capacitive sensor 2700 is a part of a cap plate of a battery cell. In some embodiments, the compressible dielectric is made from foam, plastic of other similar types of materials that can be compressed by applying a pressure. In other embodiments, the compressible dielectric is made from an encapsulated fluid or an encapsulated gas. The present disclosure is not limited however to just these groups of compressible dielectrics.

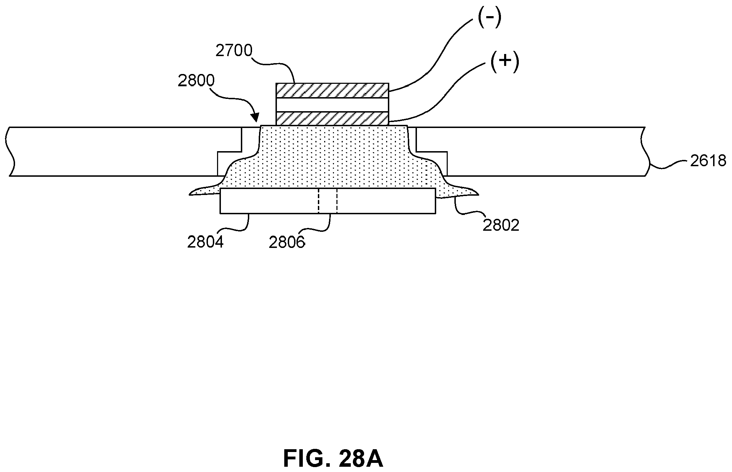

FIG. 28A is a diagram that further illustrates an embodiment of a capacitive sensor 2700 according to the present disclosure. As shown in FIG. 28A, capacitive sensor 2700 is a part of cap plate 2618 of a battery cell. A region 2800 of cap plate 2618 is machined to receive a material 2802 that can expand when pressure is applied to it. The material 2802 is held in place by a cap 2804, which when inserted, seals cap plate 2618 and the battery cell to which it is welded, for example. Cap 2804 has a hole 2806 In some embodiments that allow the internal pressure of a battery cell to be applied to material 2802. As the pressure applied increases, the material 2802 exerts a force on one of the capacitive surfaces of sensor 2700, and the compressible dielectric gives way to bring the first and second capacitive surfaces of sensor 2700 closer together. This change is the distance between the first and second capacitive surfaces is proportional to the internal pressure of the battery cell, and it is detected and converted to a digital value using a circuit according to the present disclosure, such as the ones described herein.

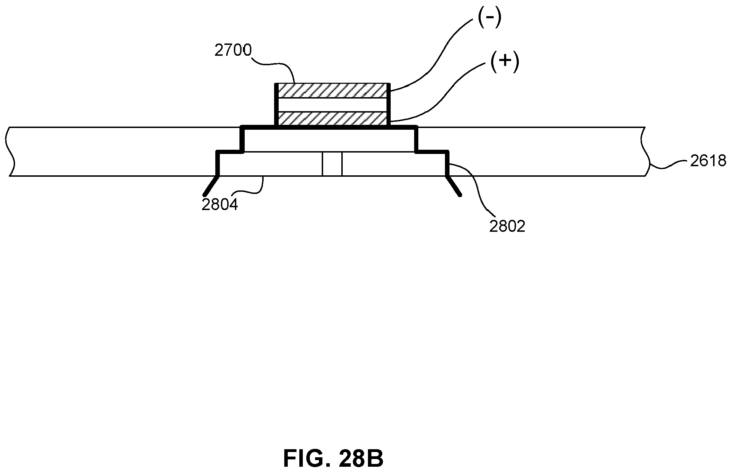

FIG. 28B is a diagram that further illustrates an embodiment of a capacitive sensor 2700 that can be included as a part of a battery cell cap plate 2618. If FIG. 28B, the cap 2804 is shown in place in cap plate 2618, with material 2802 forming a seal. Different types of plastic, rubber, etc. can be used for material 2802. The material 2802 should be strong enough to withstand the highest internal pressure expected in the battery cell before its safety valve vents.

Many different variations of capacitive sensors as described herein are contemplated and are within the scope of the present disclosure.

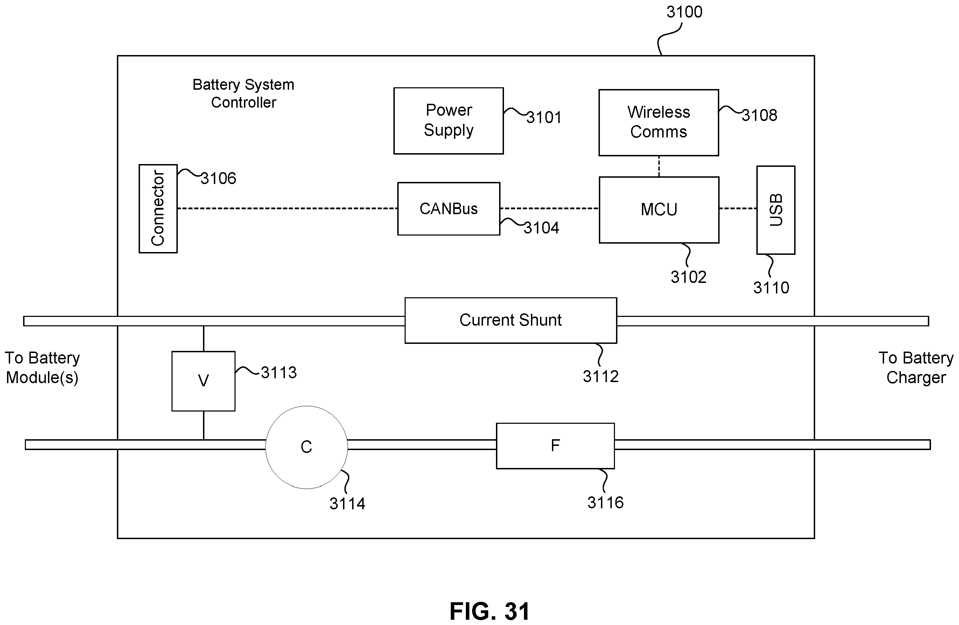

FIG. 29 illustrates a battery management circuit board 2900 according to an embodiment of the present disclosure. In some embodiments, battery management circuit board 2900 includes a power supply 2903, a microcontroller unit (MCU) 2901, cell voltage monitors 2902, cell temperature monitors 2904, cell pressure monitors 2906, a cell balancing controller 2908, balancing transformers 2910, and balancing rectifiers 2912. In some embodiments, MCU 2901 communicates with a higher-level controller using a CANBus communications circuit 2914. The CANBus communications circuit is connected to the higher-level controller using a connector 2916. In some embodiments, the higher-level controller is a battery system controller as described herein with reference to FIG. 31.

In operation, power supply 2903 draws power from either a power grid, battery cells of a battery module, or both, and converts this power to AC power and DC voltages needed to operate the components of battery module controller 2900. The AC power output by power supply 2904 is supplied to the cell balancing transformers 2910 and balancing rectifiers 2912 for balancing cells 2918. Power supply 2903 produces DC power required to operate the various components of battery management circuit board 2900 such as, for example, MCU 2901, cell voltage monitors 2902, cell temperature monitors 2904, cell pressure monitors 2906, and cell balancing controller 2908. MCU 2901 runs the firmware and software that controls the operation and functions of battery management circuit board 2900. These functions include monitoring the voltage, temperature and pressure of the battery cells that make up a battery module controlled by battery management circuit board 2900. The functions also include balancing the battery cells of the battery module and communicating data about the battery module and battery cells to a higher-level controller such as, for example, a battery system controller as described below. Cell voltage monitor(s) 2902, cell temperature monitor(s) 2904, and cell pressure monitor(s) 2906 are the hardware sensors and circuits needed to monitor the battery cell voltages, temperatures, and pressures. Cell balancing controller 2908 is the hardware needed to provide balancing current/power to the individual battery cells 2918 of the battery module controlled by battery management circuit board 2900. As will be understood by persons skilled in the relevant art(s), hardware other than that described herein can be used to monitor battery cell voltages and temperatures, and to balance battery cells of a battery module according to the present disclosure.

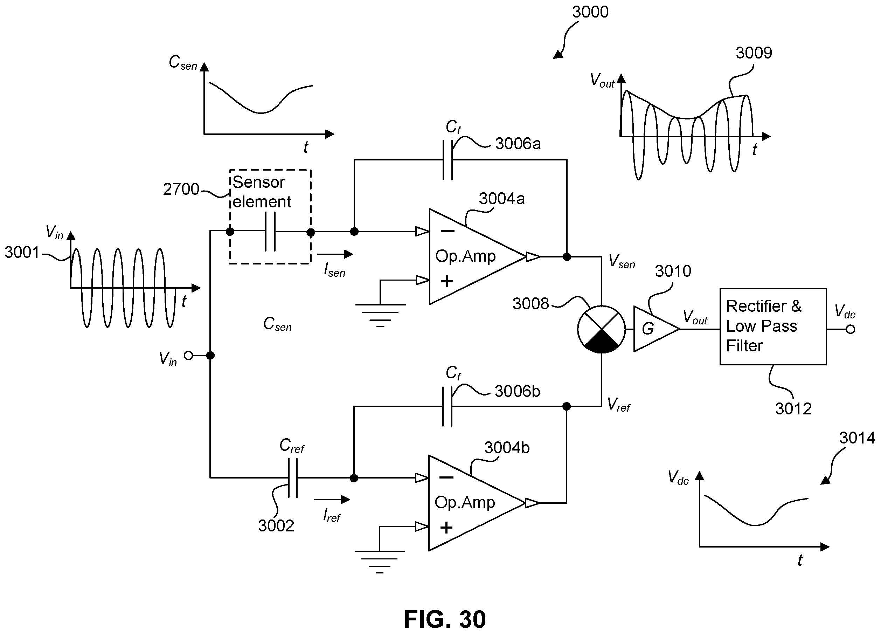

FIG. 30 is a diagram of a capacitive bridge circuit 3000, which is one circuit that can be used to produce a voltage in response to changes in the capacitance of a capacitive sensor according to the present disclosure, such as for example capacitive sensor 2700. Capacitive bridge circuit 3000 can be used in embodiment to implement cell pressure monitor(s) 2906. Cell pressure monitor(s) 2906 is not limited however to being implemented by capacitive bridge circuit 3000.

As shown in FIG. 30, capacitive bridge circuit 3000 includes a capacitive sensor 2700 and a reference capacitor 3002. In some embodiments, an input signal 3001 is applied to capacitor sensor 2700 and reference capacitor 3002, and the outputs of these two capacitors are operated upon by operational amplifiers 3004a and 3004b, which act as current to voltage converters measuring the current flowing through the capacitive sensor 2700 and reference capacitor 3002. A capacitor 3006a is used with operational amplifier 3004a, and a capacitor 3006b is used with operational amplifier 3004b.

The output of the two branches of circuit 3000 are added together using summer 3008 and then amplified by amplifier 3010 to get an output signal 3009. Output signal 3009 is then passed through rectifier and low pass filter circuit 3012 to get the output signal 3014. The output signal 3014 is proportional to the internal pressure of a battery cell monitored by capacitive bridge circuit 3000. In some embodiments, output signal 3014 is a variable dc voltage signal.

In some embodiments, output signal 3014 is converted by MCU 2901 to a digital signal that is compared by MCU 2901 to a threshold value. When the digital value (internal pressure of the battery cell) exceeds the threshold value, MCU 2901 generates or produces a high-pressure alarm or signal. This high-pressure alarm or signal is transmitted to the MCU of a battery system controller, such as for example MCU 3104 of battery system controller 3100 (see FIG. 31) and used to open for example a contactor such as contactor 3114 of battery system controller 3100. Opening the contactor removes the battery cell having an issue from the rest of the battery system and makes it safe until the battery cell having the issue is replaced. Opening the contactor can also prevent further damage to the battery cell which could cause it to vent, catch on fire, and/or explode.

FIG. 31 illustrates a battery system controller 3100 according to an embodiment of the present disclosure. Battery system controller includes a power supply 3101, an MCU 3102, CANBus communications 3104 and wireless communications 3108. In some embodiments, MCU 3102 uses CANBus communications 3104 to exchange messages and data with one or more battery modules as described herein. In some embodiments, this data is the same or similar to the data shown in GUI 700 of FIG. 7. The battery module(s) CANBus communications are coupled to the battery system controller's CANBus communications 3104 using a connector 3106. MCU 3102 uses wireless communications 3108 to talk to higher level software, for example, a monitoring or controlling computer. In some embodiments, the wireless communications use TCP/IP. Battery system controller 3100 also includes an optional USB 3110 that can be used for connecting, for example, to a laptop computer during maintenance and/or testing, or when programming MCU 3102 or when changing software and/or firmware settings.

In some embodiments, battery system controller 3100 also includes a current measuring circuit 3112, a voltage measuring circuit 3113, a contactor 3114, and a fuse 3116. The current measuring circuit is used to monitor the charging and discharging current of controlled battery modules. The voltage measuring circuit 3113 is used to monitor the voltage of battery module(s) controlled by battery system controller 3100. The contactor, controlled by MCU 3102, can be closed to allow the charging and discharging of connected battery module(s), or opened to prevent the charging and discharging of connected battery modules. The fuse is for short circuit protection and to disconnect battery modules should the contactor not open during a short circuit. In some embodiments, MCU 3102 opens contactor 3114 if there is an over-current event, over-voltage event, or an under-voltage event. The output of the current measuring circuit 3112 and the voltage measuring circuit 3113 can be multiplied together to get power, which is also monitored In some embodiments of the present disclosure.

In some embodiments, the battery management circuit boards of the various battery modules described herein send warning messages and alarm messages to battery system controller 3100, and when these warnings and alarms are received, battery system controller 3100 will take action to respond to the warning and alarms such as, for example, sending a message to a connected charger to stop charging or by opening contactor 3114 to prevent the over-charging or over-discharging of connected battery modules.

FIG. 32 illustrates a battery cell 3200 having an integrated pressure sensor 3210 according to an embodiment of the present disclosure. As shown in FIG. 32, battery cell 3200 includes a cap plate 3202. Cap plate 3202 has a positive terminal 3204, a negative terminal 3206 and a safety vent 3208. Cap plate 3202 also has an integrated pressure sensor 3210 that includes two lead wires 3212 for connecting to a cell pressure monitor of a battery module controller according to embodiments of the present disclosure. Integrated pressure sensor 3210 detects changes in the internal pressure of battery cell 3200, and when the internal pressure of battery cell 3200 reaches a predetermined level (i.e., a predetermined sensor output signal level), the battery module controller generates a warning and/or alarm that causes the system containing battery cell 3200 to take safety actions and for example prevent further charging or discharging of battery cell 3200 so that it can be replaced with a new battery cell. In some embodiments, one of the safety actions that is taken is to open a contactor or relay that connects battery cell 3200 to a DC bus of the system containing battery cell 3200.

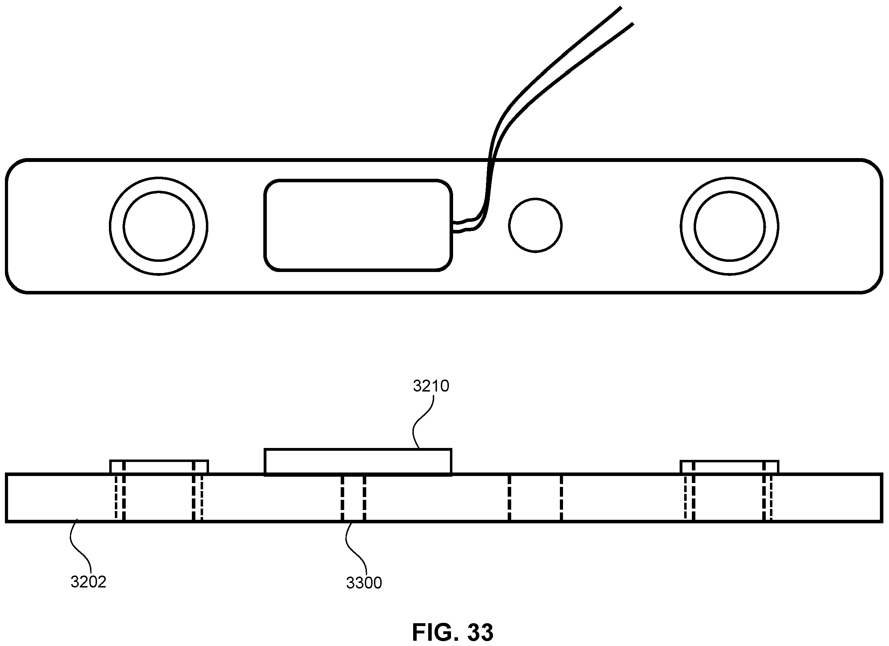

FIG. 33 further illustrates battery cell cap plate 3202 and integrated pressure sensor 3210 according to an embodiment of the present disclosure. As shown in FIG. 33, in some embodiments integrated pressure sensor 3210 is coupled or attached to the top of cap plate 3202. This can be done for example by welding pressure sensor 3210 to cap plate 3202. In embodiment, both pressure sensor 3210 and cap plate 3202 are aluminum and can be, for example, laser welded together. A pressure vent 3300 as shown in FIG. 33 allows the pressure inside a battery cell to be sensed by integrated pressure sensor 3210 as described below.

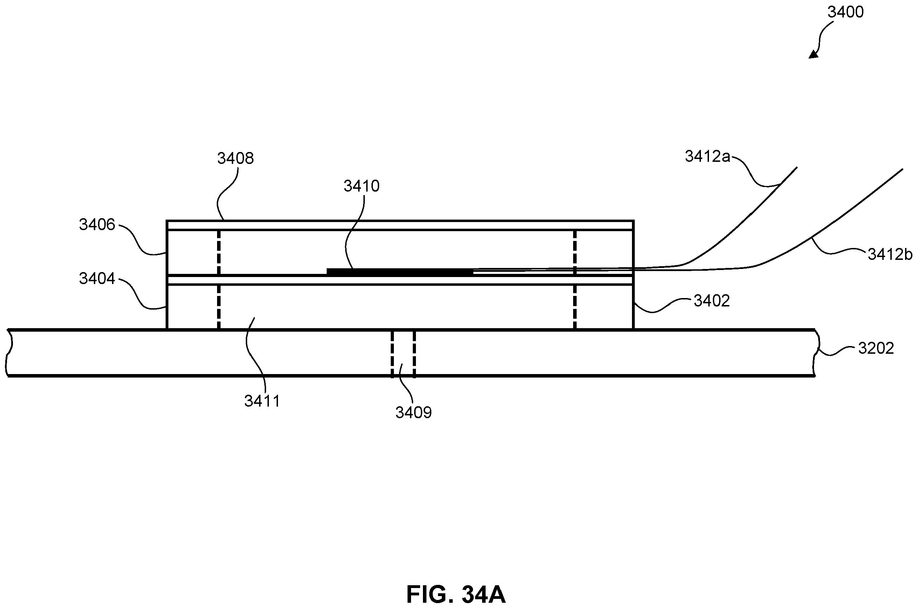

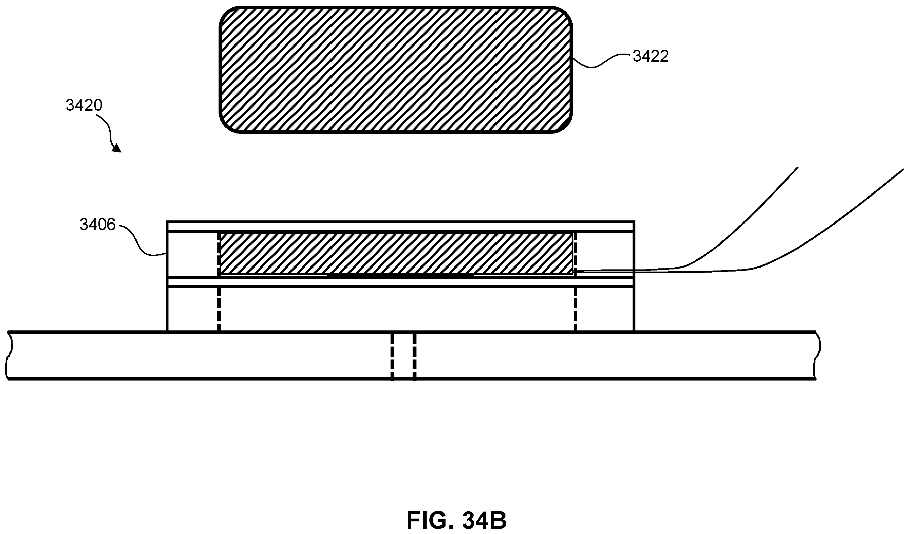

FIG. 34A illustrates a battery cell cap plate integrated pressure sensor 3400 according to an embodiment of the present disclosure. As shown in FIG. 34A, in some embodiments, integrated pressure sensor 3400 includes a sensor base 3402, a sensing plate 3404, a sensor top 3406, and a sensor top plate 3408. A sensing device 3410 is coupled to or attached to sensing plate 3404 as shown in FIG. 34. In some embodiments, sensing device 3410 is for example a strain gauge or a capacitive sensor that provides an output signal related to a bending or deformation of sensing plate 3404 caused by the internal pressure of a battery cell. In some embodiments, the internal pressure of a battery cell is measured by integrated pressure sensor 3400 for example when a gas formed inside the battery cell enters a pressure chamber 3411 though pressure vent 3409 and causes sensing plate 3404 to bend. This bending of sensing plate 3404 is detected by sensing device 3410 and produces an output signal related to the internal pressure of the battery cell. Lead wires 3412a and 3412b couple this output signal to a cell pressure monitor of a battery module controller according to embodiments of the present disclosure.

In some embodiments of the present disclosure, sensor base 3402, sensing plate 3404, sensor top 3406, and sensor top plate 3408 are aluminum and can be coupled together for example by welding. The integrated pressure sensor 3400 can then be attached to battery cell cap plate 3202 by welding too. The sensing device 3410 can be coupled to or attached to sensing plate 3404 for example by a glue or adhesive such as cyanoacrylate.

FIG. 34B illustrates a battery cell cap plate integrated pressure sensor 3420 according to an embodiment of the present disclosure. Integrated pressure sensor 3420 is similar to integrated pressure sensor 3400 except that integrated pressure sensor 3420 includes a pressure adsorbing device 3422 that is located inside a chamber of sensor top 3406. Pressure absorbing device 3422 applies a pressure to pressure sensing device 3410 and sensing plate 3404. Pressure absorbing device 3422 can be used to alter or adjust the amount of bending or deformation of sensing plate 3404 to an internal pressure of a battery cell. In some embodiments, pressure absorbing device 3422 is made of for example, foam, plastic, rubber, silicone etc. Other materials can also be used as will be understood by persons skilled in the relevant art(s).

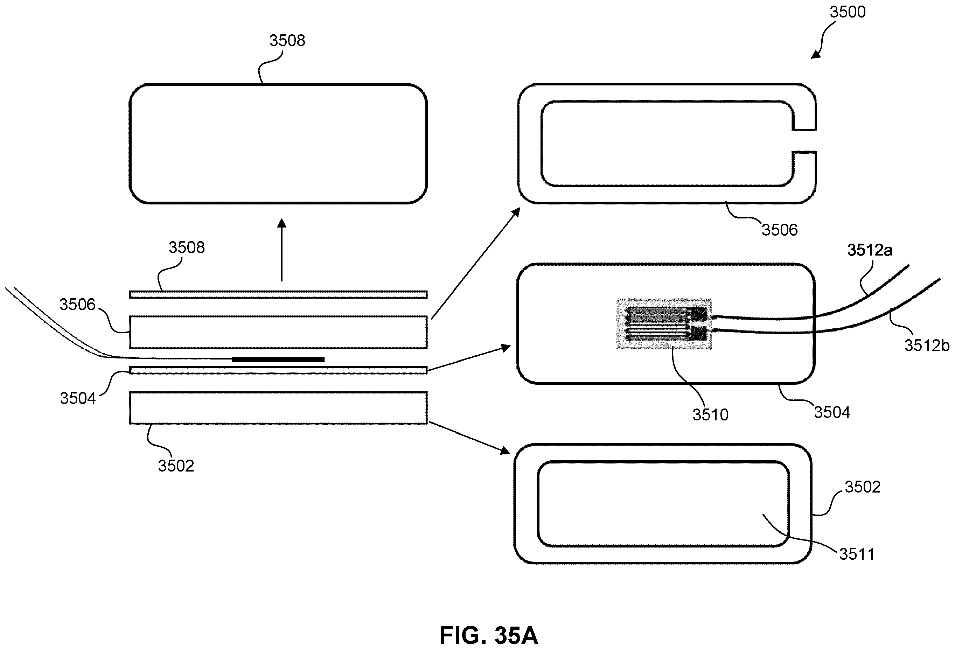

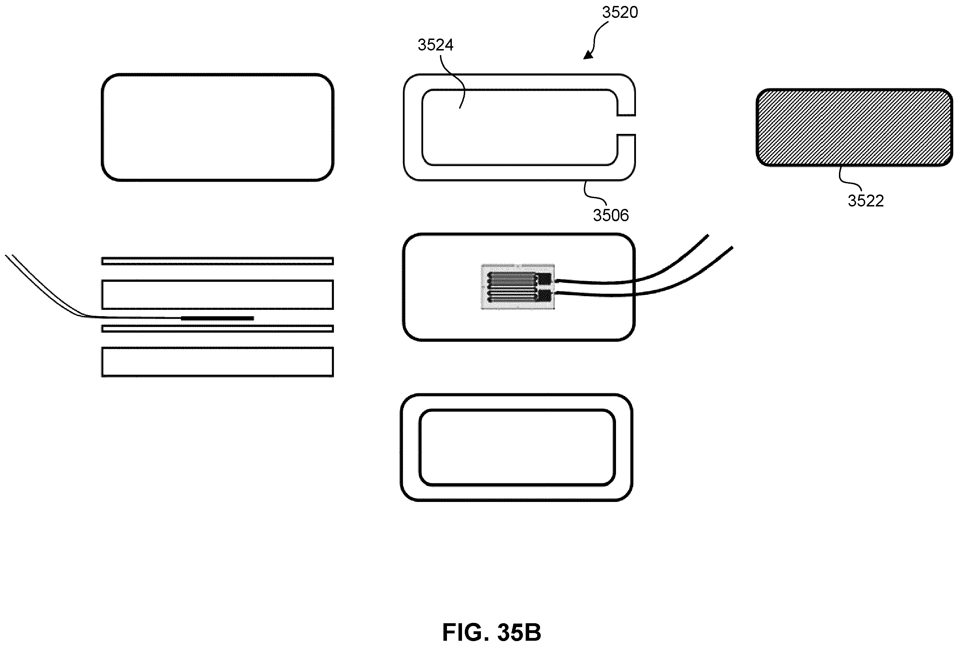

FIG. 35A illustrates a battery cell cap plate integrated pressure sensor 3500 according to an embodiment of the present disclosure. As shown in FIG. 35A, in some embodiments, integrated pressure sensor 3500 includes a sensor base 3502, a sensing plate 3504, a sensor top 3506, and a sensor top plate 3508. A sensing device 3510 is coupled to or attached to sensing plate 3504 as shown in FIG. 35. In some embodiments, sensing device 3510 is for example a strain gauge or other sensing device that provides an output signal related to a bending or deformation of sensing plate 3504 caused by the internal pressure of a battery cell. In some embodiments, the internal pressure of a battery cell is measured by integrated pressure sensor 3500 for example when a gas formed inside the battery cell enters a pressure chamber 3511 though pressure vent of a battery cell cap plate and causes sensing plate 3504 to bend. This bending of sensing plate 3504 is detected by sensing device 3510 and produces an output signal related to the internal pressure of the battery cell. Lead wires 3512a and 3512b couple this output signal to a cell pressure monitor of a battery module controller according to embodiments of the present disclosure.

In some embodiments of the present disclosure, sensor base 3502, sensing plate 3504, sensor top 3506, and sensor top plate 3508 are aluminum and can be coupled together for example by welding. The integrated pressure sensor 3500 can then be attached to battery cell cap plate by welding too. The sensing device 3510 can be coupled to or attached to sensing plate 3504 for example by a glue or adhesive such as cyanoacrylate.

FIG. 35B illustrates a battery cell cap plate integrated pressure sensor 3520 according to an embodiment of the present disclosure. Integrated pressure sensor 3520 is similar to integrated pressure sensor 3500 except that integrated pressure sensor 3520 includes a pressure adsorbing device 3522 that is located inside a chamber 3524 of sensor top 3506. Pressure absorbing device 3522 applies a pressure to pressure sensing device 3510 and sensing plate 3504. Pressure absorbing device 3522 can be used to alter or adjust the amount of bending or deformation of sensing plate 3504 to an internal pressure of a battery cell. In some embodiments, pressure absorbing device 3522 is made of for example, foam, plastic, rubber, silicone etc. Other materials can also be used as will be understood by persons skilled in the relevant art(s).

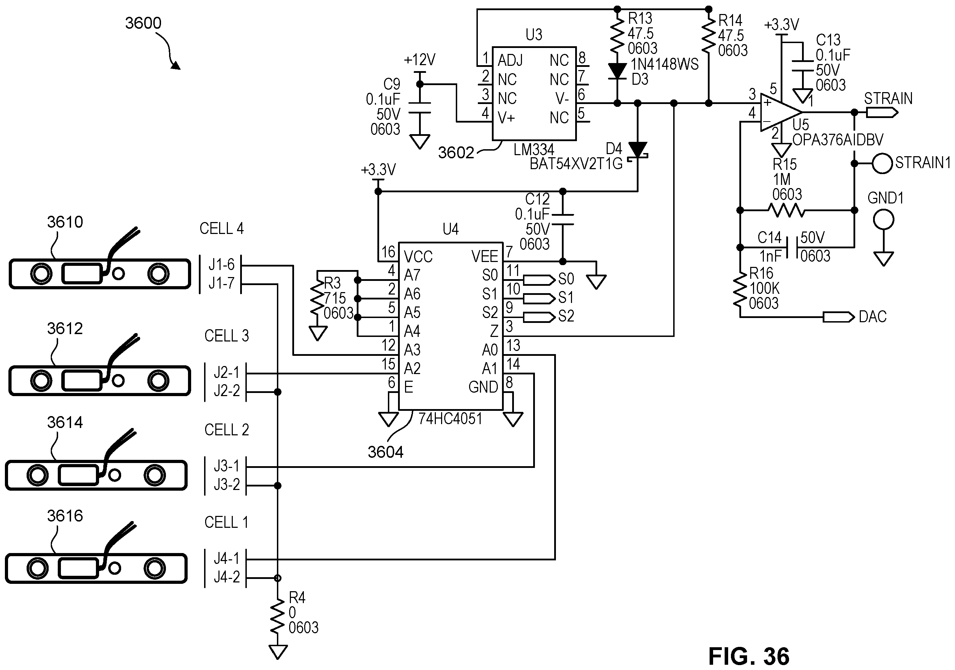

FIG. 36 illustrates a battery cell pressure monitor circuit 3600 according to an embodiment of the present disclosure. As shown in FIG. 36, battery cell pressure monitor circuit 3600 includes a power regulator/current regulator chip 3602 and an analog multiplexer and demultiplexer chip 3604 as well as other active and passive electrical components that are known to persons skilled in the relevant art(s). These components are connected as shown in FIG. 36. In the embodiment shown in FIG. 36, battery cell pressure monitor circuit 3600 is designed to monitor the internal pressure of for battery cells 3610, 3612, 3614, and 3616 using the cap top integrated pressure sensors of these battery cells.

In some embodiments, battery cell pressure monitor circuit 3600 operates as follows. Power regulator/current regulator chip 3602 generates a constant current output. This constant current output is routed by analog multiplexer and demultiplexer chip 3604 to each of the battery cell integrated pressor sensors, one at a time. In some embodiments, the constant current generated by power regulator/current regulator chip 3602 flows through a strain gauge attached to a sensing plate of the battery cells integrated pressure sensor and produces a voltage proportional to the internal pressure of the battery cell. The voltage is then amplified by battery cell pressure monitor circuit 3600 and provided to an analog-to-digital converter and converter to a digital signal that can be processed by a microprocessor. When the digital signal exceeds a predetermined value, the microprocessor of a battery module controller according to an embodiment of the present disclosure generates a warning and/or alarm that causes the system containing the battery cell to take safety actions and, for example, prevent further charging or discharging of the battery cell so that it can be replaced with a new battery cell. In some embodiments, one of the safety actions that is taken is to open a contactor or relay that connects the battery cell to a DC bus of the system containing the battery cell. In this manner, a battery cell having an issue can be replaced before it is further damaged and catches or fire or explodes.

In some embodiments of the present disclosure, battery cell pressure monitor circuit 3600 can be expanded to monitor more than four battery cells. For example, it can be expanded to monitor any number of battery cells contained in a typical battery module such as 8, 12, or 16 cells. Other numbers are also possible according to the multiplexing and demultiplexing circuit or chips used as will be understood by persons skilled in the relevant art(s) given the description given herein.

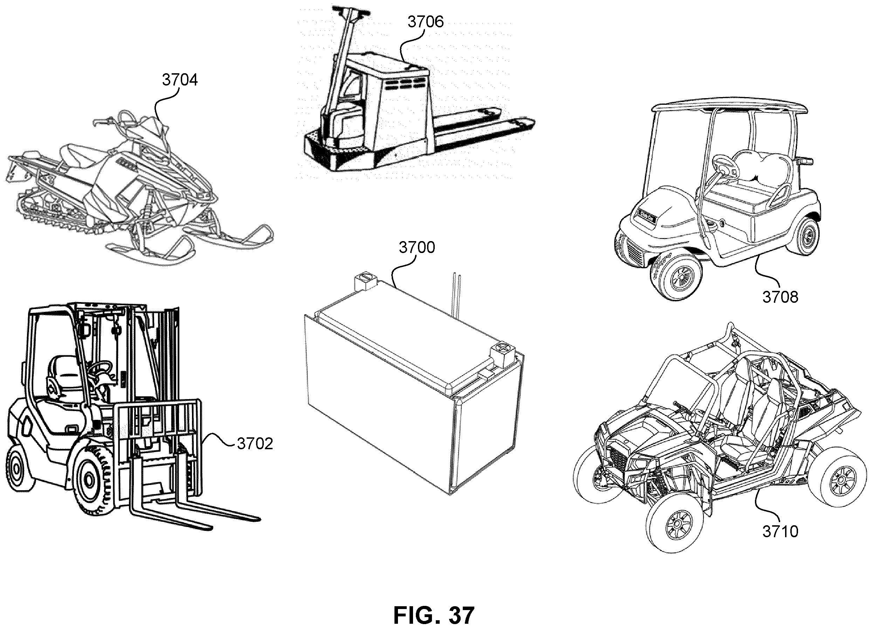

FIG. 37 illustrates various example vehicles that can be powered by battery modules 3700 according to the present disclosure. In some embodiments, battery module 3700 is one of the battery modules described herein. These battery modules can be combined in series and/or parallel to make a battery system for powering the vehicles shown, as well as others not shown. As shown in FIG. 37, the vehicles that can be powered include an electric counter-balanced forklift truck 3702, a snowmobile 3704, an electric pallet jack 3706, an electric golf cart 3708, and an electric recreational vehicle 3710. Other vehicles that can be powered will be known to person(s) skilled in the relevant art(s) given the description herein.

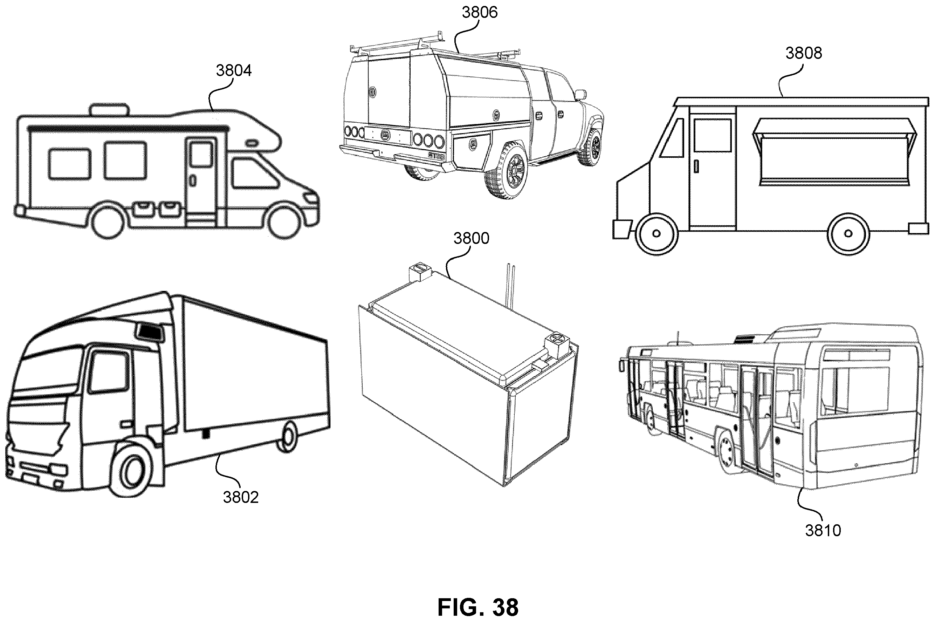

FIG. 38 illustrates various example vehicles having auxiliary electrical systems that can be powered by battery modules 3800 according to the present disclosure. In some embodiments, battery module 3800 is one of the battery modules described herein. These battery modules can be combined in series and/or parallel to make a battery system for an auxiliary power system included, for example, in the vehicles shown, as well as others not shown. As shown in FIG. 38, vehicles having an auxiliary power system that can be powered using battery modules according to the present disclosure include a tractor-trailer 3802, a camper or recreational vehicle 3804, a work truck 3806, a food truck 3808, and a bus 3810. Other vehicles having an auxiliary power system that can be powered by battery modules according to the present disclosure will be known to person(s) skilled in the relevant art(s) given the description herein.

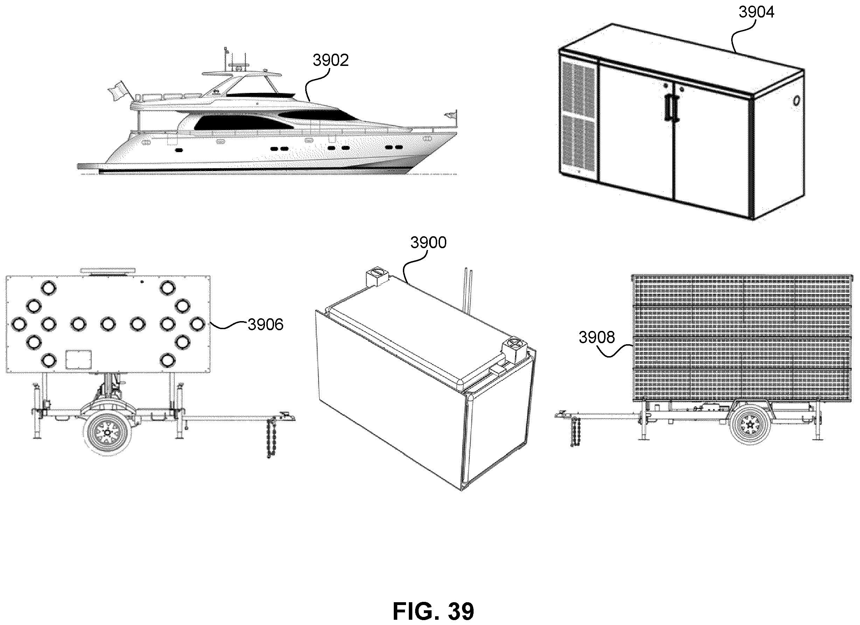

FIG. 39 illustrates various example equipment that can be powered by battery modules 3900 according to the present disclosure. In some embodiments, battery module 3900 is one of the battery modules described herein. These battery modules can be combined in series and/or parallel to make a battery system for the equipment shown, as well as other equipment not shown. As shown in FIG. 39, the equipment that can be powered using battery modules according to the present disclosure includes a boat 3902, a residential battery energy storage unit 3904, and construction signs 3906 and 3908. Other equipment that can be powered by battery modules according to the present disclosure will be known to person(s) skilled in the relevant art(s) given the description herein.

FIGS. 40A-40C illustrate a battery cell cap plate 4000 having an integrated pressure sensor 4016 according to an embodiment of the present disclosure. As shown in FIG. 40A, battery cell cap plate 4000 includes a metal top 4002, a positive terminal 4004, a positive terminal insulator 4006, a negative terminal 4008, a negative terminal insulator 4010, a pressure burst vent 4012, an electrolyte fill hole 4014, and integrated pressure sensor 4016. Integrated pressure sensor 4016 is used to monitor the internal pressure of a battery cell as described in detail herein and to disconnect a battery cell having an issue from the rest of a battery system before it catches on fire or explodes.

FIG. 40B further illustrates battery cell top plate 4000. As shown in FIG. 40B, both the positive terminal 4004 and the negative terminal 4008 pass through metal top 4002 so that they may be connected to battery cell(s) (e.g., battery jelly rolls) located within the can of a battery cell. The metal terminals are insulated from metal top 4002 by the positive terminal insulator 4006 and negative terminal insulator 4008. A metal foil 4024 is attached to the underside of metal top 4002, which will burst when the pressure inside a battery cell reaches a predetermined value and let gases inside the battery cell escape. A small fill hole 4026 that is part of electrolyte fill hole 4014 passes completely through metal top 4002 as shown in FIG. 40B. A rectangular cutout 4028 exposes integrated pressure sensor 4016 to gases within the battery cell so that the pressure of the battery cell can be monitored. In some embodiments of the present disclosure, a small hole similar to hole 4026 can be used to expose integrated pressure sensor 4016 to the gases within a battery cell.

FIG. 40C further illustrates an embodiment of an integrated pressure sensor 4016 of battery cell cap plate 4000 according to the present disclosure. As shown in FIG. 40C, in some embodiments, integrated pressure sensor 4016 includes a strain gauge 4030, a metal foil 4032, a metal body 4034 and two wire leads 4036a and 4036b. In one embodiment, the metal foil 4032 is attached to the metal body 4034, and the strain gauge 4030 is attached to the metal foil 4032, for example, using an adhesive. The wire leads 4036a-b pass through a notch in metal body 4034 as shown in FIG. 40C. A plastic or metal cap/top (not shown) is used to protect strain gauge 4030 and metal foil 4032 from damage by an external object. The integrated pressure sensor 4016 is then attached to the metal top 4002 of battery cell cap plate 4000, for example, by welding, to form a gas tight seal between integrated pressure sensor 4016 and the metal top 4002. In other embodiments, metal body 4034 does not include a notch, and the wire leads 4036a-b pass through an opening in a metal or plastic top/cap of integrated pressure sensor 4016.

In operation, when the gases inside a battery cell press against metal foil 4032, the resistance of strain gauge 4030 changes, and this change in resistance is detected by the battery management system pressure detection circuit such as the one described, for example, with reference to FIG. 36. When the monitored pressure of the battery cell exceeds a selected value, the battery module, pack and/or rack containing the battery cell is disconnected from the rest of the battery system until it is replaced in order to prevent the battery cell from catching on fire or exploding as a result of continued use.

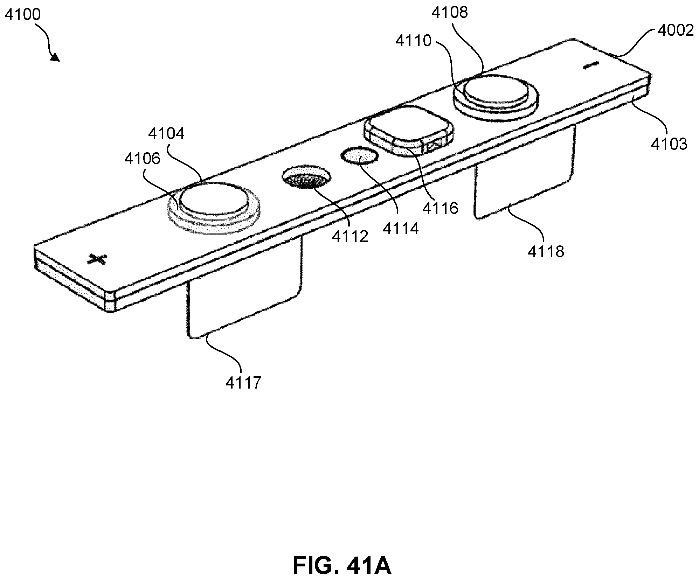

FIGS. 41A-C illustrate a battery cell cap plate 4100 having an integrated pressure sensor 4116 according to an embodiment of the present disclosure. As shown in FIG. 41A, battery cell cap plate 4100 includes a metal top 4102, a plastic bottom 4103, a positive terminal 4104, a positive terminal insulator 4106, a negative terminal 4108, a negative terminal insulator 4110, a pressure burst vent 4112, an electrolyte fill hole 4114, and integrated pressure sensor 4116. Battery cell cap plate 4100 also includes a positive terminal battery cell connection tap 4117 and a negative terminal battery cell connection tab 4118. Integrated pressure sensor 4116 is used to monitor the internal pressure of a battery cell as described in detail herein and to disconnect a battery cell having an issue from the rest of a battery system before it catches on fire or explodes.

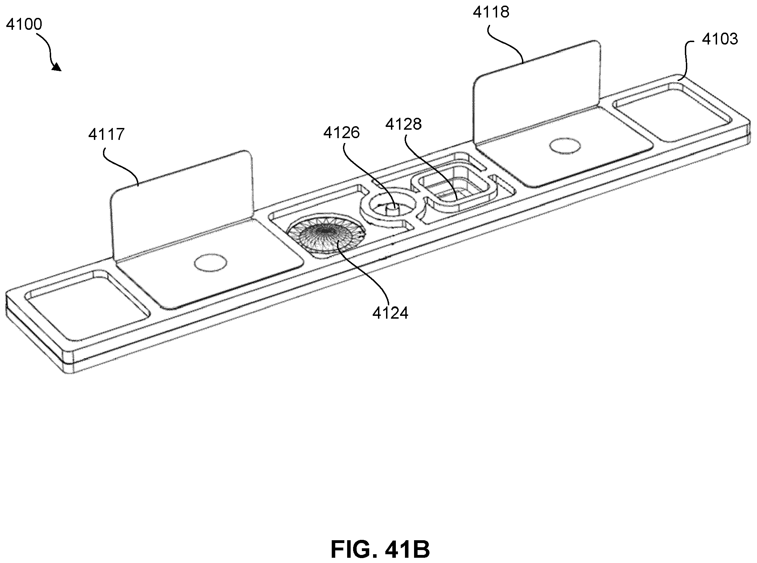

FIG. 41B further illustrates battery cell top plate 4100. As shown in FIG. 41B, both the positive terminal 4104 and the negative terminal 4108 pass through metal top 4102 so that they may be connected to battery cell(s) (e.g., battery jelly rolls) located within the can of a battery cell using the positive terminal battery cell connection tap 4117 and the negative terminal battery cell connection tab 4118. The metal terminals are insulated from metal top 4102 by the positive terminal insulator 4106, the negative terminal insulator 4108, and plastic bottom 4103. A metal foil 4124 is attached to the underside of metal top 4102, which will burst when the pressure inside a battery cell reaches a predetermined value and let gases inside the battery cell escape. A small fill hole plug 4126 is welded in place to seal the electrolyte fill hole 4114 as shown in FIG. 40B. A rectangular cutout 4128 exposes integrated pressure sensor 4116 to gases within the battery cell so that the pressure of the battery cell can be monitored. In some embodiments of the present disclosure, a small hole similar to hole 4026 in FIG. 40B can be used to expose integrated pressure sensor 4116 to the gases within a battery cell.

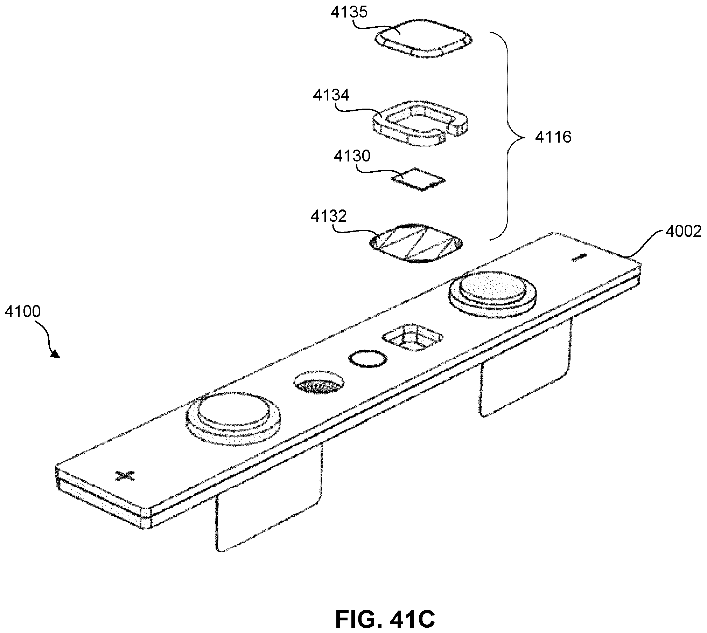

FIG. 41C further illustrates an embodiment of an integrated pressure sensor 4116 of battery cell cap plate 4100 according to the present disclosure. As shown in FIG. 41C, in some embodiments, integrated pressure sensor 4116 includes a strain gauge 4130, a metal foil 4132, a metal body 4134 and a plastic cap 4135. In one embodiment, the metal foil 4132 is attached to the metal body 4134, and the strain gauge 4130 is attached to the metal foil 4132, for example, using an adhesive. A plastic cap 4135 is used to protect strain gauge 4130 and metal foil 4132 from damage by an external object. The integrated pressure sensor 4116 is then attached to the metal top 4102 of battery cell cap plate 4100, for example, by welding, to form a gas tight seal between integrated pressure sensor 4116 and the metal top 4102. In other embodiments, metal body 4134 does not include a notch, and wire leads attached to strain gauge 4130 pass through an opening in the plastic cap of integrated pressure sensor 4116.

In operation, when the gases inside a battery cell press against metal foil 4132, the resistance of strain gauge 4130 changes, and this change in resistance is detected by the battery management system pressure detection circuit such as the one described, for example, with reference to FIG. 36. When the monitored pressure of the battery cell exceeds a selected value, the battery module, pack and/or rack containing the battery cell is disconnected from the rest of the battery system until it is replaced in order to prevent the battery cell from catching on fire or exploding as a result of continued use.

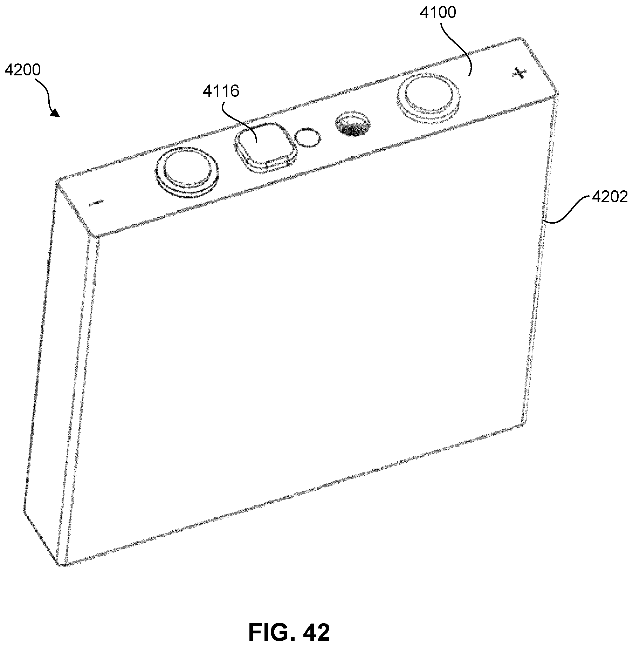

FIG. 42 illustrates a battery cell 4200 having an integrated pressure sensor 4116 according to an embodiment of the present disclosure. As shown in FIG. 42, battery cell 4200 includes a battery can 4202 and a battery cell cap plate 4100. The integrated pressure sensor 4116 is used to monitor the internal pressure of battery cell 4200 and disconnect it from a battery system when the internal pressure reached a selected value that indicates battery cell 4200 has an issue and should be removed from further operation until the battery module or battery pack containing battery cell 4200 is replaced in order to prevent a fire or explosion of battery cell 4200.

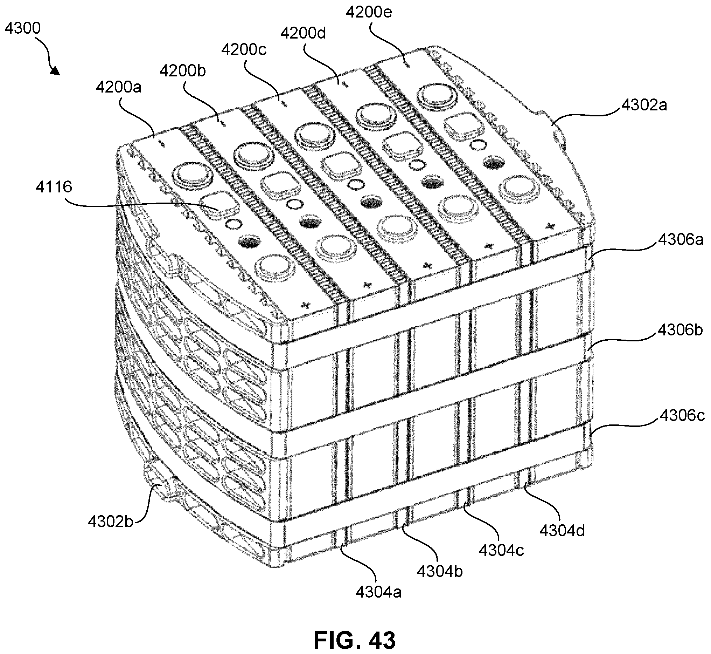

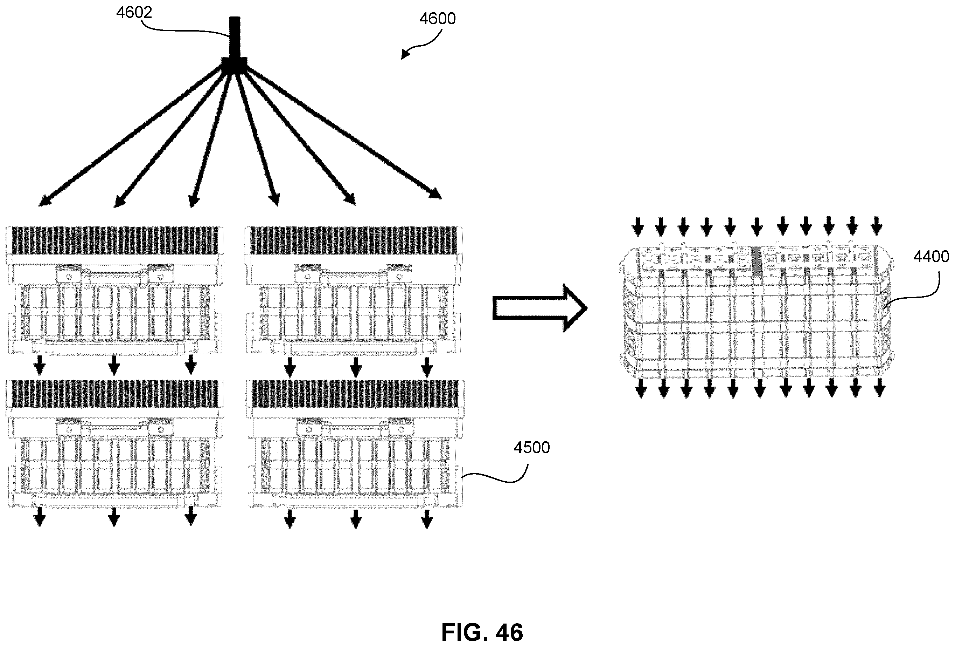

FIG. 43 illustrates a battery module 4300 having five battery cells 4200a-e, each of which have an integrated pressure sensor 4116 according to an embodiment of the present disclosure. As shown in FIG. 43, the five battery cells 4200a-e are separated by four cooling plates 4304a-d. In some embodiments, the cooling plates 4304a-d are made of stamped aluminum, which allows air to flow between the battery cells 4200a-e. The cooling plates 4304 also allow water to flow between the battery cells 4200 in the case of a fire to cool the battery cells and prevent a fire from spreading from one battery cell to another battery cell, as illustrated for example in FIG. 46. A selected amount of pressure is applied to the battery cells 4200 using end caps 4302a-b, and banding straps 4306a-c. The selected amount of pressure applied is typically specified by a battery cell manufacturer and is applied in order to increase the cycle life of the battery cells. In some embodiments of the present disclosure, a battery module such as battery module 4300 may have more than five battery cells or less than five battery cells.

In some embodiments, the sensors 4116 of the battery cells 4200a-e are connected together in series, and the series or string of sensors 4116 is connected to a battery management system printed circuit board such as, for example, printed circuit board 4550 or printed circuit board 4552.

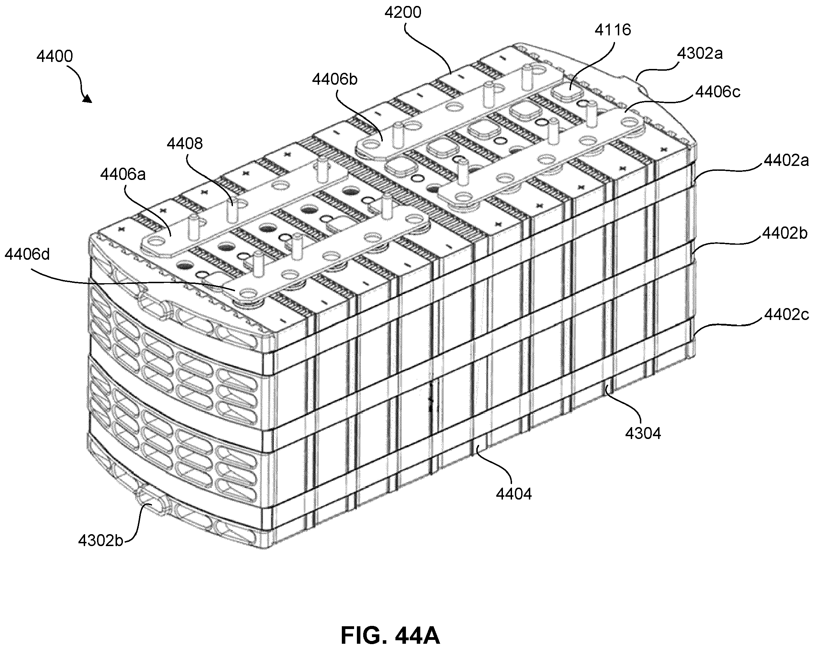

FIGS. 44A-44D illustrate a battery module 4400 having ten battery cells 4200, each of which has an integrated pressure sensor 4116 according to an embodiment of the present disclosure. As shown in FIG. 44A, five of the battery cells 4200 are oriented in a first direction and five of the battery cells 4200 are oriented in a second direction, thereby effectively creating two submodules within battery module 4400. Each of the battery cells 4200 is separated by a cooling plate 4304 or 4404. In some embodiments, the cooling plates 4304 and 4404 are made of stamped aluminum, which allows air to flow between the battery cells 4200. The cooling plates 4304 and 4404 also allow water to flow between the battery cells 4200 in the case of a fire to cool the battery cells and prevent a fire from spreading from one battery cell to another battery cell, as illustrated for example in FIG. 46. In some embodiments, cooling plate 4400 is twice as wide as cooling plate 4304. A selected amount of pressure is applied to the battery cells 4200 using two end caps 4302a-b, and banding straps 4402a-c. The selected amount of pressure applied is typically specified by a battery cell manufacturer and is applied in order to increase the cycle life of the battery cells.

As shown in FIG. 44A, four busbars 4406a-d are attached to the battery cells 4200 of battery module 4400. In some embodiments, the busbars 4406 are welded to the positive and negative terminals of battery cells 4200 in the manner illustrated in FIG. 44A. Each of the busbars 4406 has three screws 4408. The two screws closet together are used for attaching their connected battery terminals to a busbar used to connect two battery modules together. The third screw is used for attaching their connected battery terminals to a battery module controller printed circuit board such as, for example, the one shown in FIG. 6.

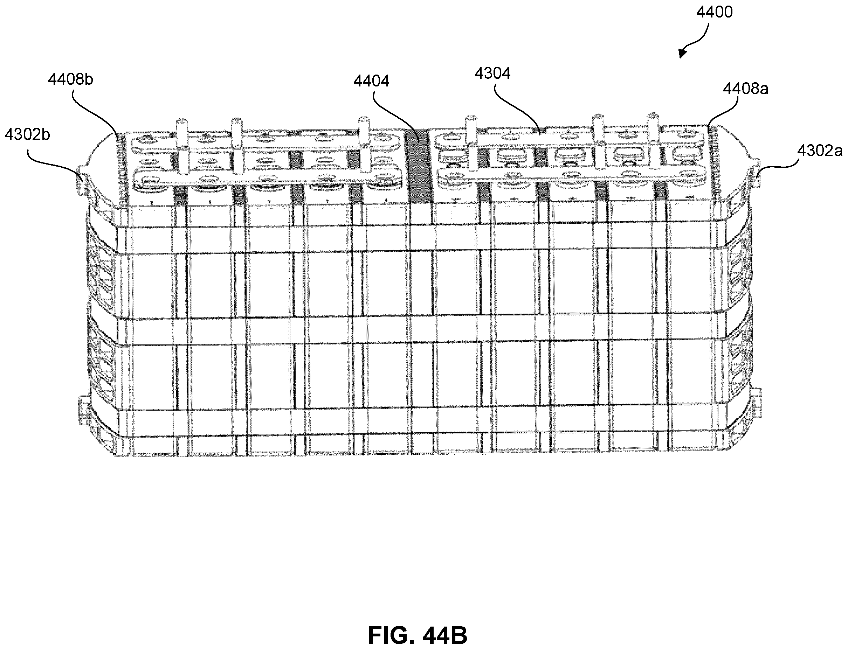

FIG. 44B shows a top, front view of battery module 4400. In FIG. 44B, one can see the difference in the width of cooling plate 4404 and cooling plate 4304. As shown in FIG. 44B, end cap 4302a has a plurality of cooling channels 4408a, and end cap 4302b has a plurality of cooling channels 4408b. The plurality of cooling channels 4408a-b allow air to flow between the battery cells 4200 and the end caps 4302. The cooling channels 4408 also allow water to flow between the battery cells 4200 and the end caps 4302 in the case of a fire to cool the battery cells and prevent a fire from spreading from one battery cell to another battery cell, as illustrated for example in FIG. 46.

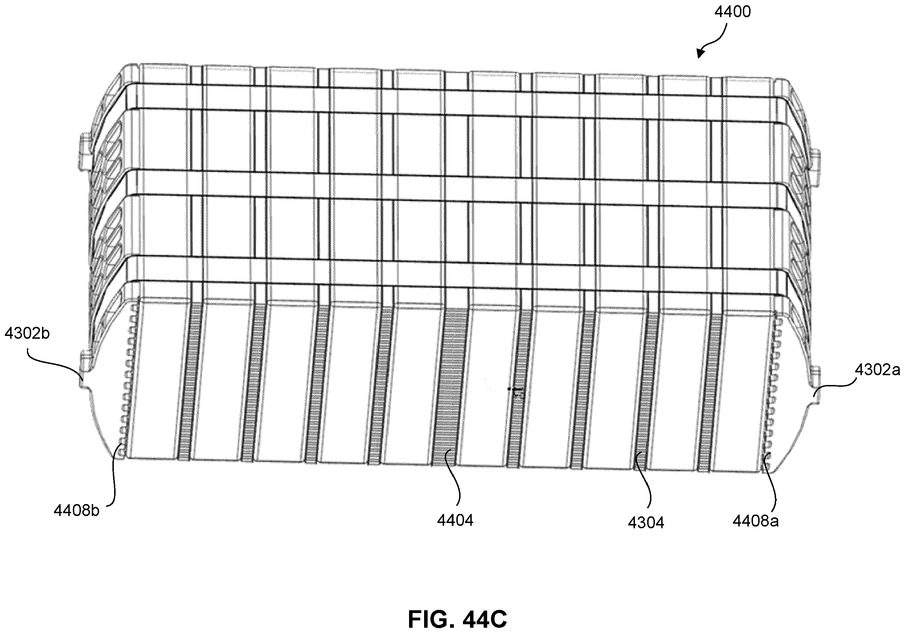

FIG. 44C is a bottom, front view of battery module 4400. In FIG. 44C, one can again see the cooling plates 4404 and 4304, and the cooling channels 4408a-b of end caps 4302a-b. As described herein, in some embodiments of the present disclosure, when there is a fire, a water suppression system sprays water on the batteries to cool the batteries and prevent the spread of the fire from one battery cell to another battery cell. The water sprayed by the fire suppression system flows between the battery cells via the cooling plates and the cooling channels and cools the battery cells.

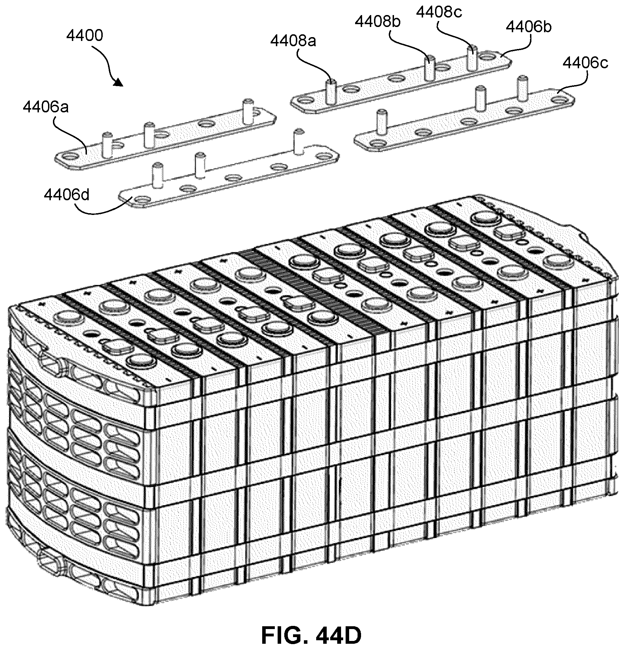

FIG. 44D shows the four busbars 4406a-d before they are attached to battery module 4400. As shown, each busbar 4406 includes three screws 4408a-c. The two screws 4408b and 4408c are used for attaching the connected battery terminals to a busbar used to connect two battery modules together. The third screw 4408a is used for attaching the connected battery terminals to a battery module controller printed circuit board such as, for example, the one shown in FIG. 6.

In some embodiments, the sensors 4116 of the battery cells that are connected in parallel are connected together in series, and the series or string of sensors 4116 is connected to a battery management system printed circuit board such as, for example, printed circuit board 4550 or printed circuit board 4552.

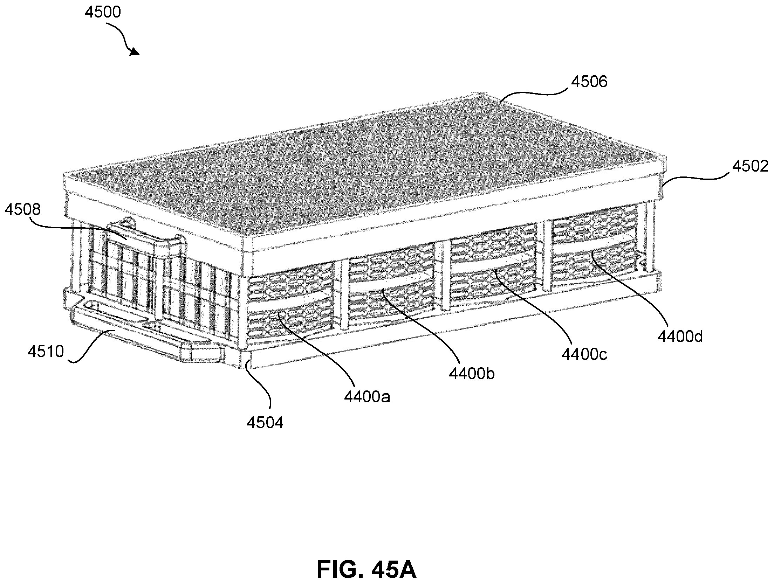

FIGS. 45A-45G illustrate a battery pack 4500 having four battery module 4400a-d. The battery modules 4400 each include ten battery cells 4200, each of which has an integrated pressure sensor 4116 according to an embodiment of the present disclosure. As shown in FIG. 45A, the battery pack 4500 has four battery modules 4400 oriented as shown. The battery modules 4400a-d are held together by a top bracket 4502 and a bottom bracket 4504. In some embodiments, these brackets are made of plastic. The top bracket 4502 has handles 4508. The bottom bracket has handles 4510. A battery pack lid 4506 attaches to the top bracket 4502. In some embodiments, the battery pack lid has holes to allow water to be sprayed on the battery modules 4400a-d in the event of a fire.

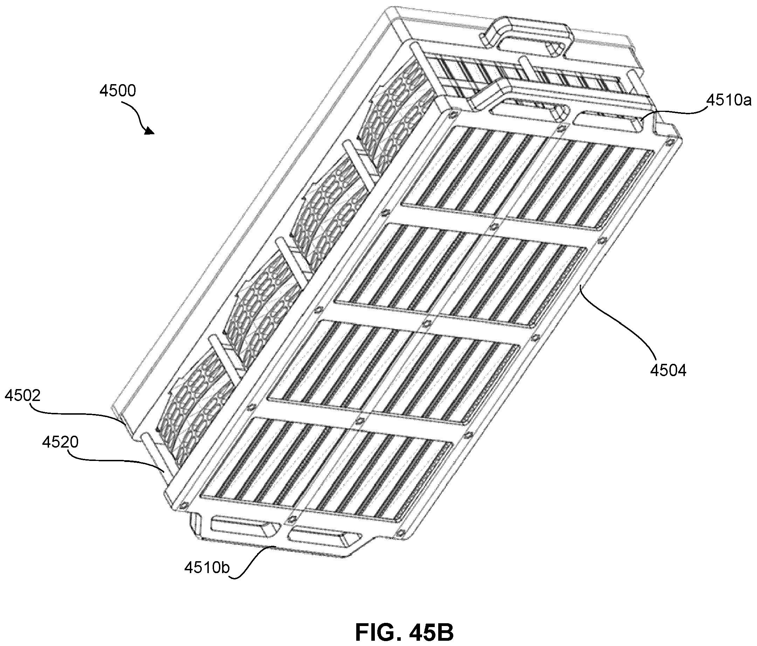

FIG. 45B further illustrates battery pack 4500. In FIG. 44B, one can see the bottom bracket 4504 and its two sets of handles 4510a and 4510b, which can be used for carrying battery pack 4500. The top bracket 4502 and the bottom bracket 4504 are held together by a plurality of spacers 4520, each of which has a bolt passing through it. In some embodiments, the spacers 4520 are made of plastic.

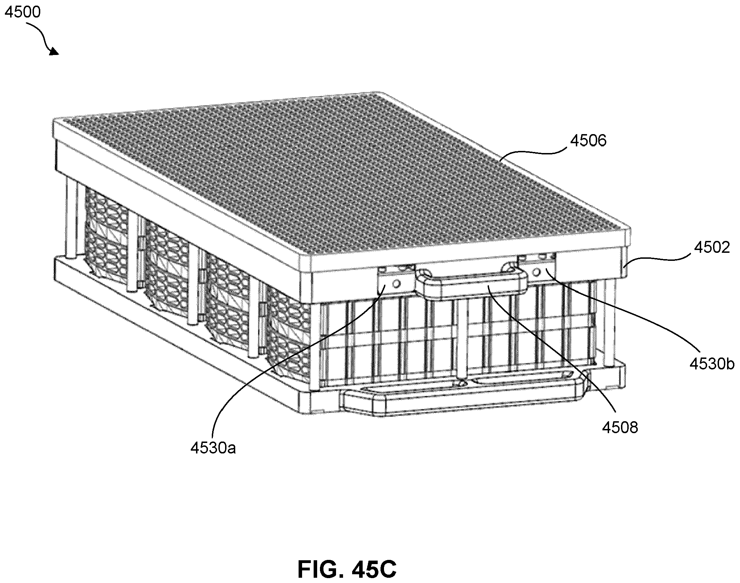

FIG. 45C shows the front and top sides of battery pack 4500. As shown in FIG. 45C, battery pack 4500 includes two busbars 4530a and 4530b for connecting battery pack 4500 to other battery packs according to the present disclosure. The busbars 4530a and 4530b are located on either side of handle 4508 of top bracket 4502. Also shown in FIG. 44C are the holes of battery pack lid 4506.

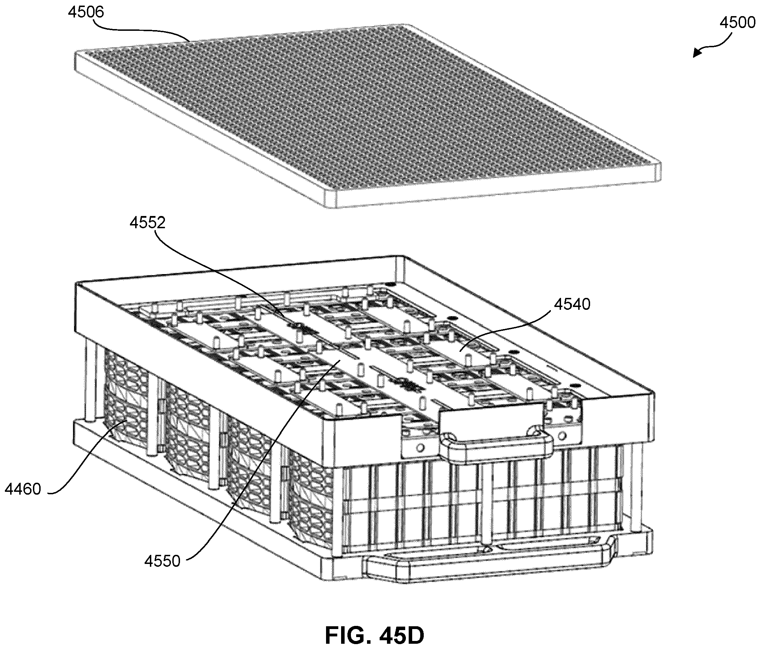

FIG. 45D shows a battery pack 4500 with the lid 4506 removed so that one can see the busbars 4540 that connect the battery modules 4400 together. Also shown in FIG. 44D are the battery management system printed circuit boards 4550 and 4552. The operation of these battery management system printed circuit boards are described above, for example, with reference to FIGS. 6 and 7.

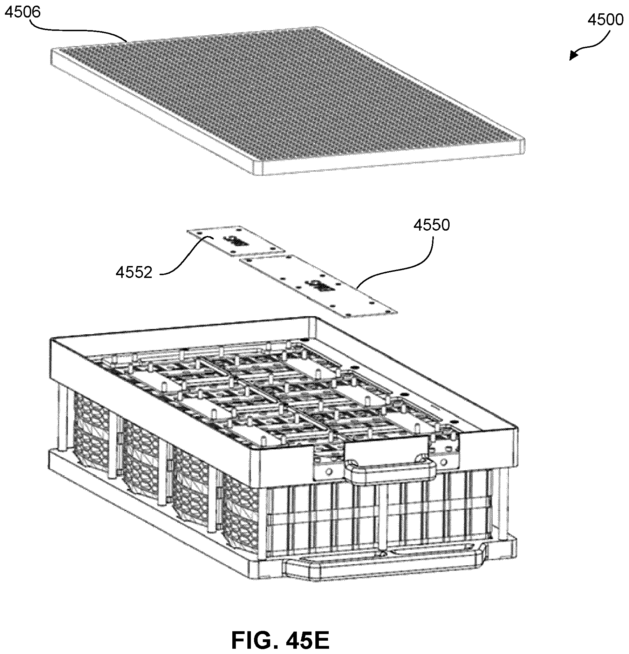

FIG. 45E shows battery pack 4500 with the lid 4506 removed and the two battery management system printed circuit boards 4550 and 4552 removed.

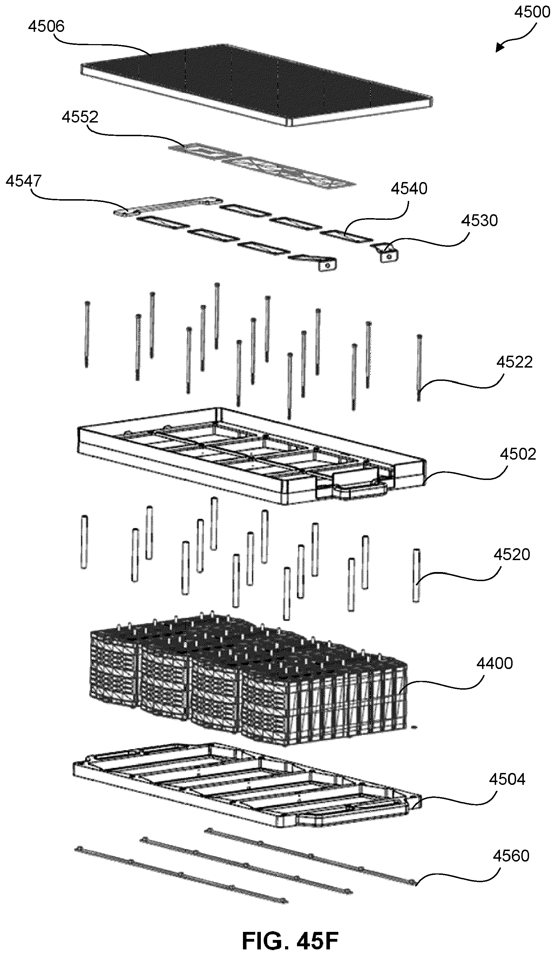

FIG. 45F is an exploded-view of battery pack 4500 so one can more clearly see the various parts that are included in battery pack 4500 according to an embodiment of the present disclosure. As shown in FIG. 45F, in some embodiments it includes four battery modules 4400, a top bracket 4502 and a bottom bracket 4504. The top bracket and bottom bracket are held together by spacers 4520 and bolts 4522. Three reenforcing bars 4560 are used to add strength to battery pack 4500, for example, when it is being carried. As shown in FIG. 44F, battery pack 4500 also includes two busbars 4530, six busbars 4540, and a busbar 4547. It also includes two battery management system printed circuit boards 4550 and 4552, and a battery pack lid 4506. In some embodiments of the present disclosure, battery pack 4500 may include other parts not shown in FIG. 45F, or it may not include some of the parts shown in FIG. 45F. The function of the parts shown in FIG. 45F are described above.

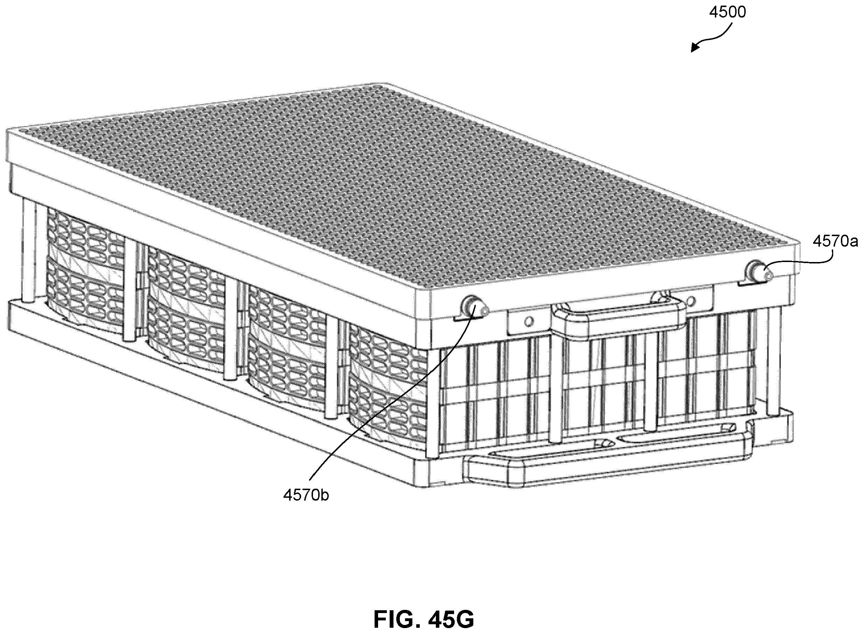

As shown in FIG. 45G, in some embodiments, the battery management system printed circuit boards 4550 and 4552 are connected to external power and a CANBus communication system using connectors 4570a and 4570b.

FIG. 46 illustrates a fire suppression system 4600 for a battery rack having battery packs and battery modules according to embodiments of the present disclosure. As shown in FIG. 46, one or more sprinkler heads 4602 are located inside the battery rack such as battery rack 900 or 1400 described above. In the event of a fire, the sprinkler heads activate and spray water directly inside the battery rack. This water is collected by the top bracket 4502 of battery pack 4500, and the water is then directed to flow down through the cooling plates and cooling channels of battery modules 4400 to extinguish the fire and cool all the battery cells 4200 of the battery modules so the fire does not spread to other modules and so the module having the issue does not catch on fire a second time. If a battery were to vent and possibly catch on fire, the heat and gases would be removed from the battery rack via an exhaust ducting such as exhaust ducting 910 described above.

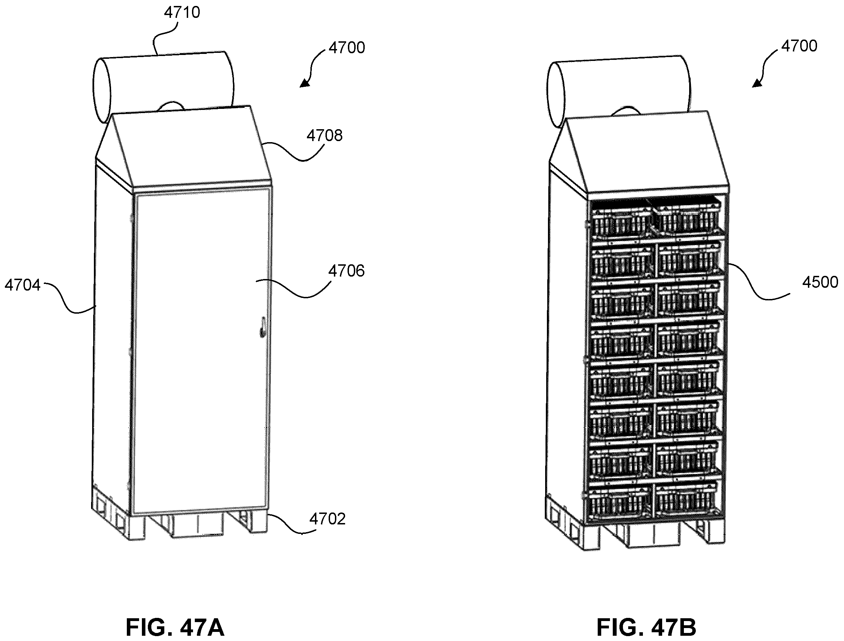

FIGS. 47A-B illustrate a battery rack 4700 having battery packs and battery modules according to an embodiment of the present disclosure. As shown in FIG. 47A, battery rack 4700 has a base 4702, an enclosure 4704 with a door 4706, and a hood 4708. The hood 4708 is connected to a duct 4710 of a ventilation system. In some embodiments, battery rack 4700 houses sixteen battery packs 4500.

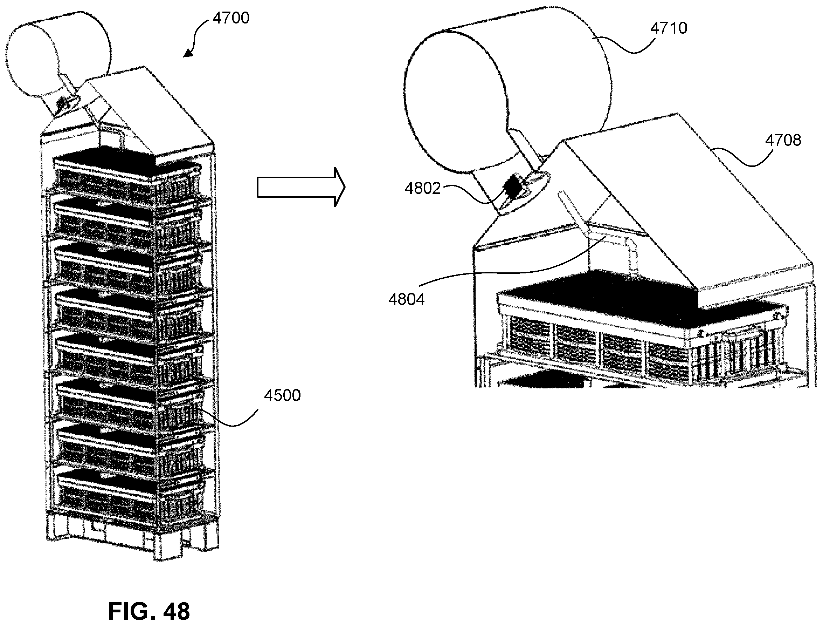

FIG. 48 further illustrates battery rack 4700 according to an embodiment of the present disclosure. As shown in FIG. 48, in some embodiments, a fan 4802 is included in hood 4708. A water fire suppression system 4804 is also included so that in the unlikely event of a fire, water can be sprayed directly on the battery packs 4500 to put out the fire and to cool the battery packs 4500 so that the fire does not spread to other battery packs or restart after the initial fire is extinguished.

As shown in FIG. 48, one or more sprinkler heads are located inside battery rack 4700. In the event of a fire, the sprinkler heads activate and spray water directly inside battery rack 4700. This water is collected by the top tray of the battery packs, and the water is then directed to flow down through the battery modules and over the sides of the battery module to extinguish the fire and cool surrounding battery modules, so the fire does not spread to other modules and so the module having the issue does not catch on fire a second time. If a battery were to vent and possibly catch on fire, the heat and gases would be removed from the battery rack via duct 4710.

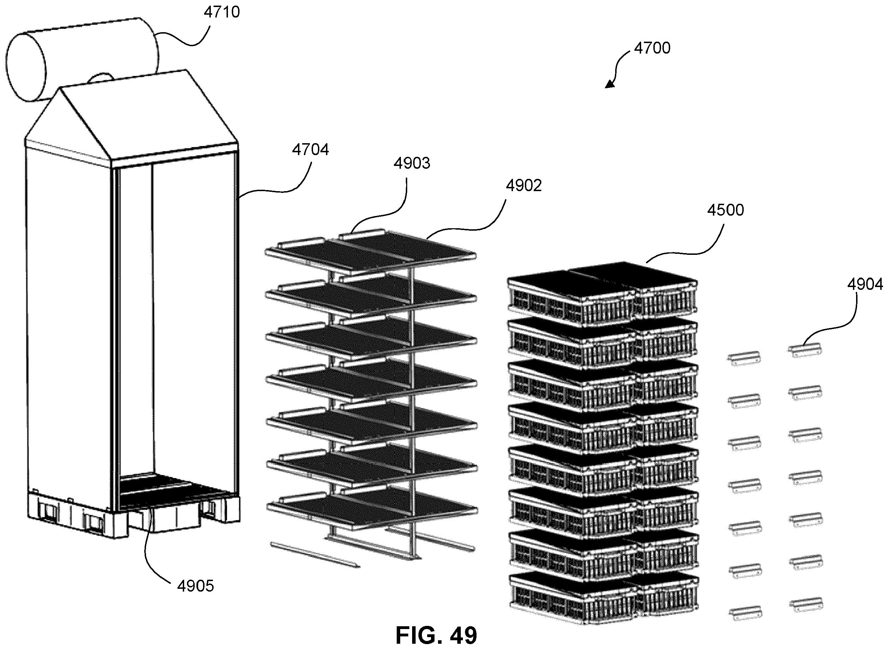

FIG. 49 illustrates an exploded view of battery rack 4700 according to an embodiment of the present disclosure. As shown in FIG. 49, in some embodiments, sixteen battery packs 4500 are housed in battery rack 4700. The battery packs 4500 sit of rack shelves 4902. In some embodiments, the handles 4510 of the battery pack 4500 (see, e.g., FIG. 45B) slide into a retainer 4903 at the back of the shelves 4902, and a bracket 4904 attached to the front of the shelves 4902 holds the battery packs 4500 securely in place. In embodiment, the shelves 4902 are perforated so that water can flow through the shelves to the battery packs below the shelves. In other embodiments, there are no shelves, and the battery packs 4500 rest on support rails.

In some embodiments, as shown in FIG. 49, the bottom of battery enclosure 4704 comprises a screen 4905 that allows air to enter battery rack 4700 unimpeded and exit via duct 4710. Screen 4905 is useful, for example, for keeping out rodents or other small animals.

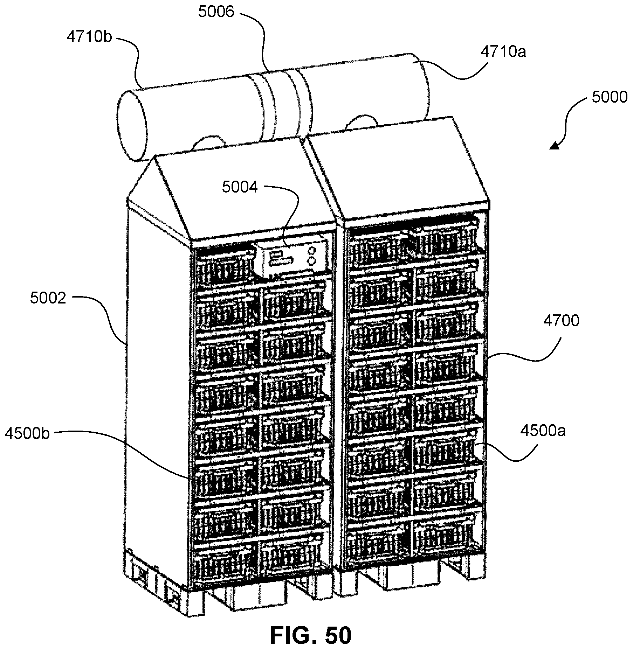

FIG. 50 illustrates a battery system 5000 having battery racks, battery packs, and battery modules according to an embodiment of the present disclosure. As shown in FIG. 50, battery system 5000 includes a battery rack 4700 and a battery rack 5002. Battery rack 4700 includes sixteen battery packs 4500a and a duct 4710a. Battery rack 5002 includes fifteen battery packs 4500b, a battery rack controller 5004 and a duct 4710b. The two ducts 4710a and 4710b are connected by a duct connecter 5006. The operation of battery system 5000 is similar to that already described above for other battery systems according to the present disclosure.

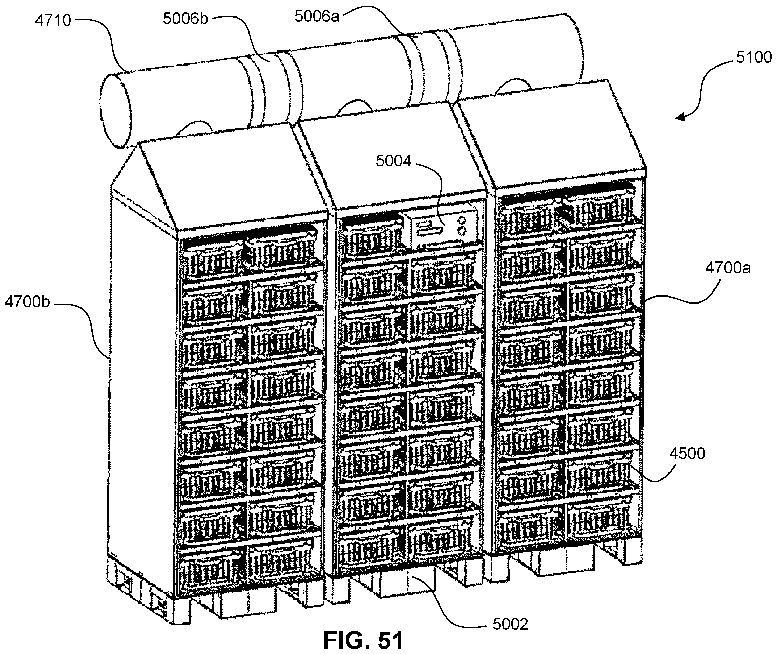

FIG. 51 illustrates a battery system 5100 having battery racks, battery packs, and battery modules according to an embodiment of the present disclosure. As shown in FIG. 51, battery system 5100 includes two battery racks 4700a and 4700b and a battery rack 5002. Battery racks 4700a-b each include sixteen battery packs 4500 and a duct 4710. Battery rack 5002 includes fifteen battery packs 4500, a battery rack controller 5004 and a duct 4710. The three ducts 4710 are connected by two duct connecters 5006a and 5006b. The operation of battery system 5100 is similar to that already described above for other battery systems according to the present disclosure.

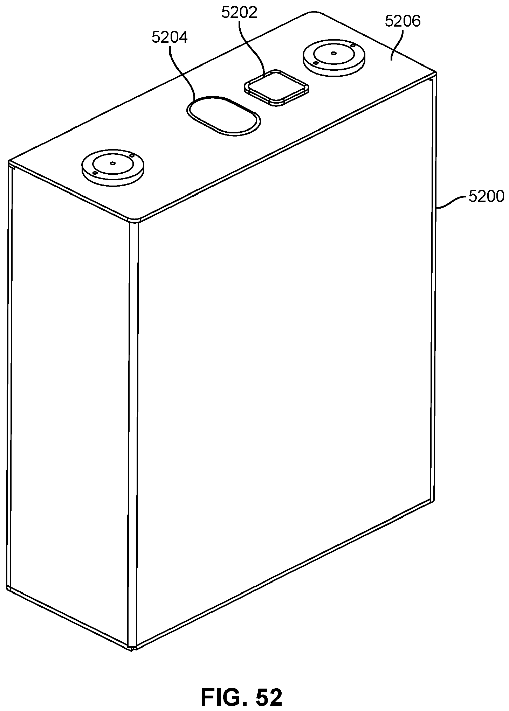

FIG. 52 illustrates a prismatic lithium-ion battery cell 5200 having an integrated pressure sensor 5202 according to an embodiment of the present disclosure. The prismatic lithium-ion battery cell 5200 can include a positive electrode, or cathode, and a negative electrode, or anode, with terminals, a separator to keep the electrodes apart and prevent them from shorting, an electrolyte to carry ions between the electrodes, and/or a case to hold the electrodes in place. In some embodiments, the cathode can be implemented using lithium cobalt oxide (LiCoOz), lithium iron phosphate (LiFePO₄), and/or lithium manganese oxide (LiMn₂O₄) to provide some examples. In some embodiments, the separator represents a porous membrane that prevents the cathode and the anode from coming into contact with each other while allowing the ions to flow between them. In some embodiments, the electrolyte can be implemented using a conductive solution, or gel, that can include, for example, lithium ions, that facilities the movement of the ions between the cathode and the anode during the charging and the discharging of the prismatic lithium-ion battery cell. In some embodiments, the case can be implemented using glass, plastic, and/or metal that is insulated from the electrodes. In these embodiments, the case can be rectangular or square-shaped as illustrated in FIG. 52. In some embodiments, the case of the lithium-ion battery cell 5200 can include a battery cell cap plate 5206. In these embodiments, the integrated pressure sensor 5202 is an integral part of the battery cell cap plate 5206. In some embodiments, battery cell 5200 also includes a rupture disk 5204 in addition to integrated pressure sensor 5202. The rupture disk 5204 allows pressure within the prismatic lithium-ion battery cell 5200 upon to escape reaching a certain, predefined level, referred to as excess pressure. In some embodiments, integrated pressure sensor 5202 also may serve the function of rupture disk 5204 so that a separate rupture disk 5204 is not required and can be eliminated from battery cell 5200.

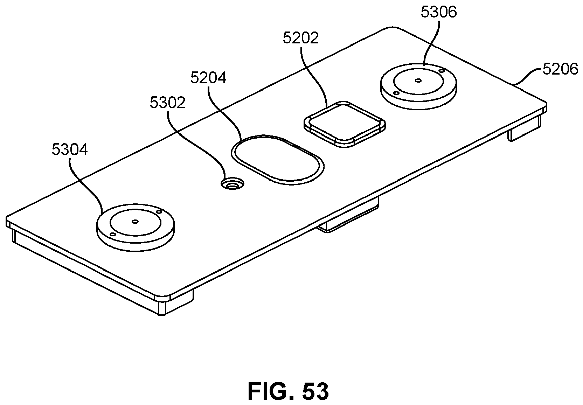

FIG. 53 further illustrates a battery cell cap plate 5206 for prismatic lithium-ion battery cell 5200 having an integrated pressure sensor 5202 according to an embodiment of the present disclosure. In some embodiments, the integrated pressure sensor 5202 can detect pressure within the prismatic lithium-ion battery cell 5200 as described herein. As seen in FIG. 53, in addition to the integrated pressure sensor 5202 and rupture disk 5204, the battery cell cap plate 5206 includes an electrolyte fill hole 5302, a positive battery terminal 5304, and a negative battery terminal 5306. In some embodiments, the battery cell cap plate 5206 can be implemented using metal, plastic, and/or any combination thereof. In some embodiments, the battery cell cap plate 5206 can include a base cell cap plate that is implemented with the metal, plastic, and/or any combination thereof having the integrated pressure sensor 5202, the rupture disk 5204, the electrolyte fill hole 5302, the positive battery terminal 5304, and the negative battery terminal 5306 situated therein. The battery cell cap plate 5206 can be mechanically connected to the case of the lithium-ion battery cell 5200 for example, through welding. In some embodiments, the electrolyte fill hole 5302 allows access to an interior of the case of the prismatic lithium-ion battery cell 5200. In these embodiments, the electrolyte can be injected within the case through the electrolyte fill hole 5302. In these embodiments, an electrolyte fill hole plug (not shown) can be placed into the electrolyte fill hole 5302 to seal the electrolyte fill hole 5302 as described herein. One of the features of integrated pressure sensor 5202 is that it has a low profile and does not interfere with the automated equipment used to manufacture prismatic lithium-ion battery cell 5200. Although the battery cell cap plate 5206 is illustrated as being rectangular in shape in FIG. 53, those skilled in the relevant art(s) will recognize that other shapes are possible depending upon the shape of the prismatic lithium-ion battery cell 5200 without departing from the spirit and scope of present disclosure.

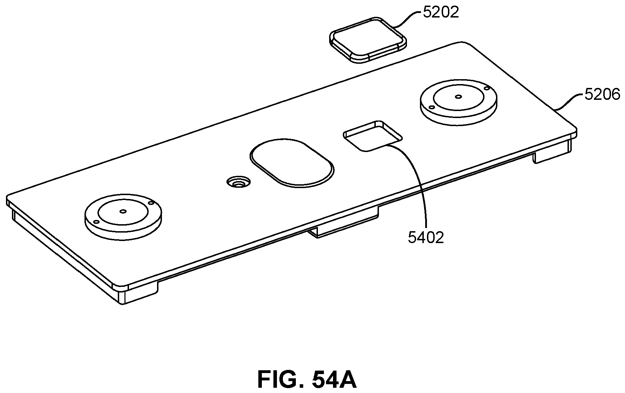

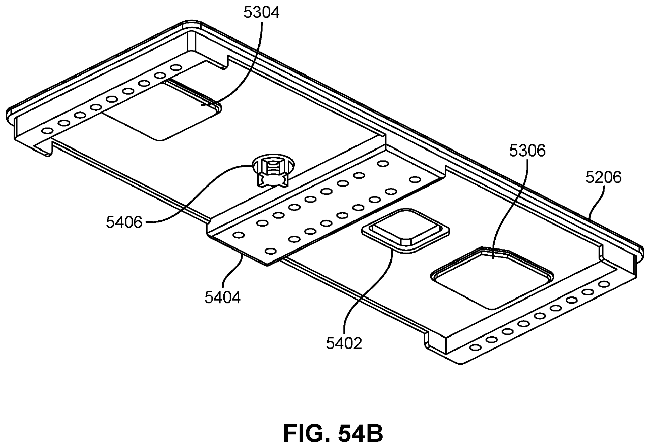

FIG. 54A and FIG. 54B show a top view and a bottom view of an embodiment of battery cell cap plate 5206 having an opening 5402. In some embodiments, the opening 5402 can represent a punched out or drilled opening in the battery cell cap plate 5206. In some embodiments, the opening 5402 can allow pressure inside prismatic lithium-ion battery cell 5200 to be applied to integrated pressure sensor 5202 and/or monitored/measured by the battery management circuit attached to integrated pressure sensor 5202, as described herein above with reference, for example, to FIG. 36. See also U.S. Patent No. 11,901,532, titled "Battery Module and Battery Rack with Enhanced Fire Safety Features, and Applications Thereof," issued February 13, 2024, which is incorporated herein by reference in its entirety, and which further details and describes battery management circuits that can be used with integrated pressure sensor 5202 to monitor and measure the internal pressure of prismatic lithium-ion battery cell 5200. As shown more clearly in FIG. 54B, battery cell cap plate 5206 has a bottom plastic member 5404 attached to the metal top of battery cell cap plate 5206. This plastic member 5404 ensures that the battery electrodes (not shown) do not come into contact with the top metal part of battery cell cap plate 5206. The battery electrodes are attached to the battery terminals 5304 and 5306. As shown in FIG. 54B, in some embodiments, the bottom plastic member 5404 of battery cell cap plate 5206 has a basket 5406 to hold an electrolyte fill hole plug (not shown) that is welded into electrolyte fill hole 5302 typically after degassing of prismatic lithium-ion battery cell 5200, as would be known to persons skilled in the relevant art(s).

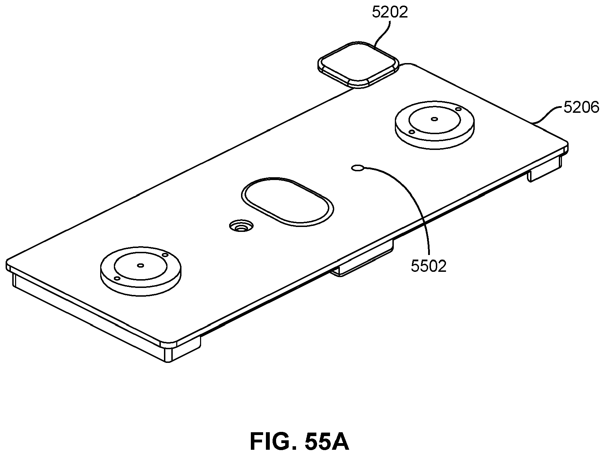

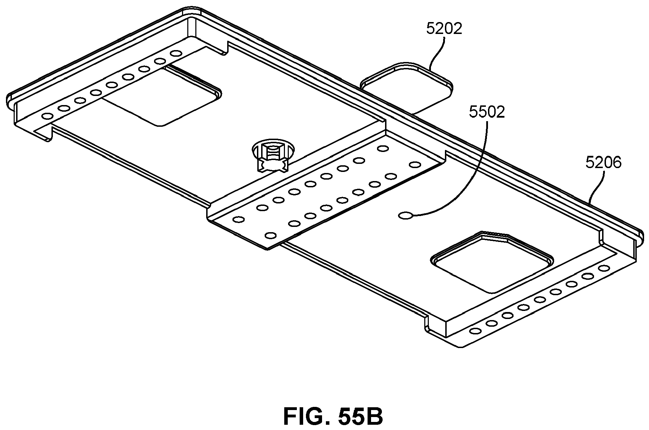

FIGS. 55A and FIG. 55B show a top view and a bottom view of a second embodiment of battery cell cap plate 5206 having an opening 5502. In some embodiments, the punched-out hole 5402 can allow the pressure inside prismatic lithium-ion battery cell 5200 to be applied to integrated pressure sensor 5202 and monitored/measured by the battery management circuit attached to integrated pressure sensor 5202, as described herein above with reference, for example, to FIG. 36 and in U.S. Patent 11,901,532. As shown in FIGS. 55A and 55B, the integrated pressure sensor 5202 of battery cell cap plate 5206 is attached to the top metal part of battery cell cap plate 5206 over the hole 5502, for example, by laser welding.

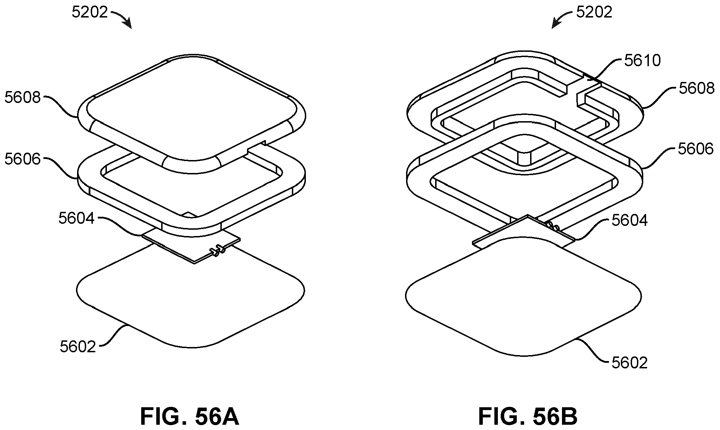

FIGs. 56A and 56B show a top view and a bottom view of integrated pressure sensor 5202 according to an embodiment of the present disclosure. As shown in FIGs. 56A and 56B, integrated pressure sensor 5202 includes a metal foil 5602, a resistive sensor 5604, a protective housing 5606, and a protective cap 5608. In some embodiments, metal foil 5602 can be implemented using metal, such as metal foil, for example, aluminum, about 0.4mm thick, plastic, and/or any combination thereof. Based on the technology, the term "about" or "substantially" can indicate a value of a given quantity that varies within, for example, 1-15% of the value (e.g., ±1%, ±2%, ±5%, ±10%, or ±15% of the value). Other thicknesses can also be used. In some embodiments, the metal foil 5602 stretches in response to pressure within the prismatic lithium-ion battery cell 5200. In these embodiments, the stretching of the metal foil 5602 can be detected by the integrated pressure sensor 5202, for example, the resistive sensor 5604. In some embodiments, as an alternative to attaching the metal foil 5602 to the battery cell cap plate 5206 over a hole in battery cell cap plate 5206, a counter-sink can be drilled into the bottom of the metal top of battery cell cap plate 5206 to form an area or region on the top of the metal top of battery cell cap plate 5206 that has a thin portion of metal that is similar or equivalent to metal foil 5602. The resistive sensor 5604 can then be attached to this thin portion of metal to form an equivalent of integrated pressure sensor 5202 that monitors and detects changes in the integral pressure of prismatic lithium-ion battery cell 5200. Although the metal foil 5602 is illustrated as being square-like in FIGs. 56A and 56B, those skilled in the relevant art(s) will recognize that other shapes for the metal foil 5602 are possible, such as circles, rectangles, polygons, or the like to provide examples, without departing from the spirit and scope of the present disclosure. Generally, the shape of the metal foil 5602 should be sufficient to cover the opening 5402 and/or opening 5502 as described herein. In some embodiments, the overlap of the metal foil 5602 and the opening 5402 and/or opening 5502 should be sufficient to allow the metal foil 5602 to be mechanically connected, for example, welded to the battery cell cap plate 5206. And, in some embodiments, the metal foil 5602 should have sufficient surface area to accommodate the resistive sensor 5604.

In some embodiments, the resistive sensor 5604 can be mechanically connected to the metal foil 5602, for example, glued. In some embodiments, resistive sensor 5604 can be implemented as a stain gauge. In some embodiments, the resistance of the stain gauge is related to the stretching of the metal foil 5602. In these embodiments, the resistance of the stain gauge can increase as the metal foil 5602 expands and/or can decrease as the metal foil 5602 compresses. This can occur, for example, when the resistive sensor 5604 is placed above the metal foil 5602. Alternatively, the resistance of the stain gauge can decrease as the metal foil 5602 expands and/or can increase as the metal foil 5602 compresses. This can occur, for example, when the resistive sensor 5604 is placed below the metal foil 5602. The resistive value of the strain gauge is selected to match the driving current, voltage amplifier, and analog-to-digital converter resolution (e.g., how many bits it has) of the battery management circuit attached to integrated pressure sensor 5202. In some embodiments, the resistive sensor 5604 may have a resistance of 120 Ohms, 350 Ohms, 700 Ohms or another value. In some embodiments, resistive sensor 5604 may be more than one strain gauge attached to metal foil 5602, and these more than one strain gauges may be connected in series, in parallel, or both series and parallel. These various parameters are chosen such that integrated pressure sensor 5202 and its associated battery management circuit produce a value that is used by the battery management system to disconnect a battery cell having an issue before it vents due to elevated internal pressure of the battery cell. In some embodiments, the resistive sensor 5604 can be connected to the associated battery management circuit by electrical conductors, for example, wires, attached to resistive sensor 5604. Alternatively, in some embodiments, a capacitive sensor can be used in place of the resistive sensor 5604. Although the resistive sensor 5604 is illustrated as being square-like in FIGs. 56A and 56B, those skilled in the relevant art(s) will recognize that other shapes for the metal foil 5602 are possible, such as circle-like, rectangle-like, polygon-like, or the like to provide examples, without departing from the spirit and scope of the present disclosure.

As shown in FIGs. 56A and 56B, the protective housing 5606 can surround the resistive sensor 5604. In some embodiments, the protective housing 5606 can be sized to match the outer edges of metal foil 5602 and to allow the resistive sensor 5604 to be placed within an opening of protective housing 5606. In some embodiments, the protective housing 5606 can be mechanically connected to the metal foil 5602. Preferably, the protective housing 5606 is implemented using a metal to allow heat to be sinked from the metal foil 5602 as the metal foil 5602 is being mechanically connected, for example, welded, to the battery cell cap plate 5206. However, it is possible that the protective housing 5606 can be implemented using plastic or any other suitable material as will be recognized by those skilled in the relevant art(s) without departing from the spirit and scope of the present disclosure. Although the protective housing 5606 is illustrated as being ring-like in FIGs. 56A and 56B, those skilled in the relevant art(s) will recognize that other shapes for the metal foil 5602 are possible, such as open circles, open rectangles, open polygons, or the like to provide examples, without departing from the spirit and scope of the present disclosure.

The protective cap 5608 is to provide a protective housing for the resistive sensor 5604. In some embodiments, the protective cap 5608 can be implemented using metal, plastic, or any other suitable material as will be recognized by those skilled in the relevant art(s) without departing from the spirit and scope of the present disclosure. In some embodiments, the protective cap 5608 can include a channel 5610 to accommodate the electrical conductors. In some embodiments, the protective housing 5606 and the protective cap 5608 can form a protective housing to protect the resistive sensor 5604 from various environmental factors. In some embodiments, the protective cap 5608 can be mechanically connected to the protective housing 5606. In these embodiments, the protective cap 5608 can be temporarily connected to the protective housing 5606, for example, press fitted, or permanently connected to the protective housing 5606, for example, glued. Although the protective cap 5608 is illustrated as being square-like in FIGs. 56A and 56B, those skilled in the relevant art(s) will recognize that other shapes for the metal foil 5602 are possible, such as circle-like, rectangle-like, polygon-like, or the like to provide examples, without departing from the spirit and scope of the present disclosure. In some embodiments, as shown in FIG. 56B, the protective cap 5608 can include a channel 5610 to accommodate the electrical conductors. In these embodiments, the channel 5610 can be implemented as a notch to accommodate the electrical conductors as illustrated in FIGs 56A and 56B. Alternatively, or in addition to, the channel 5610 can be implemented as one or more holes within the protective cap 5608 to accommodate the electrical conductors. In some embodiments, the protective housing 5606 and the protective cap 5608 can be integrated into a single unified housing to cover the resistive sensor 5604. In these embodiments, this single unified housing operates in a substantially similar manner as the protective housing 5606 and the protective cap 5608 as described herein. In these embodiments, this single unified housing can be implemented as a single piece of metal and/or plastic. In these embodiments, this single unified housing can include the channel 5610 at any suitable location to accommodate the electrical conductors.

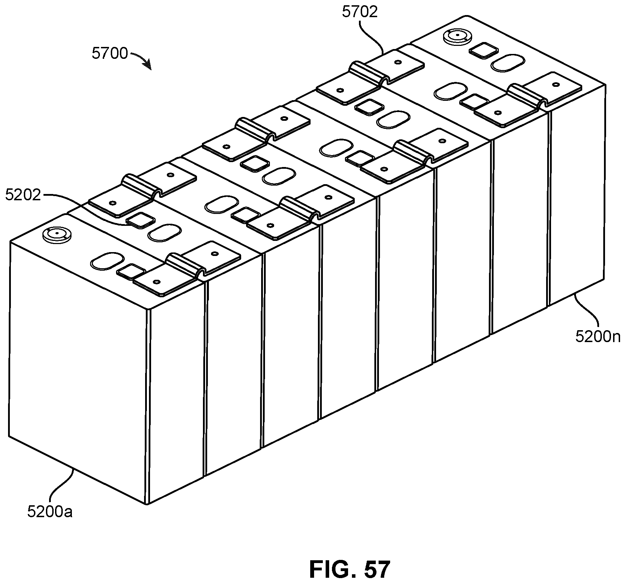

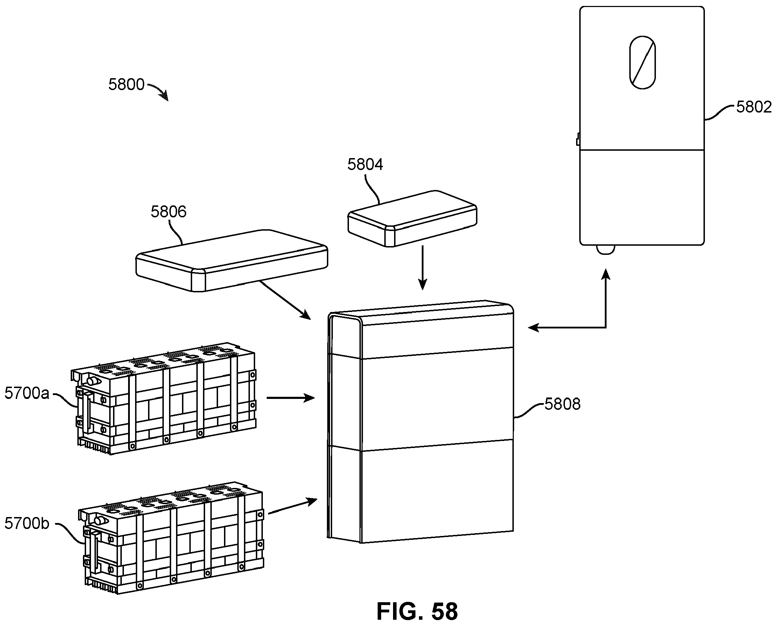

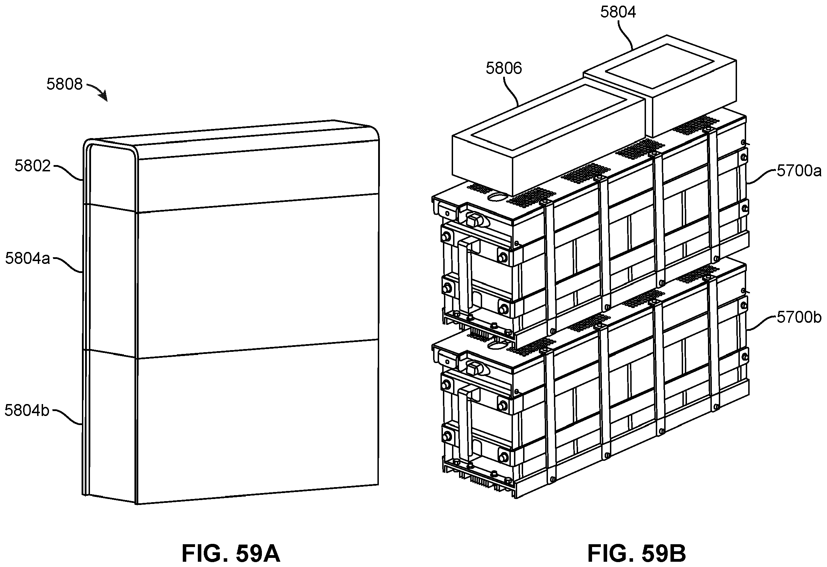

FIG. 57 illustrates an example eight-cell battery module 5700 having integrated pressure sensors 5202 according to an embodiment of the present disclosure. As shown in FIG. 57, each of the eight battery cells 5200a-n has its own integrated pressure sensor 5202. The eight battery cells 5200a-n are connected together by busbars 5702. In some embodiments, battery module 5700 has other parts to hold it together, as shown for example in FIGS. 58 and 59. In other embodiments of the present disclosure, battery modules according to the present disclosure may have more than eight battery cells or less than eight battery cells.

FIG. 58 illustrates an example residential battery energy storage system (BESS) 5800 having battery modules 5700a and 5700b with integrated pressure sensors 5202 according to an embodiment of the present disclosure. As shown in FIG. 58, BESS unit 5800 includes a bi-directional power converter 5802, a communication controller 5804, a battery management system (BMS) 5806, two battery modules 5700a and 5700b, and an enclosure 5808. In some embodiments, enclosure 5808 is a modular enclosure comprising two battery module sections and one BMS-Communications section.

In operation, BESS 5800 can both charge and discharge the battery modules 5700a and 5700b. In some embodiments, residential BESS units such as BESS 5800 typically range from about 5-10 kW and have a battery storage capacity of about 14 kWh. BESS 5800 can operate alone as a pure battery energy storage unit or it can be used to integrate solar panels. In some embodiments, BESS 5800 provides back-up power when the utility grid is not available.

FIGS. 59A-B further illustrate residential battery energy storage system (BESS) 5800 having battery modules 5700a and 5700b with integrated pressure sensors 5202 according to an embodiment of the present disclosure. FIG. 59A shows enclosure 5808. In FIG. 59A, enclosure 5808 has a BMS-communications section 5802 and two battery modules sections 5804a and 5804b. BMS-communications section 5802 houses BMS 5806 and communications controller 5804. Battery module section 5804a houses battery module 5700a. Battery module section 5804b houses battery module 5700b.

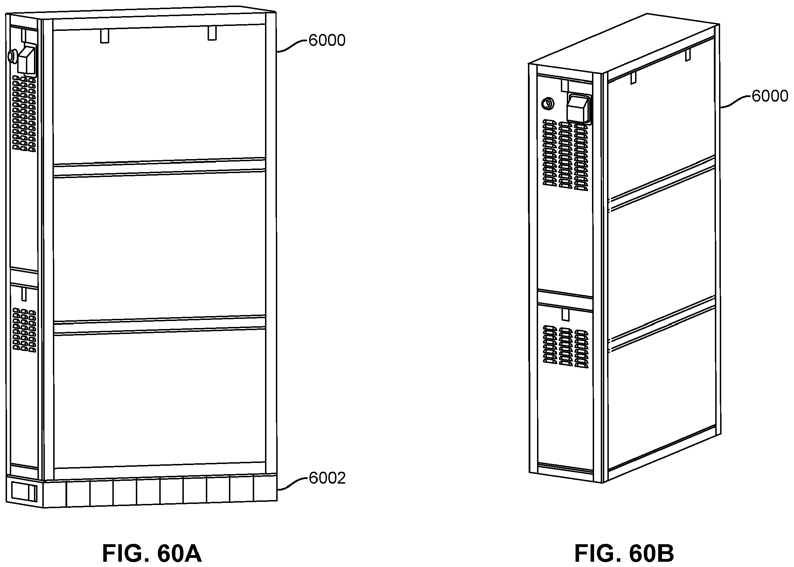

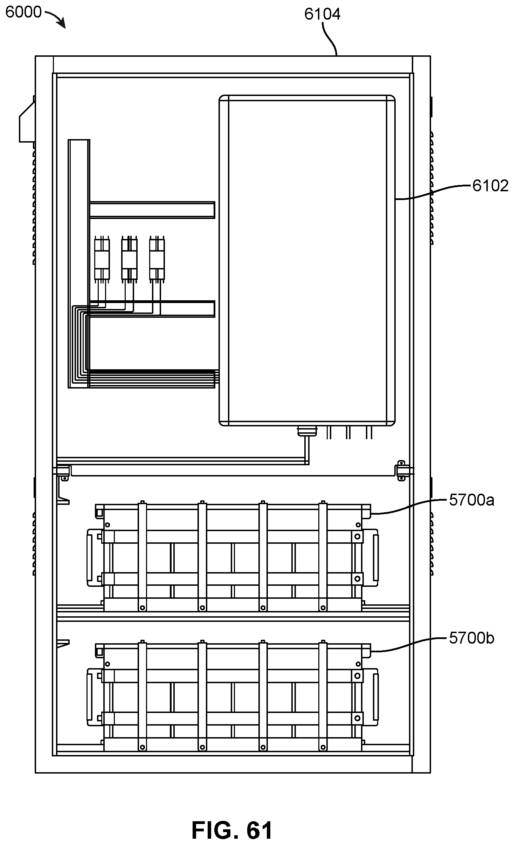

FIGS 60A and 60B illustrate an example all-in-one residential BESS unit 6000. In some embodiments, residential BESS 6000 sit on a base 6002, which makes it easier to move. As shown in more detail in FIG. 61, in some embodiments, residential BESS unit 6000 includes a bi-directional power converter 6102, a communication controller 5804 (not shown), a battery management system (BMS) 5806 (not shown), two battery modules 5700a and 5700b, and an enclosure 6104. Power converter 6102 is a bi-directional power converter. All-in-one residential BESS unit 6000 operates similar to residential BESS 5800.

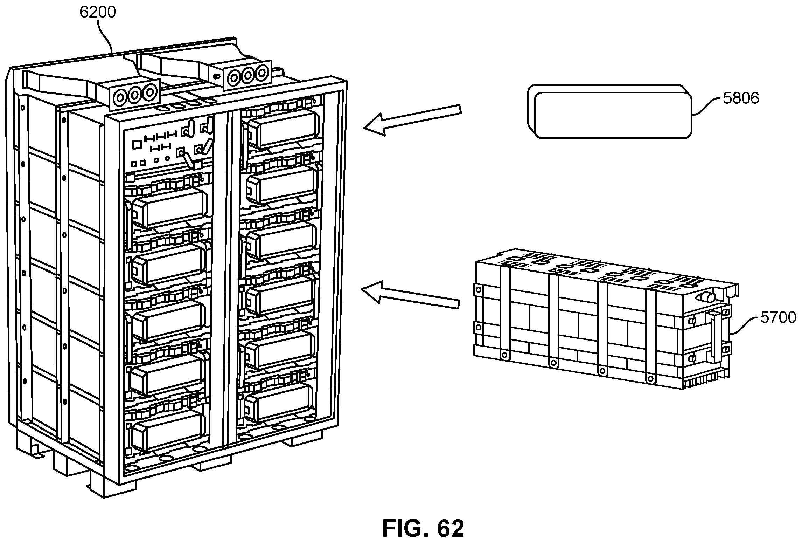

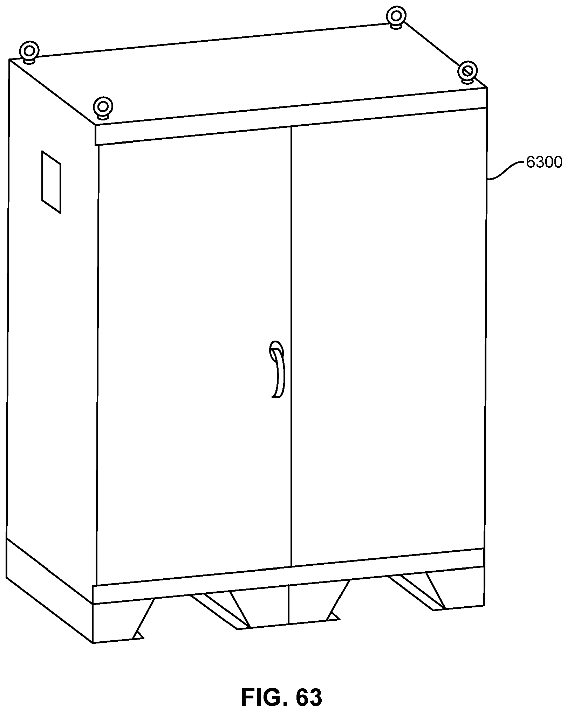

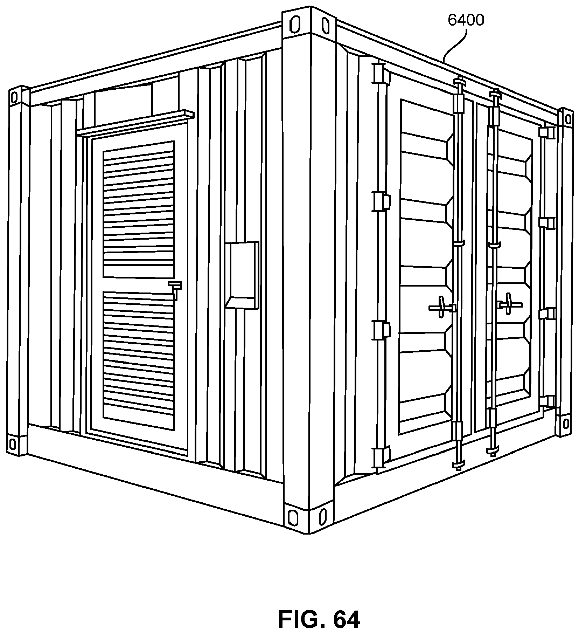

FIG. 62 illustrates a battery energy storage system (BESS) battery rack 6200 having battery modules 5700 with integrated pressure sensors 5202 and a BMS 5806 according to an embodiment of the present disclosure. BESS battery rack 6200 is used to build larger energy storage systems suitable for commercial & industrial (C&I) applications and utility-scale applications. Battery racks 6200 can be enclosed or housed, for example, in building or in modified shipping containers. They can also be housed in specially designed enclosures of container-like structures. See for example FIGS. 15-17 above, and FIGS. 63 and 64 below.

FIGS. 63 and 64 illustrate enclosures for battery modules and battery racks according to embodiments of the present disclosure. FIG. 63 illustrates a BESS battery rack enclosure 6300. Enclosure 6300 is suitable for indoor applications and can house a plurality of battery modules 5700 with integrated pressure sensors according to an embodiment of the present disclosure in an example battery rack enclosure. FIG. 64 illustrates a customized containerized BESS 6400 for housing one or more battery rack 6200 with battery modules 5700 that include integrated pressure sensors according to an embodiment of the present disclosure. These enclosures are illustrative and other enclosures and designs may be used.

In some embodiments, a battery module may include a plurality of battery cells, wherein at least one of the battery cells is in contact with a moveable plate; and a sensor coupled to the movable plate that is configured to detect swelling of at least one of the plurality of battery cells.

In some further embodiments, the sensor comprises a first flexible section having a circular or oval shape, and wherein a first strain gauge is attached to the first flexible section.

In some further embodiments, the first flexible section comprises at least one of metal or plastic.

In some further embodiments, the sensor comprises a second flexible section, wherein a second strain gauge is attached to the second flexible section, and wherein the first strain gauge and the second strain gauge are electrically connected in series.

In some further embodiments, the battery module may include a tray, in contact with the battery module, configured to collect water and direct the water toward at least one of the plurality of plates.

In some further embodiments, the battery module may include an internal plate, in contact with one of the plurality of battery cells and extending at least partially into the battery module, wherein the tray is configured to direct water to the internal plate to cool the battery module.

In some further embodiments, the battery module may include a controller configured to receive an output signal from the sensor and to generate a control signal, responsive to the output signal from the sensor, wherein the control signal is configured to cause the battery module halt charging and discharging of the at least one of the plurality of battery cells of the battery module.

In some further embodiments, the battery module may include a controller configured to receive an output signal from the sensor and to generate a control signal, responsive to the output signal from the sensor, wherein the control signal is configured to cause the battery module to be electrically disconnected from an electrical bus.

In some further embodiments, the controller comprises a power supply configured to generate an electrical output having an AC frequency greater than 40,000 Hz and less than 280,000 Hz, and wherein the electrical output from the power supply is provided to a balancing circuit configured to balance electrical input to at least two battery cells of the plurality of battery cells.

In some further embodiments, the power supply is coupled to the plurality of battery cells using at least one isolation transformer.

In another embodiment, the battery module includes a plurality of battery assemblies, wherein each battery assembly includes a first battery cell and a second battery cell; an internal plate between the first battery cell and the second battery cell; a first side plate in contact with the first battery cell; a second side plate in contact with the second battery cell; and a sensor coupled to at least one of the first side plate or the second side plate, wherein the sensor is configured to detect movement of at least one of the first side plate or the second side plate, wherein the movement is due to swelling of at least one of the first battery cell or the second battery cell.

In some further embodiments, the sensor comprises a first flexible section having a circular or oval shape, and wherein a first strain gauge is attached to the first flexible section.

In some further embodiments, the first flexible section comprises metal or plastic.

In some further embodiments, the sensor comprises a second flexible section, wherein a second strain gauge is attached to the second flexible section, and wherein the first strain gauge and the second strain gauge are electrically connected in series.

In some further embodiments, the battery module may include a tray, in contact with the battery module, configured to collect water and to direct the water to the first side plate and the second side plate.

In some further embodiments, the battery module may include a tray, in contact with the battery module, configured to collect water and to direct water to the internal plate.

In some further embodiments, the battery module may include a controller configured to receive at least one output signal from the sensor and to generate a control signal, in response to the at least one output signal, wherein the control signal is configured to cause the battery module to halt charging and discharging of at least one of the plurality of battery cells of the battery module.

In some further embodiments, the battery module may include a controller configured to receive at least one output signal from the sensor and to generate a control signal, in response to the at least one output signal, wherein the control signal is configured to cause the battery module to be electrically disconnected from an electrical bus.

In some further embodiments, the controller comprises a power supply configured to generate an electrical output having an AC frequency greater than 40,000 Hertz and less than 280,000 Hertz, and wherein the electrical output from the power supply is provided to a balancing circuit configured to balance electrical input to at least two battery cells of the plurality the battery cells of the plurality of battery assemblies.

In some further embodiments, the power supply is coupled to the battery cells of the battery assemblies using at least one isolation transformer.

In some embodiments, a battery rack, includes a plurality of battery modules, wherein each battery module includes a plurality of battery cells, each battery cell being in contact with a side plate; a sensor, coupled to the side plate, and configured to detect movement of the side plate due to swelling of a battery cell, and a battery module controller configured to receive an output signal from the sensor and to generate a control signal, in response to the output signal, wherein the control signal is configured to cause the battery module to halt charging and discharging of the plurality of battery cells of the battery module; and a battery rack controller having a contactor, wherein the battery rack controller receives the control signal and opens the contactor sufficiently to halt charging and discharging of the battery module having the battery module controller that generated the control signal.

In some further embodiments, the battery rack or any of the battery modules may further include a tray, in contact with the battery module, configured to collect water and to direct water to the side plates of the battery module.

In some further embodiments, the sensor comprises a flexible section having a circular or oval shape, and wherein a strain gauge is attached to the flexible section.

In some further embodiments, the flexible section comprises at least one of metal or plastic.

In some further embodiments, the battery module controller comprises a power supply configured to generate an electrical output, and wherein the electrical output from the power supply is provided to a balancing circuit configured to balance electrical input to at least two of the battery cells of the battery module.

In some further embodiments, the power supply is coupled to the battery cells of the battery module using at least one isolation transformer.

In some further embodiments, the battery rack may include a water sprinkler system configured to spray water on the battery modules.

In some further embodiments, the water sprinkler system is configured to connect to a fire system of a building.

In some further embodiments, the water sprinkler system is configured to connect to a pipe configured to allow water to be pumped into the battery rack.

In some further embodiments, the battery rack may include a hood connected to exhaust ducting, wherein the exhaust ducting is configured to remove gases released by a battery cell of the battery rack.

In some further embodiments, the battery rack may further include a first housing comprising the battery rack controller and a first plurality of battery modules, and a second housing, coupled to the first housing, comprising a second plurality of battery modules.

In some further embodiments, the battery rack may include a third housing, coupled to the first housing, comprising a third plurality of battery modules.

In some further embodiments, a battery rack may include a plurality of battery modules, wherein each battery module includes a plurality of battery cells, each battery cell being in contact with a side plate; a sensor, coupled to the side plate, and configured detect movement of the side plate due to swelling of a battery cell, a tray, in contact with the battery module, configured to collect water and to direct the water to the side plates of the battery module, and a battery module controller configured to receive an output signal from the sensor and to generate a control signal, in response to the output signal, wherein the control signal is configured to cause the battery module to halt charging and discharging of the battery module; a battery rack controller comprising a contactor, wherein the battery rack controller receives the control signal and opens the contactor sufficiently to halt charging and discharging of the battery module having the battery module controller that generated the control signal; and a water sprinkler system configured to spray water on the battery modules.

In some further embodiments, the water sprinkler system is configured to connect to a fire system of a building.

In some further embodiments, the water sprinkler system is configured to connect to a pipe that is configured to allow water to be pumped into the battery rack.

In some further embodiments, the battery rack further includes a hood connected to exhaust ducting, wherein the exhaust ducting is configured to remove gases released by a battery cell of the battery rack.

In some further embodiments, the sensor comprises a flexible section having a circular or oval shape, and wherein a strain gauge is attached to the flexible section.

In some further embodiments, the flexible section comprises at least one of metal or plastic.

In some further embodiments, the battery module controller includes a power supply configured to generate an electrical output, and wherein the electrical output from the power supply is provided to a balancing circuit configured to balance electrical input to at least two of the battery cells of the battery module.

In some further embodiments, the power supply is coupled to the battery cells of the battery module using at least one isolation transformer.

In some embodiments, a battery module may include a sensor configured to detect swelling of a battery cell.

In some further embodiments, an output of the sensor is configured to halt operation of a battery system containing the battery module.

In some further embodiments, an output of the sensor is configured to halt charging and discharging of the battery module.

In some further embodiments, the battery module may include a cell balancing circuit that uses an AC-to-AC power supply to provide audio frequency power for balancing battery cells of the battery module.

In some further embodiments, the AC-to-AC power supply provides an electrical output having an AC frequency greater than 5,000 Hz.

In some further embodiments, the AC-to-AC power supply provides an electrical power having an AC frequency greater than 5,000 Hz but less than 20,000 Hz.

In some further embodiments, the battery module may include an applied pressure sensing assembly for detecting the swelling of a battery cell of the battery module.

In some further embodiments, the battery module is further configured to allow water to flow through tubing that is configured to direct the water to predetermined locations within the battery rack.

In some further embodiments, the fire-suppression system configured to connect to a fire system of a building.

In some further embodiments, the battery module or the fire-suppression system is further configured to connect to a pipe configured to allow water to be pumped into the battery rack.

In some further embodiments, the sensor may be further configured to detect movement of a plate in contact with the battery module.

In some further embodiments, the sensor may include a metal band with at least one strain gauge attached to the metal band.

In some further embodiments, the sensor may be made of plastic and has at least one strain gauge attached to the plastic.

In some further embodiments, the sensor may include a flexible section having a circular or oval shape, and wherein a strain gauge is attached to the flexible section.

In some further embodiments, the battery module may further include a tray in contact with the battery module configured to direct water to a plate of the battery module.

In some embodiments, a battery module may include a sensor configured to detect movement of a plate in contact with the battery module, wherein the movement is caused by expansion of a battery cell within the battery module.

In some further embodiments, the sensor may include a load cell.

In some further embodiments, the sensor may include a metal band with at least one strain gauge attached to the metal band.

In some further embodiments, the sensor may be made of plastic and has at least one strain gauge attached to the plastic.

In some further embodiments, the sensor may include a flexible section having a circular or oval shape, and wherein a strain gauge is attached to the flexible section.

In another embodiment, an applied pressure assembly for a battery module, may include a spring for applying a force; a bolt in contact with the spring; a nut coupled to the bolt; and a metal bracket that transfers force from the spring to a pressure plate of a battery module.

In some further embodiments, the spring is one of a leaf spring and a die spring.

In some further embodiments, the applied pressure assembly may include a sensor that detects swelling of a battery cell of the battery module.

In some embodiments, a battery rack may be configured to house a battery module and to allow water to be sprayed onto a plurality of battery cells of the battery module from a fire-suppression system.

In some embodiments, a battery cell includes a sensor that detects an increase in the internal pressure of the battery cell. In some embodiments, the sensor is a part of the cap plate of the battery cell. In some embodiments, the sensor is a resistive sensor. In some embodiments, the sensor includes a strain gauge. In some embodiments, the strain gauge is attached to a metal foil attached to a cap plate of the battery cell.

Those skilled in the relevant art(s) will readily appreciate that various adaptations and modifications of the exemplary embodiments described above can be achieved without departing from the scope and spirit of the present disclosure. Therefore, it is to be understood that, within the scope of the appended claims, the teachings of the disclosure may be practiced other than as specifically described herein.

The invention may further be described or defined in accordance with the following clauses:
1. A battery cell cap plate for a prismatic lithium-ion battery cell, the battery cell cap plate comprising:
   a base cell cap plate;
   a positive battery terminal, situated within the base cell cap plate, configured to be coupled to a positive electrode of the prismatic lithium-ion battery cell;
   an integrated pressure sensor, situated onto the base cell cap plate, configured to detect pressure within the prismatic lithium-ion battery cell; and
   a negative battery terminal situated within the base cell cap plate configured to be coupled to a negative electrode of the prismatic lithium-ion battery cell.
2. The battery cell cap plate of clause 1, wherein the base cell cap plate comprises an opening, and
   wherein the integrated pressure sensor is configured to detect the pressure within the opening.
3. The battery cell cap plate of clause 1, wherein the integrated sensor comprises:
   a metal foil configured to expand or to contract in response to the pressure; and
   a resistive sensor configured to detect the expansion or the contraction of the metal foil to detect the pressure.
4. The battery cell cap plate of clause 3, wherein the integrated sensor further comprises:
   a protective housing, connected to the metal foil, configured to surround the resistive sensor; and
   a protective cap configured to be attached to the protective housing to cover the resistive sensor.
5. The battery cell cap plate of clause 4, wherein the protective housing and the protective housing are implemented as a single piece of metal or plastic.
6. The battery cell cap plate of clause 1, further comprising a plastic member situated on a bottom of the base cell cap plate, the plastic member being configured to prevent the positive electrode from contacting the negative electrode.
7. The battery cell cap plate of clause 1, further comprising an electrolyte fill hole configured to allow access to an interior of a case of the prismatic lithium-ion battery cell to fill the interior with an electrolyte.
8. The battery cell cap plate of clause 1, further comprising a rupture disk, situated within the base cell cap plate, configured to allow the pressure to escape.
9. A battery cell, comprising:
   a positive electrode;
   a negative electrode;
   an electrolyte to configured carry ions between the positive electrode and the negative electrode;
   a case having a battery cell cap plate, the battery cell cap plate comprising:
      a positive battery terminal configured to be coupled to the positive electrode;
      an integrated pressure sensor configured to detect pressure within the battery cell; and
      a negative battery terminal configured to be coupled to the negative electrode.
10. The battery cell of clause 9, wherein the base cell cap plate comprises an opening, and
   wherein the integrated pressure sensor is configured to detect the pressure within the opening.
11. The battery cell of clause 9, wherein the integrated sensor comprises:
   a metal foil configured to expand or to contract in response to the pressure; and
   a resistive sensor configured to detect the expansion or the contraction of the metal foil to detect the pressure.
12. The battery cell of clause 11, wherein the integrated sensor further comprises:
   a protective housing, connected to the metal foil, configured to surround the resistive sensor; and
   a protective cap configured to be attached to the protective housing to cover the resistive sensor.
13. The battery cell of clause 12, wherein the protective housing and the protective housing are implemented as a single piece of metal or plastic.
14. The battery cell of clause 11, wherein the battery cell cap plate further comprises a plastic member situated on a bottom of the base cell cap plate, the plastic member being configured to prevent the positive electrode from contacting the negative electrode.
15. The battery cell of clause 11, wherein the battery cell cap plate further comprises a rupture disk configured to allow the pressure to escape.
16. The battery cell of clause 11, wherein the battery cell is implemented as a prismatic lithium-ion battery cell.
17. An integrated pressure sensor for detecting pressure within a battery cell, the integrated pressure sensor comprising:
   a metal foil configured to expand or to contract in response to the pressure;
   a resistive sensor configured to detect the expansion or the contraction of the metal foil to detect the pressure;
   a protective housing, connected to the metal foil, configured to surround the resistive sensor; and
   a protective cap configured to be attached to the protective housing to cover the resistive sensor.
18. The integrated pressure sensor of clause 17, wherein the protective housing and the protective housing are implemented as a single piece of metal or plastic.
19. The integrated pressure sensor of clause 17, wherein the integrated pressure sensor is situated within a battery cell cap plate of a case of the battery cell.
20. The integrated pressure sensor of clause 17, wherein the battery cell is implemented as a prismatic lithium-ion battery cell.

## Claims

1. A battery cell cap plate for a prismatic lithium-ion battery cell, the battery cell cap plate comprising:
a base cell cap plate;
a positive battery terminal, situated within the base cell cap plate, configured to be coupled to a positive electrode of the prismatic lithium-ion battery cell;
an integrated pressure sensor, situated onto the base cell cap plate, configured to detect pressure within the prismatic lithium-ion battery cell; and
a negative battery terminal situated within the base cell cap plate configured to be coupled to a negative electrode of the prismatic lithium-ion battery cell.

2. The battery cell cap plate of claim 1, wherein the base cell cap plate comprises an opening, and
wherein the integrated pressure sensor is configured to detect the pressure within the opening.

3. The battery cell cap plate of claim 1, wherein the integrated sensor comprises:
a metal foil configured to expand or to contract in response to the pressure; and
a resistive sensor configured to detect the expansion or the contraction of the metal foil to detect the pressure.

4. The battery cell cap plate of claim 3, wherein the integrated sensor further comprises:
a protective housing, connected to the metal foil, configured to surround the resistive sensor; and
a protective cap configured to be attached to the protective housing to cover the resistive sensor.

5. The battery cell cap plate of claim 4, wherein the protective housing and the protective housing are implemented as a single piece of metal or plastic.

6. The battery cell cap plate of claim 1, further comprising a rupture disk, situated within the base cell cap plate, configured to allow the pressure to escape.

7. A battery cell, comprising:
a positive electrode;
a negative electrode;
an electrolyte to configured carry ions between the positive electrode and the negative electrode;
a case having a battery cell cap plate, the battery cell cap plate comprising:
a positive battery terminal configured to be coupled to the positive electrode;
an integrated pressure sensor configured to detect pressure within the battery cell; and
a negative battery terminal configured to be coupled to the negative electrode.

8. The battery cell of claim 7, wherein the base cell cap plate comprises an opening, and
wherein the integrated pressure sensor is configured to detect the pressure within the opening.

9. The battery cell of claim 7, wherein the integrated sensor comprises:
a metal foil configured to expand or to contract in response to the pressure; and
a resistive sensor configured to detect the expansion or the contraction of the metal foil to detect the pressure.

10. The battery cell of claim 9, wherein the integrated sensor further comprises:
a protective housing, connected to the metal foil, configured to surround the resistive sensor; and
a protective cap configured to be attached to the protective housing to cover the resistive sensor.

11. The battery cell of claim 10, wherein the protective housing and the protective housing are implemented as a single piece of metal or plastic.

12. The battery cell of claim 9, wherein the battery cell cap plate further comprises a rupture disk configured to allow the pressure to escape.

13. An integrated pressure sensor for detecting pressure within a battery cell, the integrated pressure sensor comprising:
a metal foil configured to expand or to contract in response to the pressure;
a resistive sensor configured to detect the expansion or the contraction of the metal foil to detect the pressure;
a protective housing, connected to the metal foil, configured to surround the resistive sensor; and
a protective cap configured to be attached to the protective housing to cover the resistive sensor.

14. The integrated pressure sensor of claim 13, wherein the protective housing and the protective housing are implemented as a single piece of metal or plastic.

15. The integrated pressure sensor of claim 13, wherein the integrated pressure sensor is situated within a battery cell cap plate of a case of the battery cell.
